(19) Europäisches Patentamt
European Patent Office
Office européen des brevets

(11) EP 0 330 614 B1

(12) **EUROPEAN PATENT SPECIFICATION**

(45) Date of publication and mention of the grant of the patent:
**04.06.1997 Bulletin 1997/23**

(51) Int Cl.6: **C08G 65/32**, C08F 299/02, G02B 1/04

(21) Application number: **89810122.5**

(22) Date of filing: **16.02.1989**

(54) **Wettable, flexible, oxygen permeable, swellable contact lens containing polyoxyalkylene backbone units, and use thereof**

Benetzbares, biegsames, sauerstoffdurchlässiges, quellbares Polymer mit Polyoxyalkyleneinheiten in der Hauptkette und Kontaktlinse

Polymère avec gonflabilité, perméable à l'oxygène, flexible, mouillable, avec tronc à unités polyoxyalkylène, et lentille de contact

(84) Designated Contracting States:
**AT BE CH DE ES FR GB GR IT LI LU NL SE**

(30) Priority: **26.02.1988 US 160967**

(43) Date of publication of application:
**30.08.1989 Bulletin 1989/35**

(73) Proprietor: **Novartis AG
4058 Basel (CH)**

(72) Inventors:
- **Molock, Frank
Lawrenceville Georgia 30245 (US)**
- **Su, Kai Chiang
Alpharetta Georgia 30201 (US)**

(56) References cited:
**EP-A- 0 063 832** **EP-A- 0 109 355**
**EP-A- 0 117 768** **EP-A- 0 241 010**
**EP-A- 0 263 061** **DE-A- 3 339 068**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 330 614 B1

## Description

This invention relates to ophthalmic devices, such as contact lenses and intraocular implants, and particularly contact lenses of a polymer containing a backbone containing polyoxyalkylene units possessing a unique blend of properties including a) high oxygen permeability, b) good wettability, c) flexibility and d) optical clarity, in the ocular environment of use.

The use of optical contact lenses for the correction of vision defects or for cosmetic purposes is well known. However, existing contact lenses have been found to be unacceptable to many potential contact lens patients for a variety of reasons. For example, early contact lenses were made from polymethyl methacrylate (PMMA). While PMMA lenses have high optical clarity and good durability, they are rigid lenses possessing low oxygen permeability. Consequently, PMMA lenses may result in eye irritation and corneal oxygen deprivation leading to wearer intolerance and limiting the usefulness of such lenses.

In an attempt to avoid these problems, so-called "soft" lenses, capable of swelling in an aqueous environment, were developed. These "soft" or hydrogel lenses, characteristically made from poly (2-hydroxyethyl methacrylate), poly (vinyl alcohol) or poly (vinylpyrrolidone) generally result in less irritation and intolerance than PMMA lenses for most patients. When substantial amounts of water are absorbed into the hydrogel, the oxygen permeability is increased over that of PMMA lenses, and the flexibility of such hydrogel lenses is high, thereby increasing patient comfort. However, the oxygen permeability of such hydrogel lenses is generally still rather low, and the durability is poor. Moreover, due to the high water content of such lenses, they generally have a tendency to collect and trap proteinaceous and other tear fluid materials, resulting in lens clouding over a period of time.

In another attempt to solve problems associated with early lenses, silicone, or siloxane, rubber lenses were developed. They are advantageous in that they possess high oxygen permeability and an aesthetically appealing texture when worn. However, due evidently to the generally low thermal conductivity of silicone rubber, burning sensations in wearers of silicone rubber lenses have been reported. Also, as silicone lenses tend to be lipophilic, such lenses may tighten onto the cornea, trapping debris between the lens and cornea, thereby resulting in corneal abrasions. Also, due to the characteristic lipophilic nature of such lenses, the silicone rubber is mucophilic and non-wettable, attracting ocular debris such as proteins, lipids, mucoids and the like.

It is an object of the present invention to overcome these and other disadvantages of the art by providing substantially siloxane free, wettable, oxygen permeable, swellable polymers and ophthalmic devices, such as contact lenses and corneal implants, of such polymer containing polyoxyalkylene backbone units and optionally having hydrophilic modifier units.

A further object of the invention is to provide a method of correcting visual defects in the form of refractive errors by fitting to the patient's eye in need of the same a corrective contact lens of such polymer.

These and other objects of the invention are apparent from the following detailed description of the invention.

One embodiment of the present invention relates to an optically clear, hydrolytically stable, biologically inert, wettable, flexible, substantially siloxane free, swellable, oxygen permeable ophthalmic device, such as a contact lens, fabricated from a crosslinkable polymer containing segments of the formula I

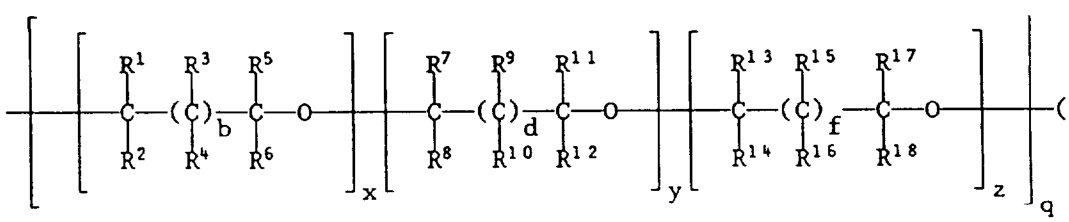
(I)

wherein each b, d and f is independently 0-4; q is a number from 1 to 1000; each x, y and z is independently 0 to a number such that (x+y+z) multiplied by q is 4 to 1000;

each $R^1$-$R^{18}$ is selected from the group consisting of

(i) hydrogen, and

(ii) an aromatic or alicyclic containing radical, each of which is uninterrupted or interrupted by a heteroatom provided no carbon atom in said unit is geminally singly-bound to oxygen atoms;

or any 2 adjacent groups $R^1$-$R^{18}$, together with the atoms to which they are attached can form a 5-8 membered ring;

or $R^1$ - $R^{18}$ independently are additionally selected from, or any of the aforementioned $R^1$-$R^{18}$ groups have a substituent selected from cross-linkable moieties provided that no carbon atoms bearing geminally singly-bound oxygen atoms result;

the terminal oxygen atom within any unit of formula I being replaceable by

$-N(R^{19})-$,

wherein $R^{19}$ is hydrogen, $C_1$-$C_4$alkyl or phenyl; with the proviso that when b, d, and f are all zero, at least one of $R^1$, $R^2$, $R^5$-$R^8$, $R^{11}$-$R^{14}$, $R^{17}$, and $R^{18}$ in at least a portion of the units of formula I is other than hydrogen, as further specified in claim 1.

More preferably each of $R^1$, $R^2$, $R^5$-$R^8$, $R^{11}$-$R^{14}$, $R^{17}$ and $R^{18}$ is independently selected from the group consisting of hydrogen, an aliphatic, aromatic or heterocyclic radical selected from unsubstituted $C_1$-$C_{16}$ alkyl; substituted $C_2$-$C_{16}$ alkyl; unsubstituted $C_2$-$C_{16}$ alkenyl; and substituted $C_2$-$C_{16}$ alkenyl; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_8$ alkoxy, $C_2$-$C_6$ alkanoyloxy, aryloxy of up to 10 carbon atoms, $C_3$-$C_6$ alkenoyloxy, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atom already bound to another oxygen atom; $R^1$, $R^2$, $R^5$-$R^8$, $R^{11}$-$R^{14}$, $R^{17}$ and $R^{18}$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said alkyl set forth above;
$R^3$, $R^4$, $R^9$, $R^{10}$, $R^{15}$ and $R^{16}$ are selected from the same group set forth above for $R^1$; and $R^3$, $R^4$, $R^9$, $R^{10}$, $R^{15}$ and $R^{16}$ are further independently selected from ($C_1$-$C_{15}$ alkoxy)carbonyl, $C_2$-$C_{16}$ alkanoyloxy, ($C_2$-$C_{16}$ alkenyloxy)carbonyl, and $C_3$-$C_{16}$ alkenoyloxy, each of which may be further substituted by fluoro, aryl of up to 10 carbon atoms, or $C_1$-$C_{16}$ alkoxy, and $R^3$, $R^4$, $R^9$, $R^{10}$, $R^{15}$ and $R^{16}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyloxy, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyloxy, oxacycloalkyl (of up to 7 carbon atoms)-carbonyloxy, oxacycloalkenyloxy (of up to 7 carbon atoms)-carbonyloxy, and aryloxy (of up to 10 carbon atoms)-carbonyloxy, each of which may be further substituted by fluoro, $C_1$-$C_6$ alkyl or $C_1$-$C_6$ alkoxy, provided that any substituent having an oxygen atom or carbonyl group thereof as its link to the rest of the molecule may not be a substituent on the same carbon atom which is bonded to another oxygen atom, or 2 adjacent groups selected from $R^1$ to $R^{18}$ together with the atoms to which they are attached may form a 5 - 8 membered cycloalkyl, 5 - 8 membered oxacycloalkyl or bicycloalkyl ring. When each of b, d, and f is zero, at least one of $R^1$, $R^2$, $R^5$ -$R^8$, $R^{11}$-$R^{14}$, $R^{17}$ and $R^{18}$ in at least a portion of the segments having formula I is other than hydrogen and such group $R^1$, $R^2$, $R^5$-$R^8$, $R^{11}$-$R^{14}$, $R^{17}$ and $R^{18}$ individually or in the aggregate is sufficiently hydrophobic such that the resulting polymer is, in the absence of a hydrophilic modifier, substantially non-swellable in water, or, in the alternative, these R groups need not be hydrophobic at all, in which case, the polymer even without the hydrophilic modifier can frequently meet the limitations of the present invention. In either case, the polymer is sufficiently hydrophilic that it exhibits a receding contact angle with distilled water at 20°C of less than 50°, preferably less than 40°, more preferably less than 25°, even more preferably less than 15°, most preferably less than 10°.

The instant polymers, when in aqueous substantially isotonic saline, have a fully swollen water content of at least 10 % preferably 15 - 90 %, more preferably 20 - 85 %, still more preferably 25 - 75 %, yet more preferably 35 - 55 % water.

In the foregoing, unless specifically designated otherwise, all alkyl groups whether mentioned alone or as part of another group are, and preferably even those designated otherwise are $C_1$-$C_4$ alkyl, such as methyl, ethyl, propyl and butyl, especially t-butyl, with the exception that adjacent groups on aryl rings cannot each be t-butyl. These alkyl groups may be straight chain or branched chain. When the alkyl is a substituent on a phenyl ring, it is preferably attached at the para position. Unless specifically stated otherwise, alkenyl groups, whether alone or as part of another group are, and preferably even those designated otherwise are $C_2$-$C_4$ alkenyl, such as ethenyl, propenyl and butenyl. Preferred aryl groups (whether alone or as part of another group) are phenyl and naphthyl, more preferably phenyl. Preferably the aryl groups are still further substituted by $C_1$-$C_4$ alkyl, more preferably t-butyl, most preferably in the para position.

Preferably b, d and f are independently 0 - 3, most preferably 1 to 2. A further preferred embodiment is that the group identified by formula I be at least 20 % halogen free, preferably 25 %, more preferably 30 % still more preferably 40 %, even more preferably substantially halogen free and most preferably, totally halogen free. Wherever cyclo groups are indicated, whether carbocyclic or heterocyclic they preferably have 5 - 6 ring members and the heterocyclics preferably have only carbon atoms and one oxygen atom as ring members.

In formula I, when b is greater than one, each of the multiple $R^3$ and $R^4$ groups may be the same or different; however preferably all of the $R^3$ groups are the same and all of the $R^4$ groups are the same. The same is true with respect to d, $R^9$ and $R^{10}$; and f, $R^{15}$, and $R^{16}$.

Preferably, each of b, d and f is independently an integer of 0 to 2, and most preferably zero or one.

In one aspect of the invention, each of $R^1$-$R^5$, $R^7$-$R^{11}$ and $R^{13}$-$R^{17}$ is hydrogen, and, if b, d, and f are each 0, then at least one of $R^6$, $R^{12}$ and $R^{18}$ in at least a portion of the segments of formula I is other than hydrogen. Preferably, at least one of $R^6$, $R^{12}$ and $R^{18}$ in most segments is other than hydrogen. More preferably, the majority (and most preferably all) of the segments of formula I have at least one of $R^6$, $R^{12}$ and $R^{18}$ other than hydrogen.

Preferably the substituents $R^6$, $R^{12}$ and $R^{18}$ are alkyl of up to 16 carbon atoms; alkyl of up to 16 carbon atoms substituted by alkoxy of up to 8 carbon atoms, or fluoro; phenyl which is unsubstituted or substituted by fluoro, alkoxy of up to 6 carbon atoms or alkyl of up to 6 carbon atoms; benzyl wherein the phenyl ring thereof is unsubstituted or substituted by fluoro, alkoxy of up to 6 carbon atoms or alkyl of up to 6 carbon atoms; cyclohexyl; or oxacycloalkyl of 4 or 5 ring carbon atoms.

A highly advantageous subembodiment relates to wettable, swellable ophthalmic devices, preferably contact lenses, fabricated from a polymer containing segments of the formula II

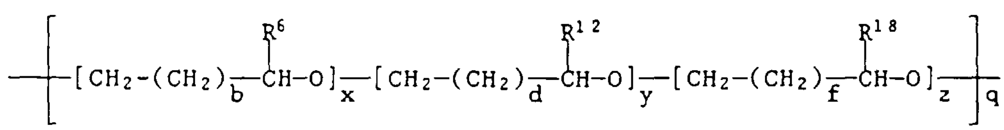

wherein b, d, f, q, x, y, z, $R^6$, $R^{12}$ and $R^{18}$ are as defined above with at least one of $R^6$, $R^{12}$ and $R^{18}$ (when present) being other than hydrogen. There are two very highly advantageous embodiments having formula II which are represented by either formula III

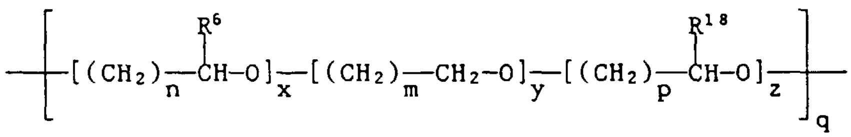

(III)

wherein n is b + 1; m is d + 1, p is f + 1; n, m and p each independently being preferably 1 - 3, more preferably 1 or 2, most preferably 1; and at least one of $R^6$ and $R^{18}$ but preferably both, is an aliphatic, aromatic, or heterocyclic radical, preferably alkyl of up to 6 carbon atoms, alkyl of up to 6 carbon atoms substituted by alkoxy of up to 6 carbon atoms or fluoro; phenyl which is unsubstituted or substituted by fluoro, alkoxy of up to 6 carbon atoms or alkyl of up to 6 carbon atoms; benzyl wherein the phenyl ring thereof is unsubstituted or substituted by fluoro, alkoxy of up to 6 carbon atoms or alkyl of up to 6 carbon atoms; cyclohexyl or oxacycloalkyl of 4 or 5 ring carbon atoms; or which are represented by formula IV

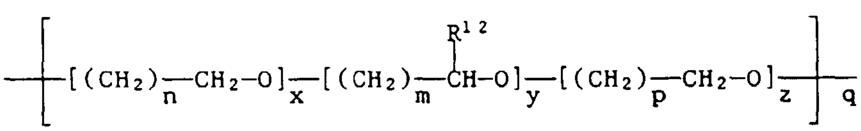

(IV)

wherein n, m, p, x, y, z and q are as defined above for formula III and $R^{12}$ is preferably selected from the same group as $R^6$ in formula III.

In the foregoing it is to be understood that the units of x, y and z may be positioned randomly, in block segments, or alternately.

Another preferred embodiment corresponds to formulae II, III and IV wherein z is zero.

Desirably, the polymer segments of formula I or II in the completed polymer are substantially devoid of free hydroxyl groups (other than as part of a hydrophilic modifier) in the interior of the polymer.

Free hydroxy groups on the outer surfaces of the formed polymer are acceptable as they increase wettability without unduly reducing oxygen permeability. However, it is still preferable to have as few free hydroxy groups in the finished polymer as practical if a contact lens having high oxygen permeability is to be prepared. A suitable means of tying up the free hydroxy groups present would be to interact them with a color group.

Typical color groups useful in these embodiments include, but are not limited to the hydroxy-reactive dyes known

in the art under the tradename Remazol, manufactured by American Hoechst. Examples of the Remazol dyes which are especially suitable are:

| Dye | Color Index Code |
|---|---|
| Remazol Brill Blue RW | Reactive Blue 19 |
| Remazol Yellow GR | Reactive Yellow 15 |
| Remazol Black B | Reactive Black 5 |
| Remazol Golden Orange 3GA | Reactive Orange 78 |
| Remazol Turquoise P | Reactive Blue 21 |

all of which have at least one group of the formula

$$-SO_2-CH_2CH_2O-SO_3^{\ominus}$$

which reacts with the polymer or monomer hydroxy group to yield a dye-$SO_2$-$CH_2$-$CH_2$-O-polymer or

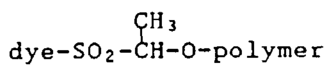

group, preferably the former. In such a manner, both excess free hydroxy groups are disposed of and colored contact lenses can be realized simultaneously. Another means of disposing of these excessive hydroxy groups is to utilize their presence to form various degrees and types of crosslinking.

In a further embodiment of the invention, the ophthalmic device, preferably a contact lens, is fabricated from a polymer consisting essentially of polymerized units of a reactive monomer of the formula V

$$L'-D-[A-L-D]_{w}-A-L'' \qquad (V)$$

wherein each A is independently a divalent moiety of formula I, provided that not all A groups in any one polymer can be homopolymers of polyethylene glycol, preferably all A groups cannot be homopolymers of polyethylene glycol or polypropylene glycol, and provided that the terminal oxygen atom within any one or more A groups may be replaced by -N($R^{19}$)-, each L is independently selected from -BRB'-; w is 0 - 8, preferably 0 - 4, most preferably 0, 1 or 2; each D is independently oxygen or -N($R^{19}$)-; each $R^{19}$ is independently selected from hydrogen, $C_1$-$C_4$ alkyl and phenyl, and is preferably hydrogen; each B and B' being selected from

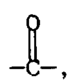, 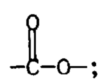; and 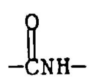

with the recited carbonyl group being bound directly to A or D; each R is a divalent linking group preferably selected from

a) a divalent aliphatic group preferably alkyl, alkenyl or alkynyl, of up to 25 carbon atoms which may be interrupted by an interrupting unit selected from oxy, carbonyloxy, amino, aminocarbonyl, oxycarbonyl, ureido, oxycarbonylamino, and carbonylamino;
b) a divalent 5 - 7 membered cycloaliphatic group and a 5 - 7 membered cycloaliphatic-$C_5$-$C_{25}$ aliphatic group;
c) a divalent arylene group having 6 - 25, preferably 7 - 15 carbon atoms; and
d) a divalent aralkyl or alkaryl group having 7 to 25, preferably 8 - 16 carbon atoms;

wherein groups b) and d) can be optionally interrupted by the same groups as in group a) and wherein the aryl rings in groups c) and d) may be further substituted with one or more substituents selected from halogen, preferably fluorine or chlorine, $C_1$-$C_4$ alkyl, preferably methyl, and $C_1$-$C_{12}$ perhalo alkyl, especially $C_1$-$C_{12}$ perfluoro alkyl;

L' is selected from hydrogen, P'-B-R-B'-, and P'-R-B'-, wherein B, R, and B' are as defined above with the carbonyl group of B being bound to P', and P' is hydrogen, amino, hydroxy, or a moiety containing a crosslinkable group which may be crosslinked when coreacted with a suitable crosslinking agent or when irradiated by actinic radiation; and L" is selected from hydrogen, L"' as defined hereinafter, -B-R-B'-P', and -B-R-P', wherein B, R, B' and P' are as defined above except that the carbonyl of B' instead of B is bound to P'; and L'" is a terminal monovalent aliphatic, aromatic or cycloaliphatic group of up to 14 carbon atoms.

Compounds of formula V are modified by reacting them with a coreactive hydrophilic modifier. The hydrophilic modifier can be introduced by being coreactive with a functional group present in one or more of $R^1$-$R^{19}$ and/or with a functional group within L' and/or L". When the hydrophilic modifier is monofunctionally reactive (other than a vinylic unsaturation), it merely modifies the polymer properties and terminates the chain at that point. When the hydrophilic modifier is di- or polyreactive, i.e. contains more than one coreactive functional group or at least one coreactive vinylic group, the modifier can also act as a copolymerizable monomer and/or crosslinking agent. However, the modifier need not be the only crosslinking agent, nor need it be the only copolymerizable monomer present. When other such agents are employed any of the conventional crosslinking agents and coreactive monomers may be used in minor amounts.

In any event, the polymer resulting from the polymerization of the monomer of formula V should not be crosslinked in excess of 25 %, preferably not in excess of 20 %, more preferably not in excess of 15 %, still more preferably not in excess of 10 % even still more preferably not in excess of 5 %, and most preferably in the range of 2 - 3 %.

The purpose of the hydrophilic modifier is to maintain the water content of the resulting polymer to at least 10 % when swollen in its normal environment of use. For those polymers which absent the hydrophilic modifier already meet this limit, its purpose is to increase the water content of the polymer material over that when the hydrophilic modifier is absent. However, if the polymer, without the hydrophilic modifier, is sufficiently hydrophilic, i.e. the water content is at least 10 %, it need not be present, but preferably is. Whether the hydrophilic modifier is needed or not, and the amount which is needed, is dependent upon the polymer water content and other hydrophilic properties desired. Preferably, the hydrophilic modifier is present, in accordance with the above in an amount of from zero to about 25 % by weight, preferably about 1 % to about 20 %, more preferably about 5 % to about 17 %, still more preferably about 10 % to about 15 % of the resultant polymer.

In addition to the hydrophilic modifier, other comonomers which may be present in the polymer are monomers coreactive with the monomer of formula V exclusive of monomers which are hydrophilic modifiers. Such additional monomers may be present in a minor amount of up to about 20 % by weight of the resultant polymer. When such comonomers are excessively hydrophobic, additional hydrophilic modifier may be incorporated so as to achieve the appropriate water content.

The hydrophilic modifier is a monomer which is coreactive with a monomer of formula V and is typically selected from

aa) polyethylene glycols of the formula

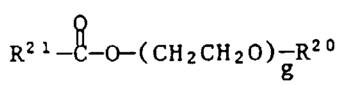

(A)

or ab) pyrrolidones of the formula

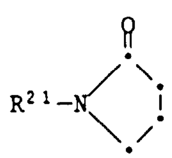

(B)

wherein $R^{20}$ is hydrogen or $C_1$-$C_7$ alkyl, preferably $C_1$-$C_4$ alkyl, g is an integer of from 1 - 25, and $R^{21}$ is an ethylenically unsaturated group, preferably vinyl, 1-methylvinyl, 2-methylvinyl, or allyl;

or ac) a compound of the formula

$$(R^{22}\text{-div})_{nz}Hy \quad (C)$$

wherein $R^{22}$ is a polymerizable or reactive moiety selected from i) $R^{21}$, ii)epoxy groups, especially glycidyl, iii) anhydrides, iv) isocyanates or isothiocyanates, v) amines, vi) acids, vii) esters, viii) amides, ix) ethers, x) acid halides, and xi) hydroxy;

div is selected from

ba) a divalent aliphatic group of up to 25 carbon atoms, preferably alkyl, alkenyl or alkynyl, which is uninterrupted, interrupted, or terminated, or interrupted and terminated by oxy, carbonyloxy, amino, aminocarbonyl, oxycarbonyl, ureido, oxycarbonylamino, or carbonylamino;
bb) a divalent 5 - 7 membered cycloaliphatic and 5 - 7 membered cyclo-aliphatic-$C_1$-$C_{20}$-aliphatic group which is uninterrupted, interrupted, terminated, or interrupted and terminated as in group ba) above except that said interruptions cannot occur within said cycloaliphatic portions;
bc) a divalent arylene group having 6 - 25 carbon atoms which is unsubstituted or substituted by at least one substituent selected from halogen, $C_1$-$C_4$ alkyl, and $C_1$-$C_{12}$ perhaloalkyl;
bd) a divalent aralkyl or alkaryl having 7 - 25 carbon atoms which is uninterrupted or interrupted in the alkyl portion, or terminated, or interrupted in the alkyl portion and terminated with an interrupting or terminating group as mentioned in ba) above, and each of said uninterrupted, interrupted, and terminated aralkyl and alkaryl groups is further unsubstituted or substituted by a substituent selected from halogen, $C_1$-$C_4$ alkyl, and $C_1$-$C_{12}$ perhaloalkyl;
be)

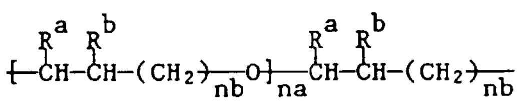

(D)

wherein na is an integer of 8-100; and
bea) $R^a$ is hydrogen, $R^b$ is methyl, and nb is zero; or
beb) $R^a$ is methyl, $R^b$ is hydrogen, and nb is zero; or
bec) $R^a$ and $R^b$ are hydrogen and nb is one;

nz is an integer of 1 up to the valence of Hy and where nz is less than the valence of Hy, the remaining valences of Hy are taken up with hydrogens;
and Hy is a hydrophilic group selected from

ca) morpholino; cyclic amide radicals of 5 - 7 ring members; saturated and unsaturated cyclic N,N-diamide radicals of 5 - 6 ring members; groups of the formula

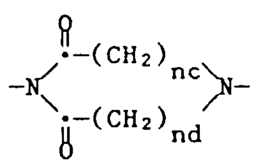

(E)

having 6 - 7 ring members wherein nc and nd are selected from 0 - 2; and cyclic amines of 5 - 6 ring members; each unsubstituted or substituted by hydroxy-$C_1$-$C_5$ alkyl, carboxy, or lower alkyl;
cb) tetrahydrofurfuryl;
cc) mono-, di-, and polysaccharide radicals, whether straight chain or cyclic, their corresponding sugar alcohol radicals, pentaerythritol radicals, and polyvinyl alcohol radicals; and
cd) polyhydroxy $C_2$-$C_7$ alkyl radicals;
and said reactive group $R^{22}$ is coreactive with one or more sites in said formula V.

Preferably the hydrophilic modifier has $R^{22}$ selected from

ia)

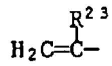

and the terminus of div to which it is bound is -C(O)$R^{24}$, the carbonyl being bound to $R^{22}$, where $R^{23}$ is hydrogen or methyl and $R^{24}$ is -O-, or -$NR^{25}$ with $R^{25}$ being hydrogen or lower alkyl;
ib) $H_2C$=CH- and the terminus of div to which it is bound is

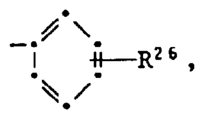

the left hand bond being bound to $R^{22}$, wherein $R^{26}$ is -O-, -$NR^{25}$-, -C(O)-,

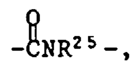

or -C(O)O-; and
ic)

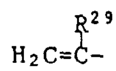

and the terminus of div to which it is bound is -C(O)$R^{28}$-, the carbonyl of which is bound to $R^{22}$ wherein $R^{28}$ is lower alkylene or -[$CH_2$CH(loweralkyl)-O]$_{1-5}$- and $R^{29}$ is hydrogen, lower alkyl, or cyano;

and has Hy selected from

ce) morpholino which is unsubstituted or mono- up to tetra substituted by lower alkyl, preferably methyl or ethyl;
cf)

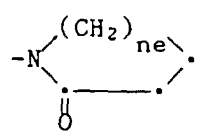

wherein ne is one, two, or three, preferably 1, each of which is unsubstituted or substituted, preferably mono- or disubstituted, by lower alkyl, preferably methyl or ethyl;
cg)

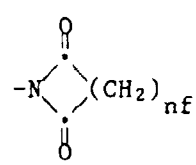

where nf is 2 or 3, preferably 2, each of which is unsubstituted or substituted by lower alkyl, preferably methyl or ethyl;
ch) a divalent group of the formula

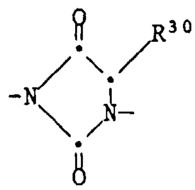 , 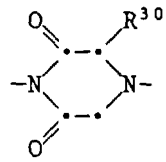 , 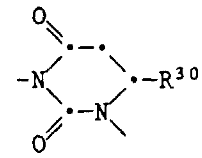

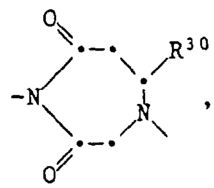 , or 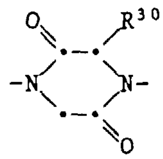

wherein $R^{30}$ is hydrogen or carboxy;

ci)

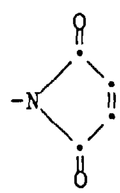 ,

cj)

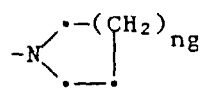

where ng is one or two, each of which is unsubstituted or substituted by lower alkyl, preferably methyl or ethyl;

ck)

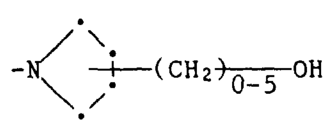 ;

cl) a polyol selected from polyvinyl alcohol radicals of the formula,

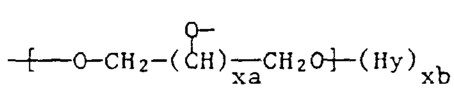

wherein xa is 2 - 10, preferably 3 - 4, and xb is an integer from at least 0.5xa up to xa + 1 inclusive, the cyclic saccharide analogs thereof, the di-tetra saccharides thereof, preferably having saccharide-saccharide links between the 1 and 4 carbon positions thereof, preferably β-linkages, $C(CH_2O)_4Hy_{xc}$ wherein

xc is 0- 3, and polyhydroxy lower alkylene glycol radicals wherein up to 50 %, preferably up to 25 %, more preferably up to 10 %, of the hydroxy groups are missing their alcoholic hydrogens.

Most preferably the hydrophilic modifier of formula (C) is selected from

aca)

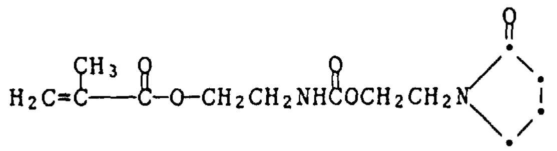

,

acb)

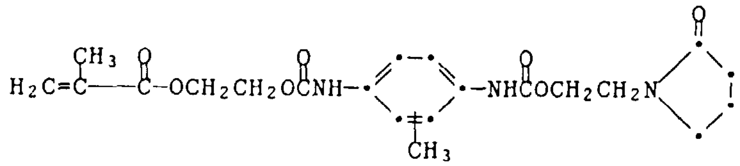

,

acc)

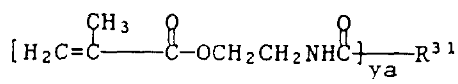

wherein $R^{31}$ is

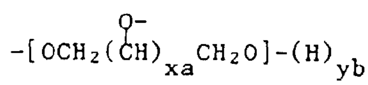

in which xa is 1 - 6 preferably 3 - 4 and yb is 0 up to (xa + 1), preferably (xa - 1) to (xa + 1), more preferably xa to (xa + 1), and ya is 1 up to (xa + 2 - yb),

acd)

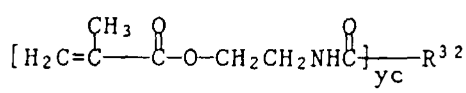

wherein $R^{32}$ is $C(CH_2O)_4(H)_{4-yc}$ wherein yc is 1 - 4, preferably 1 - 2;

ace) polyvinyl alcohol having at least one and up to 50 % preferably 25 %, more preferably 10 %, inclusive, of the alcoholic hydrogens thereof absent;

acf)

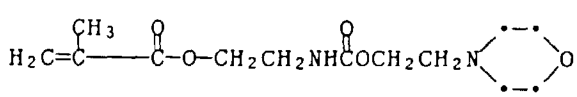

.

Preferably, when P' is a vinyl containing group or one or more of the aforementioned R groups contain an ethylenically unsaturated group, for example preferably

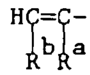

with one of $R^a$ and $R^b$ being methyl or hydrogen and the other being hydrogen, then the monomer of formula V can be crosslinked in the presence of a vinylic group containing hydrophilic modifier and/or vinylic group containing crosslinking agents.

When P' does not have a vinylic group, but takes part in crosslinking, P' contains e.g. an active hydrogen. In such cases, P' preferably terminates in an OH, $NHR^c$ ($R^c$ being hydrogen or lower alkyl), a leaving group bound directly to the B or B' carbonyl, a conventional acyl leaving group when not so bound, SCN- or OCN-. Crosslinking is then typically carried out by condensation or addition with a di- or polyfunctional coreactive monomer which may or may not be a hydrophilic modifier. In such cases hydrophilicity is increased by utilizing coreactive monomers of formulae A, B or C except that $R^{22}$ is trifunctional or polyfunctional with those functional groups coreactive with P'.

For example, when P' is OH, then the coreactive monomer functional group can be $-NHR^c$, -COOH, OCN-, SCN-, etc.; when P' is $NHR^c$, the reactive comonomer functional group can be a conventional acyl, or acyl bound to a conventional leaving group; and when P' has OCN- or SCN-, then the reactive comonomer functional group can be OH. Similarly, the other coreactive functional groups mentioned in terms of either P' or the coreactive monomer can be interchanged (those mentioned as part of P' being on the coreactive monomer and those mentioned as part of the coreactive monomer being part of P').

Suitable vinylic comonomers and coreactive monomers for condensation are set forth below. However, the list is not exhaustive and those of ordinary skill will appreciate the modifications, additions, and alternatives which may also be employed.

Suitable vinyl monomers include:

acrylates and methacrylates of the general formula

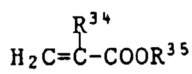

where $R^{34}$ is hydrogen or methyl and $R^{35}$ is a straight chain or branched aliphatic, cycloaliphatic or aromatic group having up to 20 carbon atoms which is unsubstituted or substituted by one or more alkoxy, alkanoyloxy or alkyl of up to 12 carbon atoms, or by halo, especially chloro or preferably fluoro, or $C_3$-$C_5$ polyalkyleneoxy of 2 to about 100 units; acrylamides and methacrylamides of the general formula

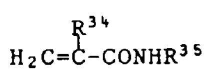

where $R^{34}$ and $R^{35}$ are as defined above;
vinyl ethers of the formula

$$H_2C=CH-O-R^{35}$$

where $R^{35}$ is as defined above;
vinyl esters of the formula

$$H_2C=CH-OOC-R^{35}$$

where $R^{35}$ is as defined above;
maleates and fumarates of the formula

$$R^{35}OOC-HC=CH-COOR^{35}$$

where $R^{35}$ is as defined above;
and vinylic substituted hydrocarbons of the formula

$$R^{34}CH{=}CHR^{35}$$

where $R^{34}$ and $R^{35}$ are as defined above.

Useful monomers include, for example:
methyl-, ethyl-, propyl-, isopropyl-, butyl-, ethoxyethyl-, methoxyethyl-, ethoxypropyl-, phenyl-, benzyl-, cyclohexyl-, hexafluoroisopropyl-, or n-octyl-acrylates and -methacrylates as well as the corresponding acrylamides and methacrylamides;
dimethylfumarate, dimethylmaleate, diethylfumarate, methyl vinyl ether, ethoxyethyl vinyl ether, vinyl acetate, vinyl propionate, vinyl benzoate, acrylonitrile, styrene, alphamethyl styrene, 1-hexene, vinyl chloride, vinyl methyl ketone, vinyl stearate, 2-hexene and 2-ethylhexyl methacrylate.

Most preferably, the instant polymers are free from copolymer units of such conventional vinyl monomers which are not hydrophilic modifiers.

When either or both L' and L" are hydrogen, or terminate in P' with P' being hydrogen, at least one additional crosslinkable moiety must be present as one of, or as substituent on one of, the groups $R^1$-$R^{18}$. Such crosslinkable groups may also be present as a substituent on or in place of one or more of $R^1$-$R^{18}$ even when both of L' and L" have crosslinkable groups therein.

In a preferred embodiment, A is the divalent moiety according to formula II, most preferably according to formula III or formula IV.

Especially preferred are polymers of the monomer according to formula V in which L' and/or L" is of formula VI

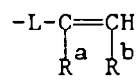

(VI)

wherein $R^a$ and $R^b$ are each independently hydrogen or methyl, but not simultaneously methyl; and L is -BRB', -BR- or -RB'-.

A valuable sub-embodiment of the invention relates to polymers or ophthalmic devices, preferably contact lenses, of such polymers consisting essentially of polymerized units of the formula VII

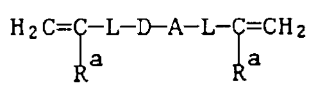

(VII)

wherein $R^a$, D, and A are as defined above, each $R^a$ being independent of the other; and L is -B-R-B'-, -B-R- or -R-B'-. Particularly preferred are polymers of the monomers of formula VI and VII wherein L is -BRB', R is a divalent arylene group of 6 to 14 carbon atoms, or is a divalent $C_2$-$C_6$ alkylene-oxycarbonylamino-$C_6$-$C_{10}$-arylene group; D is oxygen, and B and B' are each -NHCO- wherein the nitrogens thereof are directly bonded to R. Even particularly preferred are polymers of the monomers of formula VI and VII wherein L is -BR- or -RB'-, respectively, R is a divalent arylene of 6 to 14 carbon atoms, D is oxygen, and B and B' are each -NHCO- wherein the nitrogens thereof are directly bonded to R.

A very highly preferred embodiment are those polymers from monomers of formula V and VII wherein A is of the formula

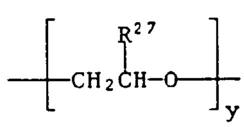

where $R^{27}$ is alkyl of 1 to 4 carbon atoms, most preferably methyl, and y is from about 6 to about 200, preferably from about 25 to about 100, and most preferably from about 50 to about 75.

Also highly preferred are those polymers of monomers of formula V and VII wherein A is of the formula VIII

$$-\left[-CH_2CH_2O-\right]_x-\left[-CH_2\overset{R^{27}}{\overset{|}{C}}HO-\right]_y-\left[-CH_2CH_2O-\right]_z- \qquad (VIII)$$

wherein x is from about 2 to about 20, y is from about 8 to about 100, and z from about 4 to about 80. Another valuable embodiment requires the value of y to be at least about twice that of x and $R^{27}$ to be alkyl of 1 to 4 carbon atoms, preferably methyl.

The above reactive vinylic monomers are characteristically polymerized under conventional polymerization conditions. In those vinylic monomers containing but one reactive, preferably vinyl, group, a minor amount e.g. from about 0.01 to about 5 weight percent, based on the monomer of formula V, of a conventional crosslinking agent, may be employed. Suitable crosslinking agents include diolefinic monomers such as:

Allyl acrylate and methacrylate, alkylene glycol and polyalkylene glycol di-acrylates and -methacrylates, such as ethyleneglycol dimethacrylate, diethylene glycol dimethacrylate, and propylene glycol dimethacrylate; trimethylol propane triacrylate; pentaerythritol tetraacrylate, divinylbenzene; divinyl ether; divinyl sulfone; bisphenol A diacrylate or -methacrylate; methylene bisacrylamide; diallyl phthalate; triallyl melamine and hexamethylene di-acrylate and -methacrylate. Also, such minor amounts of a crosslinking agent may be employed, if desired, in the polymerization of the di-vinyl monomer of formula V and VII.

When the monomers of formula V have free hydroxy, isocyanato, carboxylic or amine groups, suitable crosslinking agents contain di- or polyfunctional co-reactive groups to form addition or condensation reactions linking 2 or more chains.

If desired, the monomer reaction mixture may contain a catalytic amount of a conventional catalyst, preferably a free radical catalyst. Of particular interest are conventional peroxide and azo catalysts, such as hydrogen peroxide, benzoyl peroxide, tert-butyl peroctoate, benzoyl peroxide or azobis(isobutyronitrile).

The polymerization can generally be carried out at temperatures between about 20° and about 150°C, for a period between about 1 and about 24 hours. It is understood that the time and temperature in such a reaction are inversely related. Thus, temperatures employed in the upper end of the temperature range will generally provide reaction times near the lower end of the time range. Preferably, the polymerization is conducted in the presence of actinic radiation, such as UV light.

Depending upon the nature of the polymer mixture, it may be desirable for the polymers obtained from such polymerizations to be post cured, e.g. at a somewhat elevated temperature such as between about 60°C and about 150°C.

For the preparation of contact lenses, the polymer mixture may be cast directly in the shape of the lens, or the polymerization may be carried out in a mold having a shape convenient for further processing, such as in the shape of small cyclinders or "buttons", which can then be machined.

In yet a further subembodiment of the invention, the ophthalmic device, preferably a contact lens, is fabricated from a polymer consisting essentially of an addition product of formula IX

$$E-Y^1-D-(A-L-D)_{\overline{w}}-A-Y^1-E \qquad (IX)$$

and

a1) a compound of formula X,

$$(E^1)_t\text{-}G$$

wherein A, L, D and w are as defined above;
t is an integer of 2 to 4;
G is an aliphatic, aromatic, araliphatic, carbocyclic or heterocyclic residue having a valency corresponding to the value of t and containing up to about 24 carbon atoms, or, where t is 2, may also represent a divalent group of the formula

$$-Y^1-D-(A-L-D)_{w}-A-Y^1- \quad ;$$

$Y^1$ is a divalent aliphatic group of up to 14 carbon atoms which may be interrupted by oxy, carbonyloxy, amino, aminocarbonyl, oxycarbonyl, ureido, oxycarbonylamino or carbonyl; a divalent aliphatic hydrocarbylcarbonyl or -aminocarbonyl group of up to 14 carbon atoms and wherein the carbonyl group thereof is covalently bonded to the adjacent oxygen or -N($R^{19}$)- moiety; a divalent 5 to 7-membered cycloaliphatic group of from 5 to 14 carbon atoms; a divalent arylene group of 6 to 14 carbon atoms; a divalent aralkyl or alkaryl group of 7 to 14 carbon atoms; a divalent 5 to 7-membered cycloaliphatic-carbonyl or -aminocarbonyl group of from 6 to 15 carbon atoms, wherein the carbonyl group thereof is covalently bonded to the adjacent oxygen or -N($R^{19}$)- moiety; or a divalent arylene-, aralkyl- or alkaryl-carbonyl or -aminocarbonyl group wherein the arylene group is of 6 to 14 carbon atoms, the aralkyl or alkaryl group is of 7 to 14 carbon atoms, and the carbonyl group is covalently bonded to the adjacent oxygen or -N($R^{19}$)- moiety; or $Y^1$ is a direct bond where E is hydrogen;

E is hydrogen, hydroxy or amino when $E^1$ is isocyanato or isothiocyanato; and E is isocyanato or isothiocyanato when $E^1$ is hydroxy or amino; or

a2) a hydrophilic modifier of formula C having a residue $R^{22}$ which is selected from hydrogen, hydroxy, amino, isocyanato and isothiocyanato and which is coreactive with E, or

a3) a mixture of a compound of formula X and formula C as described hereinbefore under a2).

Advantageously, in order to insure adequate crosslinking, in one subembodiment there is employed at least a minor amount of those compounds wherein t is 3, for example at about 0.2 % by weight based upon the amount of compound of formula VI employed. Generally, a stoichiometrically equivalent amount of the compounds of formula IX and X is combined; however a slight excess of di- or polyisocyanate or -isothiocyanate may be employed to insure sufficient crosslinking to maintain dimensional stability in the product. As a further alternative, additional conventional crosslinking agents may be employed to insure sufficient crosslinking such that the product maintains dimensional stability. Thus, in addition to the compounds of formula IX and X and C, there may also be added to the reaction mixture a minor amount, e.g. up to about 5 weight percent, of a conventional di-isocyanate or tri-isocyanate such as toluene di-isocyanate, isophorone di-isocyanate, 4,4'-methylenebis(phenyl isocyanate), methylenebis(cyclohexyl isocyanate), melamine tri-isocyanate, and the like. Alternatively, where a stoichiometric excess of isocyanate is employed in the reaction of C, IX and X, a minor amount, e.g. up to about 5 weight percent, of a di- or polyfunctional amine or hydroxylated crosslinking agent may be employed. Suitably such crosslinking agents include, for example ethylene glycol, glycerin, diethylene glycol, ethylene diamine, ethanolamine, triethanolamine, diethanolamine and the like.

The addition reaction between the compounds of formula C, IX and formula X and any additional crosslinker can be conducted under conditions known, per se. Thus, the compounds may be simply admixed, in the presence of an inert diluent if necessary or desired, at a reaction temperature between about 0°C and about 100°C, preferably between about 20°C and 80°C, optionally in the presence of a condensation catalyst, such as triethyl amine or di-n-butyltin diacetate.

In the preparation of ophthalmic devices, such as contact lenses, the reaction mixture may be cast directly in the shape of the lens, or the polymerization may be carried out in a mold having a shape convenient for further processing, such as the shape of a small cylinder or "button", which can then be machined.

The compounds of the formula C, V, VII, IX and X are either known or can be prepared by methods which are known, per se.

The compounds of formula C are more fully described in a concurrently filed U.S. patent application entitled HYDROPHILIC MODIFIER MONOMERS, invented by Frank Molock, Richard Robertson and Kai Su.

For example, the vinylic monomers of formula V can be prepared by reacting either

(a) a mono-ol of the formula XI

$$HO-(A-L-D)_{w}-A-L''' \qquad (XI)$$

where L''' is a terminal monovalent aliphatic, aromatic or cycloaliphatic group of up to 14 carbon atoms, or

(b) a diol of the formula XII

$$HO-(A-L-D)_{w}-A-H \qquad (XII)$$

wherein A, L, D and w are as defined above, with a stoichiometric amount of a vinylic compound of the formula XIII

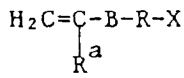

(XIII)

wherein X is an isocyanato group; an activated carboxy group, such as an anhydride, an acid halide, or a carboxy ester; or is a leaving group, such as a halide, sulfato, or the like; at temperatures between about 0°C and about 100°C, in the presence or absence of a conventional additional catalyst, and in the optional presence of an inert diluent, and recovering the product of formula V. Where X is a leaving group, such as a halide, the product of formula XII may be in the form of its alkoxide, such as alkali metal alkoxide, salt.

Alternatively, one may prepare products of formula V wherein B and B' are -NHCO- and D is -O- by reacting a diisocyanate, such as an aliphatic, aromatic, cycloaliphatic, or araliphatic diisocyanate with a mono-ol or diol according to formula XI or XII, respectively, and react the corresponding isocyanato terminated product with a hydroxy containing acrylate or methacrylate, such as hydroxyethyl-acrylate or -methacrylate, or an allyl amine or methallyl amine or allyl or methallyl alcohol to form the corresponding product of formula V at a temperature between about 0°C and 100°C, in the presence or absence of an inert diluent, and optionally in the presence of an addition catalyst, such as a tertiary amine, e.g. triethylamine or an organo-tin compound and recovering the product of formula V.

Still further, compounds of formula XII can be reacted with compounds of the formula XIV

$$X-R-X \qquad (XIV)$$

where R and X are as defined above, to form a compound of the formula XV

$$X-R-B-D-(A-L-D)_{w}-A-B-R-X \qquad (XV).$$

Compounds of formula XV are then reacted with an X coreactive moiety which also contains a vinyl group, for example hydroxy ethyl methacrylate to yield a compound of formula V.

The compounds of formula XI and formula XII are known or can easily be prepared by methods known per se.

For example, the compounds of formula XII can be prepared by reacting a diol of the formula HO-A-H with a difunctional reactive group containing compound having the group L wherein the reactive groups are isocyanate, activated carboxy, such as an anhydride, an acid halide or a carboxy ester, or a leaving group, such as halide, sulfato or the like. Where the molar ratio of diol to the difunctional reactive group containing compound is about 2 to 1, the value of w in the resulting adduct of formula XII is about 1; where about 3 moles of diol are reacted with about 2 moles of the difunctional group containing compound, the resulting average value of w in the adduct of formula XII is characteristically about 2, and so on. The aforementioned reaction to obtain those compounds of formula XII where w is 1 or greater, can be conducted at a reaction temperature between about -10°C and about 100°C depending on the relative reactivities of the species involved, in the presence or absence of an inert diluent and in the optional presence of an addition catalyst, if desired or appropriate.

Suitable polyols and amino polyethers of the formula HD-A-H wherein A represents the divalent moiety of formula I are generally known materials or can be prepared by methods known, per se.

Thus, the polyols of the formula HO-A-H are generally prepared by the addition reaction of xq moles of an epoxide of the formula XVI

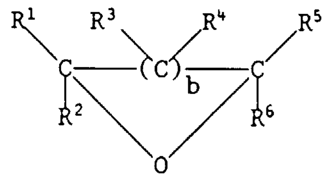

(XVI)

where $R^1$-$R^6$, b, x, and q are as defined above, with yq moles of an epoxide of the formula XVII,

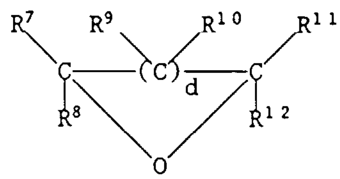

(XVII)

where $R^7$-$R^{12}$, d, y, and q are as defined above, and zq moles of an epoxide of the formula XVIII,

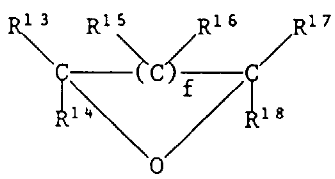

(XVIII)

wherein $R^{13}$-$R^{18}$, f, z, and q are as defined above, optionally in the presence of a conventional alkylation catalyst, at atmospheric to elevated pressures of up to about 3000 kPa gauge, at temperatures between 0°C and about 130°C, optionally in the presence of an inert diluent. If desired, one may add to the reaction mixture, prior to the reaction of the epoxides, an aliphatic, aromatic or cycloaliphatic alcohol, acid or amine having up to 14 carbon atoms to prepare the corresponding mono-ols terminating in the group D.

The reaction between the epoxides, when mixtures of different epoxides are employed to obtain the polyol of the formula HO-A-H, can be conducted by admixing the epoxides to obtain random copolymers or terpolymers, etc., or the addition can be conducted sequentially to form block copolymers having terminal hydroxy groups. Suitable catalysts include alkaline earth oxides, alkaline earth carbonates, alkyl zinc compounds, aluminum alkoxides, hydrates of ferric chloride, bromide and acetate, and gamma radiation. The reaction may also be initiated by the presence of a glycol, such as ethylene glycol or propylene glycol or by a polyol of higher functionality such as sucrose, or by an amine, such as ethylene diamine, toluenediamine, and so forth. Generally the length of time of the reaction will depend in part on the alkylene oxide employed, but can generally be from less than one to several score hours. Thus, ethylene oxide generally is about three times as active as propylene oxide, which in turn reacts more rapidly than 1,2-butylene oxide. The preparation of polyoxetanes and polytetrahydrofurans is generally initiated via ring opening oxonium formation using trialkyloxonium salts, carboxonium salts, acylium salts and the like.

Suitable diols of the formula HO-A-H include those prepared from epoxides such as: 1,2-propylene oxide; 1,2-butylene oxide; 1,2-epoxydecane; 1,2-epoxydodecane; 1,2-epoxyoctane; 2,3-epoxynorbornane; 1,2-epoxy-3-ethoxypropane; 1,2-epoxy-3-phenoxypropane; 2,3-epoxypropyl 4-methoxyphenyl ether; tetrahydrofuran; 1,2-epoxy-3-cyclohexyloxypropane; oxetane; 1,2-epoxy-5-hexene; 1,2-epoxyethylbenzene; 1,2-epoxy-1-methoxy-2-methylpropane; perfluorohexylethoxypropylene oxide; benzyloxypropylene oxide, and the like. Also, the aforementioned epoxides may be employed as mixtures thereof. Further, certain cyclic ethers of formula XVI, XVII and XVIII, where b or d or f, respectively is 3 and the carbocyclic portion of the ring is substituted are resistant to polymerization alone, but copolymerize quite readily with more reactive cyclic ethers. Suitable co-monomers include, for example, 2-methyl-tetrahydrofuran and 3-methyl-tetrahydrofuran. Also, while ethylene oxide may be employed as a comonomer, ethylene oxide polymers, in the absence of more hydrophobic units, is characteristically too hydrophilic and too excessively absorbs aqueous fluid to be of use in accordance with the instant invention. The absorption amount of water is generally or conveniently measured at about 20°C using distilled water or, if desired, an isotonic solution.

Many polymer diols of the formula HO-A-H are commercially available. Thus, suitable diol products include

poloxamers having the general formula

$$HO(CH_2CH_2O)_{a'}\text{-}(CH(CH_3)CH_2O)_{b'}\text{-}(CH_2CH_2O)_{c'}\text{-}H$$

wherein b' has a value between about 16 and 70 and the sum of a' and c' is between about 4 and about 100. Examples of such poloxamers, and their average values of a', b' and c', include poloxamer 101 (a' is 2, b' is 16, c' is 2); poloxamer 105 (a' is 11, b' is 16, c' is 11); poloxamer 108 (a' is 46, b' is 16, c' is 46); poloxamer 122 (a' is 5, b' is 21, c' is 5); poloxamer 124 (a' is 11, b' is 21, c' is 11); poloxamer 181 (a' is 3, b' is 30, c' is 3); poloxamer 182 (a' is 8, b' is 30, c' is 8); poloxamer 183 (a' is 10, b' is 30, c' is 10); poloxamer 185 (a' is 19, b' is 30, c' is 19); poloxamer 212 (a' is 8, b' is 35, c' is 8); poloxamer 231 (a' is 6, b' is 39, c' is 6); poloxamer 282 (a' is 10, b' is 47, c' is 10); poloxamer 333 (a' is 7, b' is 54, c' is 7); poloxamer 401 (a' is 6, b' is 67, c' is 6).

Such poloxamers are available, e.g. from BASF Wyandotte under their Pluronic®, brand name.

Polypropylene ether glycols include commercially available products having a molecular weight range between about 400 and about 4,000. Also commercially available are polytetramethylene ether glycols of moderately low molecular weight, generally between about 1,000 and 2,000, and polymers of 1,2 butylene oxide, i.e. polybutyl ether glycol.

As stated above, the polymers for use in the instant invention are those which exhibit a receding contact angle at 20°C of less than 60°, preferably less than 40°, more preferably less than 25°, more preferably less than 15° and most preferably less than 10°. The measurement of such contact angle is conveniently performed using a modified "Wilhelmy Plate" technique, as described, for example, for J.D. Androde, et al. <u>Surface and Interfacial Aspects of Biomedical Polymers</u>, Vol. 1, <u>Surface Chemistry and Physics</u>, Plenum Press, 1985, wherein a specimen sample in the form of a plate of known dimensions is immersed into the wetting solution, pure water, at a slow controlled rate, e.g. at 2 - 20 mm per minute. Poly(hydroxyethylmethacrylate) generally has, under these conditions, a receding contact angle of 39 - 43°. As mentioned above, the instant polymers for use in the present invention possess a high degree of oxygen permeability. The oxygen permeability, $Dk(x10^{-10})$, is measured using a modification of ASTM standard D3985-81 in that (a) there is used 21 % oxygen, i.e. air, instead of 99 - 100 % oxygen, (b) the surface area of sample employed is 0.50 square meters versus 100 square meters and the humidity is controlled to be at 95 -100 % relative humidity instead of 0 % relative humidity. The unit of Dk is $[(cm \cdot mm/s)(ml\ O_2/ml \cdot mmHg)]$.

Typically, conventional fully swollen polyhydroxyethyl methacrylate (HEMA) lenses which are sparingly crosslinked possess a $Dk(x10^{-10})$, $[(cm \cdot mm/s)(ml\ O_2/ml \cdot mmHg)]$ value of about 5 - 7.

The oxygen permeability of the instant polymers for use as an ophthalmic device, such as a contact lens, advantageously possess a $Dk(x10^{-10})$ value generally greater than 1 - 1.5 times that of HEMA, preferably greater than about 2.5 times that of HEMA, more preferably greater than about 3 times that of HEMA and most preferably greater than about 40.

The following examples are for illustrative purposes and are not to be construed as limiting the invention. All parts are by weight unless otherwise specified.

All of the following examples have highly preferred procedures common to each. These common procedures are as follows:

1. All glassware is dried in an oven which is at 150°C for at least 5 - 6 hours.
2. When assembled the reaction system must stay under a constant nitrogen environment.
3. All of the isocyanates used should be freshly distilled.
4. All of the polyglycol material should contain no more than 0.005 % water. For these examples all of the diols are stripped of water using a Pope wipe film still at 65°C and less than 265 Pa.
5. After the reaction glassware is assembled and under a nitrogen atmosphere the set up is flame dried for 20 minutes to ensure that all of the moisture is absent from the system.
6. All of the methylene chloride used in these reactions is distilled into molecular sieves through a 20 mm column packed with glass helices.
7. All temperatures given are degrees Centigrade. Evaporations under reduced pressure are conducted at 2 to 13 kPa if not specified otherwise.

<u>Table of abbreviations used throughout the specification:</u>

PPG: polypropyleneglycol
HEMA: hydroxyethyl methacrylate
TDI: toluene diisocyanate
DMA: dimethylacrylamide

Examples 1 - 7: To a three neck round bottom flask fitted with an air cooled condensor, dropping funnel, Claisen adaptor, mechanical stirring bar, nitrogen inlet and outlet with the outlet equipped with a desiccant tube is added 250 g (0.0625 mol) of PPG 4000, 350 g of methylene chloride, and 0.45 g (0.0011 mol) of stannous octoate. The reactants are well stirred for 45 minutes. To a dropping funnel is added 18.13 g (0.1250mol) of styrene isocyanate and 150 g of methylene chloride. The isocyanate mixture is added over a six to eight hour period dropwise to the diol; checking the reaction mixture occasionally for heat generated in the course of the reaction. It is imperative that the temperature of the reaction not exceed 35°C or generally color will develop in the reaction mixture. If the temperature starts to increase the contents of the reaction mixture should be cooled by the use of an icebath. After three to four hours the completion of the reaction can be followed by IR spectroscopy by the disappearance of the hydroxyl absorption at 3500 $cm^{-1}$. The completion of the reaction can again be followed by IR by observing the disappearance of the NCO absorption at 2270 $cm^{-1}$. After the completion of the reaction 0.40 % Darocur and the hydrophilic modifier in the Table I below in the amount indicated therein are added directly to the reaction mixture. The reaction mixture is then stirred for an additional 2 hours. The prepolymer solution is transferred to a single neck flask which is then connected to a rotary evaporator so that the methylene chloride can be removed. The stripping is done at approximately 660 Pa and ambient temperature for the first hour then at 30°C for the last thirty minutes. The prepolymer is cured at 3 - 5 milliwatts for thirty to ninety minutes. The film produced from this prepolymer has a Dk and water content reported in Table I.

Table 1

| Hydrophilic Modifier | | Resulting Polymer | |
|---|---|---|---|
| Type | % by weight | water content (%) | Dk (multiples of HEMA) |
| 1. N-vinylpyrrolidone | 10 | 11.0 | 4 |
| 2. N-vinylpyrrolidone | 15 | 16.0 | 3.5 |
| 3. N-vinylpyrrolidone | 20 | 20.5 | 3 |
| 4. N-vinylpyrrolidone | 30 | 31.0 | 3 |
| 5. N,N-dimethylacrylamide | 10 | 7 - 8 | 5 - 8 |
| 6. N,N-dimethylacrylamide | 15 | 9 - 11 | 5 - 6 |
| 7. reaction product of styrene isocyanate with N-2-hydroxyethylpyrrolidone | 10 | 12.0 | 3 |

Examples 8 - 13: To a three neck round bottom flask fitted with an air cooled condensor, dropping funnel, Claisen adaptor, mechanical stirring bar, nitrogen inlet and outlet with the outlet equipped with a desiccant tube is added 250 g (0.0625 mol) of PPG 4000, 350 g of methylene chloride and 0.45 g (0.0011 mol) of stannous octoate, the reactants are well stirred for 45 minutes. To a dropping funnel is added 0.03125 mol of TDI and 150 g of methylene chloride. The isocyanate mixture is added over a six-eight hour period dropwise to the glycol while maintaining the temperature below 35°C to avoid coloration. The completion of the reaction is followed by SR spectroscopy by observing the disappearance of the NCO absorption at 2270 $cm^{-1}$.

To a dropping funnel 0.1250 mol of styrene isocyanate and 150 g of methylene chloride are added and the mixture added dropwise to the prior reaction product over a 6 - 8 hour period with cooling as needed to keep the temperature below 35°C. The reaction can be followed by IR spectroscopy by disappearance of the NCO absorption at 2270 $cm^{-1}$ or disappearance of the hydroxyl absorption at 3500 $cm^{-1}$. After completion, 0.40 % Darocur and the hydrophilic modifier in Table II in the amount indicated are added directly to the reaction mixture, which is then stirred for 2 hours. The solution is transferred to a single neck flask which is connected to a rotary evaporator so that the methylene chloride can be removed at 660 Pa and ambient temperature for one hour and then at 30°C for 30 minutes. Curing is carried out at 3 - 5 milliwatts for 30 - 90 minutes. The resulting polymer has the Dk and water content reported in Table II.

Table II

| Hydrophilic Modifier | | Resulting Polymer | |
|---|---|---|---|
| Type | % by weight | % water content | Dk (multiples of HEMA) |
| 8. N-vinylpyrrolidone | 10 | 18 | 4 |
| 9. N-vinylpyrrolidone | 15 | 26 | 3 |
| 10. N-vinylpyrrolidone | 20 | 35 | 2.8 |
| 11. N,N-dimethylacrylamide | 10 | | |
| 12. N,N-dimethylacrylamide | 15 | | |

Table II (continued)

| Hydrophilic Modifier | | Resulting Polymer | |
|---|---|---|---|
| Type | % by weight | % water content | Dk (multiples of HEMA) |
| 13. reaction product of styrene isocyanate with N-2-hydroxyethylpyrrolidone | 10 | | |

Examples 14 - 17: In an analogous fashion to examples 5 and 6, examples 14 - 17 are prepared using the amounts of N,N-dimethylacrylamide (DMA) shown below.

| Example | PPG 4000, endcapped with styrene isocyanate | | |
|---|---|---|---|
| | % DMA | % $H_2O$ | Dk (multiple of HEMA) |
| 5 | 10 | 7 - 8 | 5 - 8 |
| 6 | 15 | 9 - 11 | 5 - 6 |
| 14 | 20 | 15 - 17 | 4 - 5 |
| 15 | 30 | 27 - 30 | 4 - 5 |
| 16 | 40 | 40 - 44 | 3 - 4 |
| 17 | 50 | 50 - 55 | 3 - 4 |

Examples 18 - 20: In a similar fashion, x moles of toluene diisocyanate (TDI) are reacted with 2x moles of a dihydroxy polyether listed below. The product is then reacted with (a) 2x moles of TDI and finally endcapped with 2x moles of HEMA or (b) 2x moles of styrene isocyanate. This product is then cured.

| Example | Polyether | % Water Content | Dk (multiples of HEMA) |
|---|---|---|---|
| 18 b) | Poloxamer 333 | 38 | 6 |
| 19 b) | Poloxamer 124 | 53 | 4 |
| 20 b) | Poloxamer 185 | 59 | 5 |

The same materials, prior to cure can be mixed with coreactive monomers, especially the hydrophilic modifiers described in the copending application of Frank Molock, Richard Robertson and Kai Su entitled HYDROPHILIC MODIFYER MONOMERS, all of which result in raising the Dk reported above even higher.

## Claims

### Claims for the following Contracting States : AT, BE, CH, LI, DE, FR, GB, GR, IT, LU, NL, SE

1. An optically clear, wettable, flexible, hydrolytically stable, biologically inert, substantially siloxane free, and oxygen permeable crosslinked polymer comprising a) units of formula I

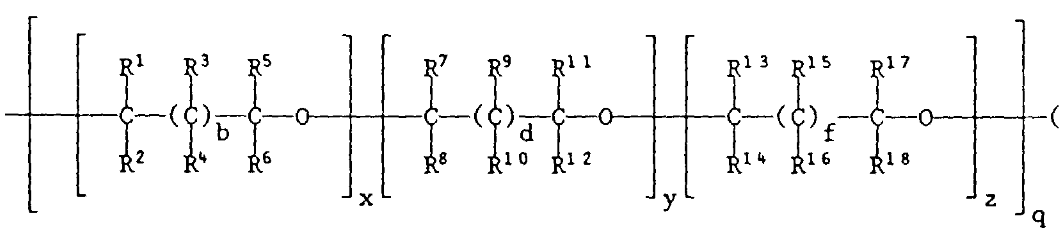

(I)

wherein each b, d and f is independently 0 - 4; q is a number from 1 to 1000; each x, y and z is independently 0 to a number such that (x+y+z) multiplied by q is 4 to 1000;
each $R^1$ - $R^{18}$ is selected from the group consisting of

(i) hydrogen, and
(ii) an aromatic or alicyclic containing radical, each of which is uninterrupted or interrupted by a heteroatom provided no carbon atom in said unit is geminally singly-bound to oxygen atoms;

or any 2 adjacent groups $R^1$ - $R^{18}$, together with the atoms to which they are attached can form a 5 - 8 membered ring;
or $R^1$ - $R^{18}$ independently are additionally selected from, or any of the aforementioned $R^1$ - $R^{18}$ groups have a substituent selected from cross-linkable moieties provided that no carbon atoms bearing geminally singly-bound oxygen atoms result;
the terminal oxygen atom within any unit of formula I being replaceable by

$$-N(R^{19})-,$$

wherein $R^{19}$ is hydrogen, $C_1$-$C_4$ alkyl or phenyl; with the proviso that when b, d, and f are all zero, at least one of $R^1$, $R^2$, $R^5$ - $R^8$, $R^{11}$ - $R^{14}$, $R^{17}$, and $R^{18}$ in at least a portion of the units of formula I is other than hydrogen;
and b) optionally a hydrophilic modifier unit in an amount sufficient to maintain the water content of said crosslinked polymer in excess of 10 %;
said cross-linked polymer having a receding contact angle with distilled water of less than 60° when measured at 20°C and an oxygen permeability Dk greater than 1 - 1.5 times that of polyhydroxyethyl methacrylate;
said hydrophilic modifier unit being the residue of a reactive monomer selected from

aa) polyethylene glycols of the formula

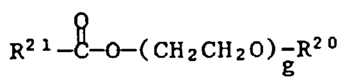 (A)

or ab) pyrrolidones of the formula

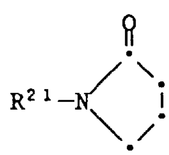 (B)

wherein $R^{20}$ is hydrogen or $C_1$-$C_7$ alkyl, g is an integer of from 1 - 25, and $R^{21}$ is an ethylenically unsaturated group;
or ac) a compound of the formula

$$(R^{22}\text{-div})_{nz}\,Hy \qquad (C)$$

wherein $R^{22}$ is a polymerizable or reactive moiety selected from i) $R^{21}$, ii) epoxy groups, iii) anhydrides, iv) isocyanates or isothiocyanates, v) amines, vi) acids, vii) esters, viii) amides, ix) ethers, x) acid halides, and xi) hydroxy;
div is selected from
ba) a divalent aliphatic group of up to 25 carbon atoms, which is uninterrupted, interrupted, or terminated, or interrupted and terminated by oxy, carbonyloxy, amino, aminocarbonyl, oxycarbonyl, ureido, oxycarbonylamino, or carbonylamino;
bb) a divalent 5 - 7 membered cycloaliphatic and 5 - 7 membered cyclo-aliphatic-$C_1$-$C_{20}$-aliphatic group which is uninterrupted, interrupted, terminated, or interrupted and terminated as in group ba) above except that said interruptions cannot occur within said cycloaliphatic portions;
bc) a divalent arylene group having 6 - 25 carbon atoms which is unsubstituted or substituted by at

least one substituent selected from halogen, $C_1$-$C_4$ alkyl, and $C_1$-$C_{12}$ perhaloalkyl;
bd) a divalent aralkyl or alkaryl having 7 - 25 carbon atoms which is uninterrupted or interrupted in the alkyl portion, or terminated, or interrupted in the alkyl portion and terminated with an interrupting or terminating group as mentioned in ba) above, and each of said uninterrupted, interrupted, and terminated aralkyl and alkaryl groups is further unsubstituted or substituted by a substituent selected from halogen, $C_1$-$C_4$ alkyl, and $C_1$-$C_{12}$ perhaloalkyl;
be)

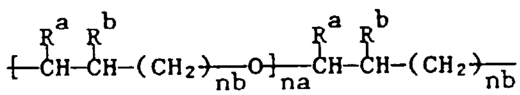

(D)

wherein na is an integer of 8-100; and
bea) $R^a$ is hydrogen, $R^b$ is methyl, and nb is zero; or
beb) $R^a$ is methyl, $R^b$ is hydrogen, and nb is zero; or
bec) $R^a$ and $R^b$ are hydrogen and nb is one;
nz is an integer of 1 up to the valence of Hy and where nz is less than the valence of Hy, the remaining valences of Hy are taken up with hydrogens;
and Hy is a hydrophilic group selected from
ca) morpholino; cyclic amide radicals of 5 - 7 ring members; saturated and unsaturated cyclic N,N-diamide radicals of 5 - 6 ring members; groups of the formula

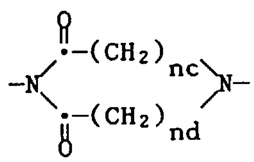

(E)

having 6 - 7 ring members wherein nc and nd are selected from 0 - 2; and cyclic amines of 5 - 6 ring members;
each unsubstituted or substituted by hydroxy-$C_1$-$C_5$ alkyl, carboxy, or lower alkyl;
cb) tetrahydrofurfuryl;
cc) mono-, di-, and polysaccharide radicals, whether straight chain or cyclic, their corresponding sugar alcohol radicals, pentaerythritol radicals, and polyvinyl alcohol radicals; and
cd) polyhydroxy $C_2$-$C_7$ alkyl radicals;
and said reactive group $R^{22}$ is coreactive with one or more non hydrophilic modifier sites in said polymer.

2. The crosslinked polymer of claim 1 wherein each of $R^1$, $R^2$, $R^5$-$R^8$, $R^{11}$-$R^{14}$, $R^{17}$ and $R^{18}$ is independently selected from the group consisting of hydrogen, unsubstituted $C_1$-$C_{16}$ alkyl; substituted $C_1$-$C_{16}$ alkyl; unsubstituted $C_2$-$C_{16}$ alkenyl; and substituted $C_2$-$C_{16}$ alkenyl; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_8$ alkoxy, $C_2$-$C_6$ alkanoyloxy, aryloxy of up to 10 carbon atoms, $C_3$-$C_6$ alkenoyloxy, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atom already bound to another oxygen atom; $R^1$, $R^2$, $R^5$-$R^8$, $R^{11}$-$R^{14}$, $R^{17}$ and $R^{18}$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said alkyl set forth above;
$R^3$, $R^4$, $R^9$, $R^{10}$, $R^{15}$ and $R^{16}$ are selected from the same group set forth above for $R^1$; and $R^3$, $R^4$, $R^9$, $R^{10}$, $R^{15}$ and $R^{16}$ are further independently selected from ($C_1$-$C_{15}$ alkoxy)carbonyl, $C_2$-$C_{16}$ alkanoyloxy, ($C_2$-$C_{16}$ alkenyloxy) carbonyl, and $C_3$-$C_{16}$ alkenoyloxy, each of which may be further substituted by fluoro, aryl of up to 10 carbon

atoms, or $C_1$-$C_{16}$ alkoxy, and $R^3$, $R^4$, $R^9$, $R^{10}$, $R^{15}$ and $R^{16}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyloxy, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyloxy, oxacycloalkyl (of up to 7 carbon atoms)-carbonyloxy, oxacycloalkenyloxy (of up to 7 carbon atoms)-carbonyloxy, and aryloxy (of up to 10 carbon atoms)-carbonyloxy, each of which may be further substituted by fluoro, $C_1$-$C_6$ alkyl or $C_1$-$C_6$ alkoxy, provided that any substituent having an oxygen atom or carbonyl group thereof as its link to the rest of the molecule may not be a substituent on the same carbon atom which is bonded to another oxygen atom, or 2 adjacent groups selected from $R^1$ to $R^{18}$, together with the atoms to which they are attached may form a 5 - 8 membered cycloalkyl, 5 - 8 membered oxacycloalkyl or bicycloalkyl ring provided the ring oxygen in said oxacycloalkyl so formed is not bound to a carbon atom which is singly bound to a second oxygen atom; and said $R^1$-$R^{18}$ are further selected from or have a substituent thereon selected from crosslinkable moieties provided that no carbon atoms bearing geminal singly-bound oxygen atoms result.

**3.** The crosslinked polymer of claim 1 which is crosslinked up to 10 %, preferably up to 5 %.

**4.** The crosslinked polymer of claim 3 which is crosslinked from 1 - 4 %, preferably from 2 - 3 %.

**5.** The crosslinked polymer of claim 1 wherein said receding contact angle is less than 50°, preferably less than 40°.

**6.** The crosslinked polymer of claim 5 wherein said receding contact angle is less than 25°, preferably less than 15°.

**7.** The crosslinked polymer of claim 6 wherein said receding contact angle is less than 10°.

**8.** The crosslinked polymer of claim 1 wherein said unit of formula I is at least 20 % halogen free, preferably at least 25 % halogen free.

**9.** The crosslinked polymer of claim 8 wherein said unit of formula I is at least 30 % halogen free, preferably at least 40 % halogen free.

**10.** The crosslinked polymer of claim 9 wherein said unit of formula I is substantially halogen free.

**11.** The crosslinked polymer of claim 1 wherein said Dk is at least 2.5 times that of poly(2-hydroxyethyl)methacrylate, preferably greater than 3 times that of polyhydroxyethylmethacrylate.

**12.** The crosslinked polymer of claim 11 wherein said Dk is greater than 40 [(cm·mm/s)(ml $O_2$/ml·mmHg)].

**13.** The crosslinked polymer of claim 1 wherein each of b, d, and f is 0 or 1.

**14.** The crosslinked polymer of claim 13 wherein $R^1$ - $R^{18}$ are independently hydrogen, methyl, or a crosslinkable moiety.

**15.** The crosslinked polymer of claim 1 comprising a polymerization product of a monomer of formula V

$$L'-D-[A-L-D]_{w}-A-L'' \qquad (V)$$

wherein each A is independently a divalent moiety of formula I, provided that not all A groups in any one polymer can be homopolymers of polyethylene glycol, preferably all A groups cannot be homopolymers of polyethylene glycol or polypropylene glycol, and provided that the terminal oxygen atom within any one or more A groups may be replaced by -N($R^{19}$)-, each L is independently selected from -BRB'-; w is 0 - 8, each D is independently oxygen or -N($R^{19}$)-; each $R^{19}$ is independently selected from hydrogen, $C_1$-$C_4$ alkyl and phenyl, each B and B' being selected from

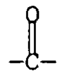, 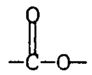; and 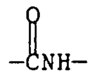

with the recited carbonyl group being bound directly to A or D;
each R is a divalent linking group selected from

a) a divalent aliphatic group of up to 25 carbon atoms which may be interrupted by an interrupting unit selected from oxy, carbonyloxy, amino, aminocarbonyl, oxycarbonyl, ureido, oxycarbonylamino, and carbonylamino;
b) a divalent 5 - 7 membered cycloaliphatic group and a 5 - 7 membered cycloaliphatic-$C_5$-$C_{25}$ aliphatic group;
c) a divalent arylene group having 6 - 25 carbon atoms; and
d) a divalent aralkyl or alkaryl group having 7 to 25 carbon atoms;

wherein groups b) and d) can be optionally interrupted by the same groups as in group a) and wherein the aryl rings in groups c) and d) may be further substituted with one or more substituents selected from halogen, $C_1$-$C_4$ alkyl, and $C_1$-$C_{12}$ perhalo alkyl;
L' is selected from hydrogen, P'-B-R-B'-, and P'-R-B'-, wherein B, R, and B' are as defined above with the carbonyl group of B being bound to P', and P' is hydrogen, amino, hydroxy, or a moiety containing a cross-linkable group which may be crosslinked when coreacted with a suitable crosslinking agent or when irradiated by actinic radiation; and
L" is selected from hydrogen, L"' as defined hereinafter, -B-R-B'-P', and -B-R-P', wherein B, R, B' and P' are as defined above except that the carbonyl of B' instead of B is bound to P'; and L"' is a terminal monovalent aliphatic, aromatic or cycloaliphatic group of up to 14 carbon atoms.

**16.** The crosslinked polymer of claim 1 wherein at least a portion of said hydrophilic modifier provides at least a portion of said crosslinks.

**17.** The crosslinked polymer of claim 1 wherein said hydrophilic modifier is bound to one or more of $R^1$ - $R^{18}$.

**18.** The crosslinked polymer of claim 15 wherein P' contains an ethylenically unsaturated group.

**19.** The crosslinked polymer of claim 18 wherein said $R^{22}$ is an ethylenically unsaturated radical.

**20.** The crosslinked polymer of claim 1 wherein said hydrophilic modifier unit is a residue of a reactive monomer of formula C wherein $R^{22}$ is an etylenically unsaturated group selected from

ia)

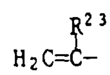

and the terminus of div to which it is bound is -C(O)$R^{24}$, the carbonyl being bound to $R^{22}$, where $R^{23}$ is hydrogen or methyl and $R^{24}$ is -O-, or -$NR^{25}$ with $R^{25}$ being hydrogen or lower alkyl;
ib) $H_2C$=CH- and the terminus of div to which it is bound is

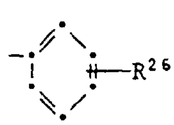,

the left hand bond being bound to $R^{22}$, wherein $R^{26}$ is -O-, -$NR^{25}$-, -C(O)-,

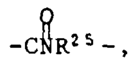

or -C(O)O-; and
ic)

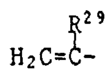

and the terminus of div to which it is bound is -C(O)$R^{28}$-, the carbonyl of which is bound to $R^{22}$ wherein $R^{28}$ is lower alkylene or -[$CH_2CH$(loweralkyl)-O]$_{1-5}$- and $R^{29}$ is hydrogen, lower alkyl, or cyano; and wherein Hy is selected from
ce) morpholino which is unsubstituted or mono- up to tetra substituted by lower alkyl;
cf)

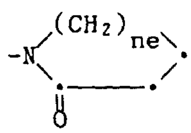

wherein ne is one, two, or three, each of which is unsubstituted or substituted by lower alkyl,
cg)

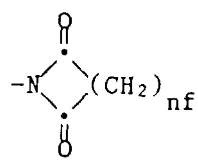

where nf is 2 or 3, each of which is unsubstituted or substituted by lower alkyl;
ch) a divalent group of the formula

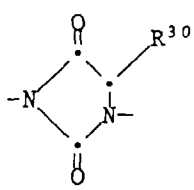 , 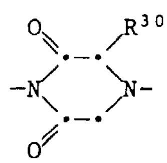 , 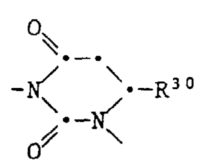

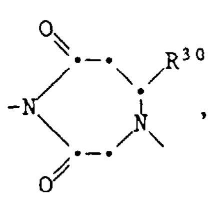 , or 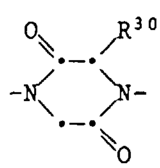

wherein $R^{30}$ is hydrogen or carboxy;
ci)

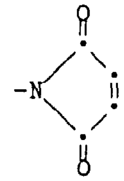

,

cj)

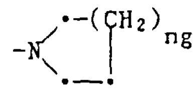

where ng is one or two, each of which is unsubstituted or substituted by lower alkyl;

ck)

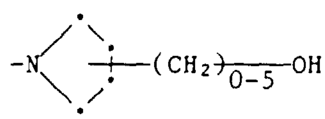

;

cl) a polyol selected from polyvinyl alcohol radicals of the formula,

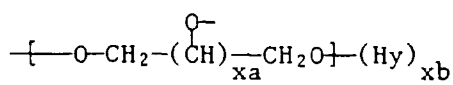

wherein xa is 2 - 10, preferably 3 - 4, and xb is an integer from at least 0.5xa up to xa + 1 inclusive, the cyclic saccharide analogs thereof, the di-tetra saccharides thereof having saccharide-saccharide links between the 1 and 4 carbon positions thereof, $C(CH_2O)_4Hy_{xc}$ wherein xc is 0 - 3, and polyhydroxy lower alkylene glycol radicals wherein up to 50 % of the hydroxy groups are missing their alcoholic hydrogens.

**21.** The crosslinked polymer of claim 20 wherein the monomer of formula C is

aca)

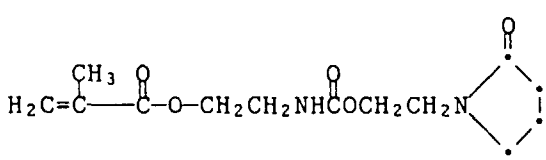

,

acb)

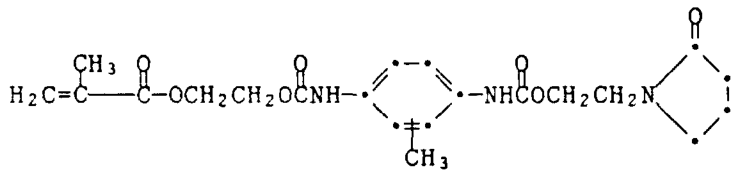 ,

acc)

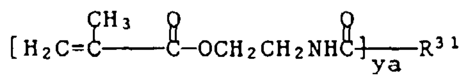

wherein $R^{31}$ is

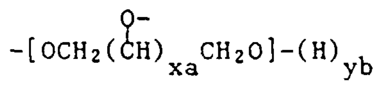

in which xa is 3 - 4 and yb is 0 up to (xa + 1), and ya is 1 up to (xa + 2 - yb),
acd)

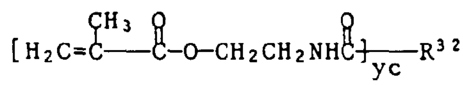

wherein $R^{32}$ is $C(CH_2O)_4(H)_{4-yc}$ wherein yc is 1 - 4;
ace) polyvinyl alcohol having at least one and up to 50 % of the alcoholic hydrogens thereof absent; or
acf)

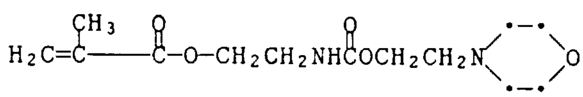 .

**22.** The crosslinked polymer of claim 15 wherein each of the A groups is of formula III

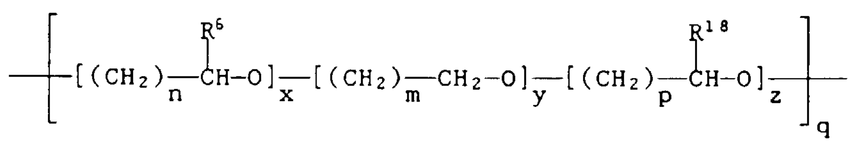 (III)

wherein n is b + 1; m is d + 1, p is f + 1; n, m and p each independently being preferably 1 - 3, more preferably 1 or 2, most preferably 1; and at least one of $R^6$ and $R^{18}$, but preferably both, is an aliphatic, aromatic, or heterocyclic radical, preferably alkyl of up to 6 carbon atoms, alkyl of up to 6 carbon atoms substituted by alkoxy of up to 6 carbon atoms or fluoro; phenyl which is unsubstituted or substituted by fluoro, alkoxy of up to 6 carbon atoms or alkyl of up to 6 carbon atoms; benzyl wherein the phenyl ring thereof is unsubstituted or substituted by fluoro, alkoxy of up to 6 carbon atoms or alkyl of up to 6 carbon atoms; cyclohexyl or oxacycloalkyl of 4 or 5 ring carbon atoms.

**23.** The crosslinked polymer of claim 15 wherein each of the A groups is of formula IV

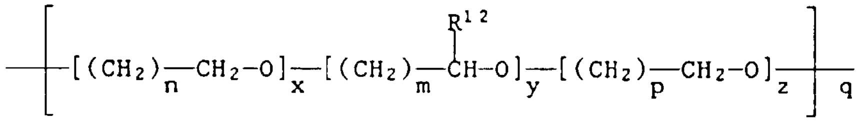 (IV)

wherein n, m, p, x, y, z and q are as defined in claim 22 for formula III and $R^{12}$ is preferably selected from the same group as $R^6$ in claim 22.

**24.** The crosslinked polymer of claim 1 comprising a polymerization product of a monomer of the formula VII

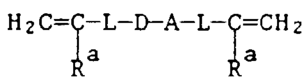 (VII)

wherein $R^a$, D, and A are as defined above, each $R^a$ being independent of the other; and L is -B-R-B'-, -B-R- or -R-B'-.

**25.** The crosslinked polymer of claim 24 wherein L is -BRB', R is a divalent arylene group of 6 to 14 carbon atoms, or is a divalent $C_2$-$C_6$ alkylene-oxycarbonylamino-$C_6$-$C_{10}$-arylene group; D is oxygen, and B and B' are each -NHCO- wherein the nitrogens thereof are directly bonded to R.

**26.** The crosslinked polymer of claim 24 wherein L is -BR- or -RB'-, respectively, R is a divalent arylene of 6 to 14 carbon atoms, D is oxygen, and B and B' are each -NHCO- wherein the nitrogens thereof are directly bonded to R.

**27.** An ophthalmic device comprising a crosslinked polymer of claim 1.

**28.** The device of claim 27 which is a contact lens.

**Claims for the following Contracting State : ES**

**1.** A process for the manufacture of an optically clear, wettable, flexible, hydrolytically stable, biologically inert, substantially siloxane free, and oxygen permeable crosslinked polymer comprising a) units of formula I

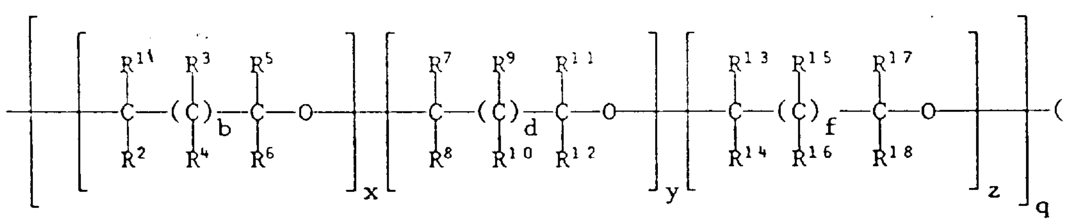 (I)

wherein each b, d and f is independently 0 - 4; q is a number from 1 to 1000; each x, y and *z* is independently 0 to a number such that (x+y+z) multiplied by q is 4 to 1000;
each $R^1$ - $R^{18}$ is selected from the group consisting of

(i) hydrogen, and
(ii) an aromatic or alicyclic containing radical, each of which is uninterrupted or interrupted by a heteroatom provided no carbon atom in said unit is geminally singly-bound to oxygen atoms;

or any 2 adjacent groups $R^1$ - $R^{18}$, together with the atoms to which they are attached can form a 5 - 8 membered ring;
or $R^1$ - $R^{18}$ independently are additionally selected from, or any of the aforementioned $R^1$ - $R^{18}$ groups

have a substituent selected from cross-linkable moieties provided that no carbon atoms bearing geminally singly-bound oxygen atoms result;
the terminal oxygen atom within any unit of formula I being replaceable by

$$-N(R^{19})-,$$

wherein $R^{19}$ is hydrogen, $C_1$-$C_4$ alkyl or phenyl; with the proviso that when b, d, and f are all zero, at least one of $R^1$ $R^2$, $R^5$ - $R^8$, $R^{11}$ - $R^{14}$, $R^{17}$, and $R^{18}$ in at least a portion of the units of formula I is other than hydrogen;
and b) optionally a hydrophilic modifier unit in an amount sufficient to maintain the water content of said crosslinked polymer in excess of 10 %;
said cross-linked polymer having a receding contact angle with distilled water of less than 60° when measured at 20°C and an oxygen permeability Dk greater than 1 - 1.5 times that of polyhydroxyethyl methacrylate;
said hydrophilic modifier unit being the residue of a reactive monomer selected from

aa) polyethylene glycols of the formula

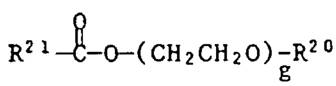

(A)

or ab) pyrrolidones of the formula

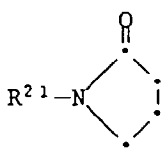

(B)

wherein $R^{20}$ is hydrogen or $C_1$-$C_7$ alkyl, g is an integer of from 1 - 25, and $R^{21}$ is an ethylenically unsaturated group;
or ac) a compound of the formula

$$(R^{22}\text{-div})_{nz}Hy \qquad (C)$$

wherein $R^{22}$ is a polymerizable or reactive moiety selected from i) $R^{21}$, ii) epoxy groups, iii) anhydrides, iv) isocyanates or isothiocyanates, v) amines, vi) acids, vii) esters, viii) amides, ix) ethers, x) acid halides, and xi) hydroxy; div is selected from
ba) a divalent aliphatic group of up to 25 carbon atoms, which is uninterrupted, interrupted, or terminated, or interrupted and terminated by oxy, carbonyloxy, amino, aminocarbonyl, oxycarbonyl, ureido, oxycarbonylamino, or carbonylamino;
bb) a divalent 5 - 7 membered cycloaliphatic and 5 - 7 membered cyclo-aliphatic-$C_1$-$C_{20}$-aliphatic group which is uninterrupted, interrupted, terminated, or interrupted and terminated as in group ba) above except that said interruptions cannot occur within said cycloaliphatic portions;
bc) a divalent arylene group having 6 - 25 carbon atoms which is unsubstituted or substituted by at least one substituent selected from halogen, $C_1$-$C_4$ alkyl, and $C_1$-$C_{12}$ perhaloalkyl;
bd) a divalent aralkyl or alkaryl having 7 - 25 carbon atoms which is uninterrupted or interrupted in the alkyl portion, or terminated, or interrupted in the alkyl portion and terminated with an interrupting or terminating group as mentioned in ba) above, and each of said uninterrupted, interrupted, and terminated aralkyl and alkaryl groups is further unsubstituted or substituted by a substituent selected from halogen, $C_1$-$C_4$ alkyl, and $C_1$-$C_{12}$ perhaloalkyl;
be)

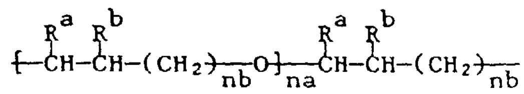 (D)

wherein na is an integer of 8-100; and

bea) $R^a$ is hydrogen, $R^b$ is methyl, and nb is zero; or

beb) $R^a$ is methyl, $R^b$ is hydrogen, and nb is zero; or

bec) $R^a$ and $R^b$ are hydrogen and nb is one;

nz is an integer of 1 up to the valence of Hy and where nz is less than the valence of Hy, the remaining valences of Hy are taken up with hydrogens; and Hy is a hydrophilic group selected from

ca) morpholino; cyclic amide radicals of 5 - 7 ring members; saturated and unsaturated cyclic N,N-diamide radicals of 5 - 6 ring members; groups of the formula

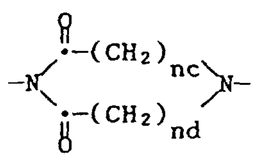 (E)

having 6 - 7 ring members wherein nc and nd are selected from 0 - 2; and cyclic amines of 5 - 6 ring members; each unsubstituted or substituted by hydroxy-$C_1$-$C_5$ alkyl, carboxy, or lower alkyl;

cb) tetrahydrofurfuryl;

cc) mono-, di-, and polysaccharide radicals, whether straight chain or cyclic, their corresponding sugar alcohol radicals, pentaerythritol radicals, and polyvinyl alcohol radicals; and

cd) polyhydroxy $C_2$-$C_7$ alkyl radicals;

and said reactive group $R^{22}$ is coreactive with one or more non hydrophilic modifier sites in said polymer, characterized by conventionally polymerizing and crosslinking said polymer.

**2.** The process of claim 1 wherein in the unit of formula I each of $R^1$, $R^2$, $R^5$-$R^8$, $R^{11}$-$R^{14}$, $R^{17}$ and $R^{18}$ is independently selected from the group consisting of hydrogen, unsubstituted $C_1$-$C_{16}$ alkyl; substituted $C_1$-$C_{16}$ alkyl; unsubstituted $C_2$-$C_{16}$ alkenyl; and substituted $C_2$-$C_{16}$ alkenyl; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_8$ alkoxy, $C_2$-$C_6$ alkanoyloxy, aryloxy of up to 10 carbon atoms, $C_3$-$C_6$ alkenoyloxy, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atom already bound to another oxygen atom; $R^1$, $R^2$, $R^5$-$R^8$, $R^{11}$-$R^{14}$, $R^{17}$ and $R^{18}$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said alkyl set forth above;

$R^3$, $R^4$, $R^9$, $R^{10}$, $R^{15}$ and $R^{16}$ are selected from the same group set forth above for $R^1$; and $R^3$, $R^4$, $R^9$, $R^{10}$, $R^{15}$ and $R^{16}$ are further independently selected from ($C_1$-$C_{15}$ alkoxy)carbonyl, $C_2$-$C_{16}$ alkanoyloxy, ($C_2$-$C_{16}$ alkenyloxy) carbonyl, and $C_3$-$C_{16}$ alkenoyloxy, each of which may be further substituted by fluoro, aryl of up to 10 carbon atoms, or $C_1$-$C_{16}$ alkoxy, and $R^3$, $R^4$, $R^9$, $R^{10}$, $R^{15}$ and $R^{16}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyloxy, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyloxy, oxacycloalkyl (of up to 7 carbon atoms)-carbonyloxy, oxacycloalkenyloxy (of up to 7 carbon atoms)-carbonyloxy, and aryloxy (of up to 10 carbon atoms)-carbonyloxy, each of which may be further substituted by fluoro, $C_1$-$C_6$ alkyl or $C_1$-$C_6$ alkoxy, provided that any substituent having an oxygen atom or carbonyl group thereof as its link to the rest of the molecule may not be a substituent on the same carbon atom which is bonded to another oxygen atom, or 2 adjacent groups selected from $R^1$ to $R^{18}$, together with the atoms to which they are attached may form a 5 - 8 membered cycloalkyl, 5 - 8 membered oxacycloalkyl or bicycloalkyl ring provided the ring oxygen in said

oxacycloalkyl so formed is not bound to a carbon atom which is singly bound to a second oxygen atom; and said $R^1$-$R^{18}$ are further selected from or have a substituent thereon selected from crosslinkable moieties provided that no carbon atoms bearing geminal singly-bound oxygen atoms result.

**3.** The process of claim 1 wherein the crosslinked polymer is crosslinked up to 10 %, preferably up to 5 %.

**4.** The process of claim 3 wherein the crosslinked polymer is crosslinked from 1 - 4 %, preferably from 2 - 3 %.

**5.** The process of claim 1 wherein said receding contact angle is less than 50°, preferably less than 40°.

**6.** The process of claim 5 wherein said receding contact angle is less than 25°, preferably less than 15°.

**7.** The process of claim 6 wherein said receding contact angle is less than 10°.

**8.** The process of claim 1 wherein said unit of formula I is at least 20 % halogen free, preferably at least 25 % halogen free.

**9.** The process of claim 8 wherein said unit of formula I is at least 30 % halogen free, preferably at least 40 % halogen free.

**10.** The process of claim 9 wherein said unit of formula I is substantially halogen free.

**11.** The process of claim 1 wherein said Dk is at least 2.5 times that of poly(2-hydroxyethyl)methacrylate, preferably greater than 3 times that of polyhydroxyethylmethacrylate.

**12.** The process of claim 11 wherein said Dk is greater than 40 [(cm·mm/s)(ml $O_2$/ml·mmHg)].

**13.** The process of claim 1 wherein each of b, d, and f is 0 or 1.

**14.** The process of claim 13 wherein $R^1$ - $R^{18}$ are independently hydrogen, methyl, or a crosslinkable moiety.

**15.** The process of claim 1 comprising the polymerization of a monomer of formula V

$$L'-D-[A-L-D]_w-A-L'' \qquad (V)$$

wherein each A is independently a divalent moiety of formula I, provided that not all A groups in any one polymer can be homopolymers of polyethylene glycol, preferably all A groups cannot be homopolymers of polyethylene glycol or polypropylene glycol, and provided that the terminal oxygen atom within any one or more A groups may be replaced by -N($R^{19}$)-, each L is independently selected from -BRB'-; w is 0 - 8, each D is independently oxygen or -N($R^{19}$)-; each $R^{19}$ is independently selected from hydrogen, $C_1$-$C_4$ alkyl and phenyl, each B and B' being selected from

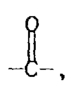 , 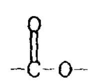 ; and 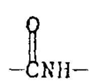

with the recited carbonyl group being bound directly to A or D; each R is a divalent linking group selected from

a) a divalent aliphatic group of up to 25 carbon atoms which may be interrupted by an interrupting unit selected from oxy, carbonyloxy, amino, aminocarbonyl, oxycarbonyl, ureido, oxycarbonylamino, and carbonylamino;
b) a divalent 5 - 7 membered cycloaliphatic group and a 5 - 7 membered cycloaliphatic-$C_5$-$C_{25}$ aliphatic group;
c) a divalent arylene group having 6 - 25 carbon atoms; and
d) a divalent aralkyl or alkaryl group having 7 to 25 carbon atoms; wherein groups b) and d) can be optionally interrupted by the same groups as in group a) and wherein the aryl rings in groups c) and d) may be further substituted with one or more substituents selected from halogen, $C_1$-$C_4$ alkyl, and $C_1$-$C_{12}$ perhalo alkyl;

L' is selected from hydrogen, P'-B-R-B'-, and P'-R-B'-, wherein B, R, and B' are as defined above with the carbonyl group of B being bound to P', and P' is hydrogen, amino, hydroxy, or a moiety containing a cross-linkable group which may be crosslinked when coreacted with a suitable crosslinking agent or when irradiated by actinic radiation; and L" is selected from hydrogen, L"' as defined hereinafter, -B-R-B'-P', and -B-R-P', wherein B, R, B' and P' are as defined above except that the carbonyl of B' instead of B is bound to P'; and L"' is a terminal monovalent aliphatic, aromatic or cycloaliphatic group of up to 14 carbon atoms.

**16.** The process of claim 1 wherein at least a portion of said hydrophilic modifier provides at least a portion of said crosslinks.

**17.** The process of claim 1 wherein said hydrophilic modifier is bound to one or more of $R^1$ - $R^{18}$.

**18.** The process of claim 15 wherein P' contains an ethylenically unsaturated group.

**19.** The process of claim 18 wherein said $R^{22}$ is an ethylenically unsaturated radical.

**20.** The process of claim 1 wherein said hydrophilic modifier unit is a residue of a reactive monomer of formula C wherein $R^{22}$ is an etylenically unsaturated group selected from

ia)

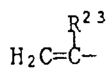

and the terminus of div to which it is bound is -C(O)$R^{24}$, the carbonyl being bound to $R^{22}$, where $R^{23}$ is hydrogen or methyl and $R^{24}$ is -O-, or -N$R^{25}$ with $R^{25}$ being hydrogen or lower alkyl;
ib) $H_2C$=CH- and the terminus of div to which it is bound is

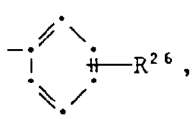

the left hand bond being bound to $R^{22}$, wherein $R^{26}$ is -O-, -N$R^{25}$-, -C(O)-,

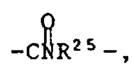

or -C(O)O-; and
ic)

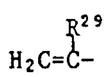

and the terminus of div to which it is bound is -C(O)$R^{28}$-, the carbonyl of which is bound to $R^{22}$ wherein $R^{28}$ is lower alkylene or -[$CH_2$CH(loweralkyl)-O]$_{1-5}$- and $R^{29}$ is hydrogen, lower alkyl, or cyano;
and wherein Hy is selected from
ce) morpholino which is unsubstituted or mono- up to tetra substituted by lower alkyl;
cf)

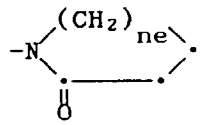

wherein ne is one, two, or three, each of which is unsubstituted or substituted by lower alkyl,
cg)

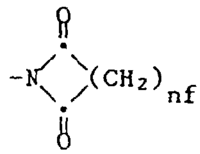

where nf is 2 or 3, each of which is unsubstituted or substituted by lower alkyl;
ch) a divalent group of the formula

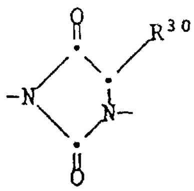 , 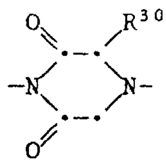 , 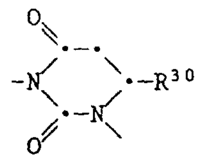

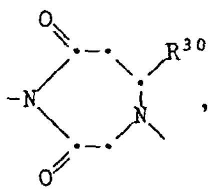 , or 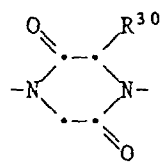

wherein $R^{30}$ is hydrogen or carboxy;
ci)

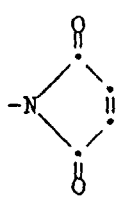 ,

cj)

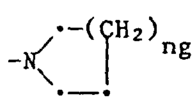

where ng is one or two, each of which is unsubstituted or substituted by lower alkyl;

ck)

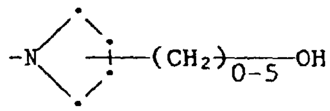 ;

cl) a polyol selected from polyvinyl alcohol radicals of the formula,

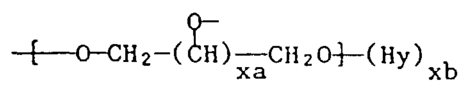

wherein xa is 2 - 10, preferably 3 - 4, and xb is an integer from at least 0.5xa up to xa + 1 inclusive, the cyclic saccharide analogs thereof, the di-tetra saccharides thereof having saccharide-saccharide links between the 1 and 4 carbon positions thereof, $C(CH_2O)_4Hy_{xc}$ wherein xc is 0 - 3, and polyhydroxy lover alkylene glycol radicals wherein up to 50 % of the hydroxy groups are missing their alcoholic hydrogens.

**21.** The process of claim 20 wherein the monomer of formula C is

aca)

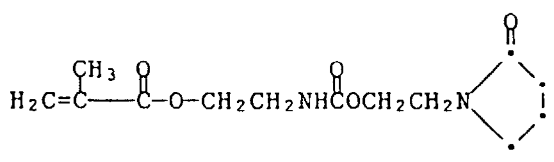 ,

acb)

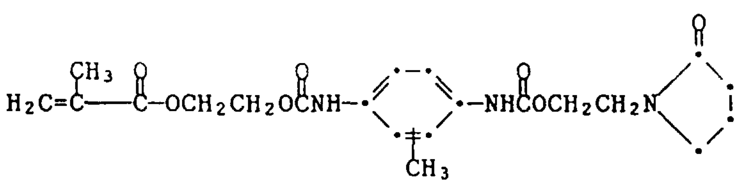 ,

acc)

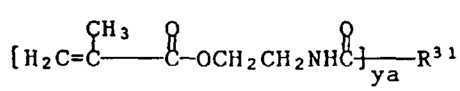

wherein $R^{31}$ is

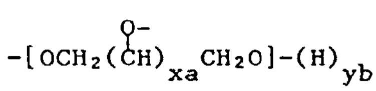

in which xa is 3 - 4 and yb is 0 up to (xa + 1), and ya is 1 up to (xa + 2 - yb),

acd)

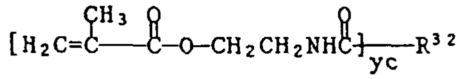

wherein $R^{32}$ is $C(CH_2O)_4(H)_{4-yc}$
wherein yc is 1 - 4;
ace) polyvinyl alcohol having at least one and up to 50 % of the alcoholic hydrogens thereof absent; or
acf)

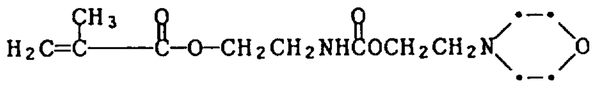 .

**22.** The process of claim 15 wherein each of the A groups is of formula III

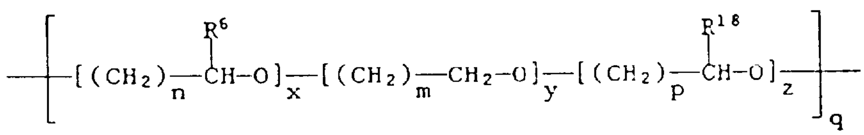 (III)

wherein n is b + 1; m is d + 1, p is f + 1; n, m and p each independently being preferably 1 - 3, more preferably 1 or 2, most preferably 1; and at least one of $R^6$ and $R^{18}$, but preferably both, is an aliphatic, aromatic, or heterocyclic radical, preferably alkyl of up to 6 carbon atoms, alkyl of up to 6 carbon atoms substituted by alkoxy of up to 6 carbon atoms or fluoro; phenyl which is unsubstituted or substituted by fluoro, alkoxy of up to 6 carbon atoms or alkyl of up to 6 carbon atoms; benzyl wherein the phenyl ring thereof is unsubstituted or substituted by fluoro, alkoxy of up to 6 carbon atoms or alkyl of up to 6 carbon atoms; cyclohexyl or oxacycloalkyl of 4 or 5 ring carbon atoms.

**23.** The process of claim 15 wherein each of the A groups is of formula IV

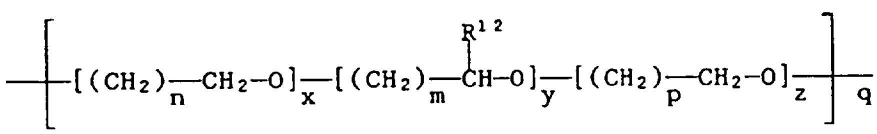 (IV)

wherein n, m, p, x, y, z and q are as defined in claim 22 for formula III and $R^{12}$ is preferably selected from the same group as $R^6$ in claim 22.

**24.** The process of claim 1 comprising the polymerization of a monomer of the formula VII

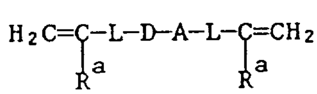 (VII)

wherein $R^a$, D, and A are as defined above, each $R^a$ being independent of the other; and L is -B-R-B'-, -B-R- or -R-B'-.

**25.** The process of claim 24 wherein L is -BRB', R is a divalent arylene group of 6 to 14 carbon atoms, or is a divalent $C_2$-$C_6$ alkylene-oxycarbonylamino-$C_6$-$C_{10}$-arylene group; D is oxygen, and B and B' are each -NHCO- wherein the nitrogens thereof are directly bonded to R.

**26.** The process of claim 24 wherein L is -BR- or -RB'-, respectively, R is a divalent arylene of 6 to 14 carbon atoms, D is oxygen, and B and B' are each -NHCO- wherein the nitrogens thereof are directly bonded to R.

**27.** An ophthalmic device comprising a crosslinked polymer of claim 1.

**28.** The device of claim 27 which is a contact lens.

**Patentansprüche**

**Patentansprüche für folgende Vertragsstaaten : AT, BE, CH, LI, DE, FR, GB, GR, IT, LU, NL, SE**

**1.** Optisch durchsichtiges, benetzbares, biegsames, hydrolytisch stabiles, biologisch inertes, im wesentlichen siloxanfreies und sauerstoffdurchlässiges, vernetztes Polymer, umfassend a) Einheiten der Formel I

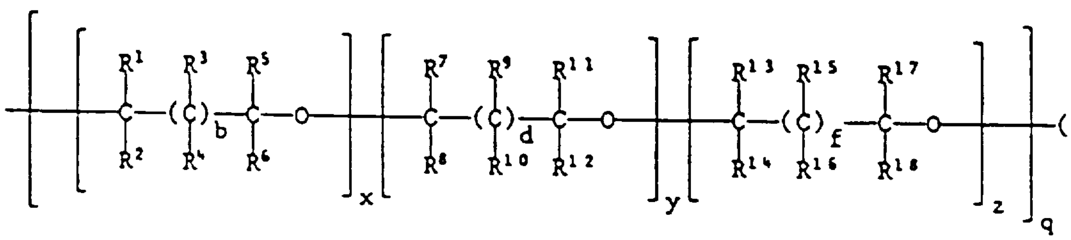

(I)

worin jeweils b, d und f unabhängig 0-4 sind; q eine Zahl von 1 bis 1000 ist; x, y und z jeweils unabhängig 0 bis zu einer Zahl, so daß (x+y+z) multipliziert mit q, 4 bis 1000 ist;

$R^1$ - $R^{18}$ jeweils ausgewählt sind aus der Gruppe, bestehend aus

(i) Wasserstoff und
(ii) einem aromatischen oder alicyclischen Rest enthaltenden Rest, wobei jeder davon nicht unterbrochen oder durch ein Heteroatom unterbrochen ist, mit der Maßgabe, daß kein Kohlenstoffatom in der Einheit geminal an Sauerstoffatome einfach gebunden ist;

oder 2 benachbarten Gruppen $R^1$ - $R^{18}$, die zusammen mit den Atomen, an die sie gebunden sind, einen 5 - 8-gliedrigen Ring bilden können;
oder $R^1$ - $R^{18}$, die zusätzlich unabhängig voneinander ausgewählt sind aus oder eine der vorstehend erwähnten Gruppen $R^1$ - $R^{18}$ einen Substituenten aufweisen, ausgewählt aus vernetzbaren Resten, mit der Maßgabe, daß keine Kohlenstoffatome, die geminal einfach gebundene Sauerstoffatome tragen, erhalten werden;
wobei das endständige Sauerstoffatom in einer Einheit der Formel I ersetzbar ist durch

$$-N(R^{19})-,$$

worin $R^{19}$ Wasserstoff, $C_1$-$C_4$-Alkyl oder Phenyl darstellt; mit der Maßgabe, daß, wenn b, d und f alle null sind, mindestens einer der Reste $R^1$, $R^2$, $R^5$ - $R^8$, $R^{11}$ - $R^{14}$, $R^{17}$ und $R^{18}$ in mindestens einem Teil der Einheiten der Formel I nicht Wasserstoff darstellt;
und b) gegebenenfalls eine hydrophile Modifizierungseinheit in einer Menge, ausreichend, um den Wassergehalt des vernetzten Polymers oberhalb 10% zu halten;
wobei das vernetzte Polymer einen Kontraktionsberührungswinkel mit destilliertem Wasser von weniger als 60°, wenn bei 20°C gemessen wird und eine Sauerstoffpermeabilität Dk größer als das 1 - 1,5-fache von Polyhydroxyethylmethacrylat aufweist;
wobei die hydrophile Modifizierungseinheit den Rest eines reaktiven Monomers darstellt, ausgewählt aus

aa) Polyethylenglycolen der Formel

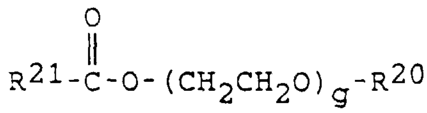

(A)

oder ab) Pyrrolidonen der Formel

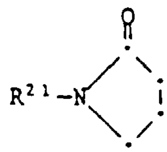

(B)

worin $R^{20}$ Wasserstoff oder $C_1$-$C_7$-Alkyl darstellt, g eine ganze Zahl von 1 - 25 ist und $R^{21}$ eine ethylenisch ungesättigte Gruppe ist;
oder ac) eine Verbindung der Formel

$$(R^{22}\text{-div})_{nz}Hy \qquad \text{(C)}$$

darstellt, worin $R^{22}$ einen polymerisierbaren oder reaktiven Rest darstellt, ausgewählt aus i) $R^{21}$, ii) Epoxygruppen, iii) Anhydriden, iv) Isocyanaten oder Isothiocyanaten, v) Aminen, vi) Säuren, vii) Estern, viii) Amiden, ix) Ethern, x) Säurehalogeniden und xi) Hydroxy;
div ausgewählt ist aus

ba) einer zweiwertigen aliphatischen Gruppe mit bis zu 25 Kohlenstoffatomen, die nicht unterbrochen, unterbrochen oder beendet ist oder unterbrochen und beendet ist mit Oxy, Carbonyloxy, Amino, Aminocarbonyl, Oxycarbonyl, Ureido, Oxycarbonylamino oder Carbonylamino;
bb) einer zweiwertigen 5 - 7-gliedrigen cycloaliphatischen und 5 - 7-gliedrigen cycloaliphatischen $C_1$-$C_{20}$-aliphatischen Gruppe, die nicht unterbrochen, unterbrochen, beendet ist oder unterbrochen und beendet ist mit einer wie vorstehend in ba) genannten Gruppen, ausgenommen, daß die Unterbrechungen nicht in den cycloaliphatischen Teilen auftreten dürfen;
bc) einer zweiwertigen Arylengruppe mit 6 - 25 Kohlenstoffatomen, die unsubstituiert oder substituiert ist mit mindestens einem Substituenten, ausgewählt aus Halogen, $C_1$-$C_4$-Alkyl und $C_1$-$C_{12}$-Perhalogenalkyl;
bd) einer zweiwertigen Aralkyl- oder Alkarylgruppe mit 7 - 25 Kohlenstoffatomen, die nicht unterbrochen oder im Alkylanteil unterbrochen oder beendet ist oder im Alkylanteil mit einer wie vorstehend in ba) genannten unterbrechenden oder beendenden Gruppe unterbrochen und beendet ist und jede der nicht unterbrochenen, unterbrochenen und beendeten Aralkyl- und Alkarylgruppen weiterhin unsubstituiert oder mit einem Substituenten, ausgewählt aus Halogen, $C_1$-$C_4$-Alkyl und $C_1$-$C_{12}$-Perhalogenalkyl substituiert ist;
be)

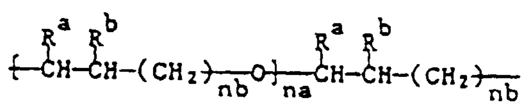

(D)

worin na eine ganze Zahl von 8-100 ist; und
bea) $R^a$ Wasserstoff darstellt, $R^b$ Methyl darstellt und nb null ist; oder
beb) $R^a$ Methyl darstellt, $R^b$ Wasserstoff darstellt und nb null ist; oder
bec) $R^a$ und $R^b$ Wasserstoff darstellen und nb eins ist;
nz eine ganze Zahl von 1 bis zur Wertigkeit von Hy ist und worin nz weniger als die Wertigkeit von Hy ist, wobei die übrigen Bindungen von Hy mit Wasserstoffatomen aufgefüllt werden;
und Hy eine hydrophile Gruppe ist, ausgewählt aus
ca) Morpholino; cyclischen Amidresten mit 5 - 7 Ringgliedern; gesättigten und ungesättigten cyclischen N,N-Diamidresten mit 5 - 6 Ringgliedern; Gruppen der Formel

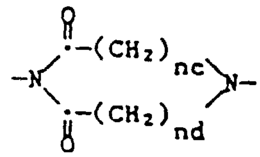

(E)

mit 6 - 7 Ringgliedern, worin nc und nd ausgewählt sind aus 0 - 2 und cyclischen Aminen mit 5 - 6 Ringgliedern;

wobei jedes unsubstituiert oder mit Hydroxy-$C_1$-$C_5$-alkyl, Carboxy oder Niederalkyl substituiert ist;

cb) Tetrahydrofurfuryl;

cc) Mono-, Di- und Polysaccharidresten, ob geradkettig oder cyclisch, deren entsprechenden Zuckeralkoholresten, Pentaerythritresten und Polyvinylalkoholresten und

cd) Polyhydroxy-$C_2$-$C_7$-alkylresten;

und wobei die reaktive Gruppe $R^{22}$ mit einer oder mehreren nichthydrophilen Modifizierungsstellen in dem Polymer coreaktiv ist.

**2.** Vernetztes Polymer nach Anspruch 1, worin jeder der Reste $R^1$, $R^2$, $R^5$-$R^8$, $R^{11}$-$R^{14}$, $R^{17}$ und $R^{18}$ unabhängig ausgewählt ist aus der Gruppe, bestehend aus Wasserstoff, unsubstituiertem $C_1$-$C_{16}$-Alkyl, substituiertem $C_1$-$C_{16}$-Alkyl, unsubstituiertem $C_2$-$C_{16}$-Alkenyl und substituiertem $C_2$-$C_{16}$-Alkenyl; worin die Alkyl- und Alkenylsubstituenten unabhängig ausgewählt sind aus $C_1$-$C_{16}$-Alkoxycarbonyl, $C_2$-$C_{16}$-Alkenyloxycarbonyl, Fluor, Aryl mit bis zu 10 Kohlenstoffatomen, 01-08-Alkoxy, $C_2$-$C_6$-Alkanoyloxy, Aryloxy mit bis zu 10 Kohlenstoffatomen, $C_3$-$C_6$-Alkenoyloxy, Aroyloxy mit bis zu 11 Kohlenstoffatomen, $C_3$-$C_8$-Cycloalkyl, $C_3$-$C_8$-Cycloalkoxy, $C_3$-$C_8$-Cycloalkylcarbonyloxy, $C_3$-$C_8$-Cycloalkoxycarbonyl, Oxacycloalkyl mit bis zu 7 Kohlenstoffatomen, Oxacycloalkoxy mit bis zu 7 Kohlenstoffatomen, Oxacycloalkoxy- (mit bis zu 7 Konlenstoffatomen)-carbonyl, Oxacycloalkyl- (mit bis zu 7 Kohlenstoffatomen)-carbonyloxy und Aryl (mit bis zu 10 Kohlenstoffatomen)-oxycarbonyl, wobei jeder der Alkyl- und Alkenylsubstituenten wiederum gegebenenfalls substituiert ist mit $C_1$-$C_6$-Alkyl, Fluor oder einem $C_1$-$C_6$-Alkoxy, mit der Maßgabe, daß das zuletzt genannte Alkoxy nicht an ein Kohlenstoffatom gebunden ist, das bereits mit einem weiteren Sauerstoffatom gebunden ist; $R^1$, $R^2$, $R^5$-$R^8$, $R^{11}$-$R^{14}$, $R^{17}$ und $R^{18}$ weiterhin unabhängig ausgewählt sind aus Aryl mit bis zu 10 Kohlenstoffatomen, $C_3$-$C_8$-Cycloalkyl und Oxacycloalkyl mit bis zu 7 Kohlenstoffatomen, wobei jeder unsubstituiert oder weiterhin mit einem Substituenten substituiert sein kann, ausgewählt aus der Gruppe der Substituenten für die vorstehend ausgewiesenen Alkylreste;

$R^3$, $R^4$, $R^9$, $R^{10}$, $R^{15}$ und $R^{16}$ ausgewählt sind aus der gleichen Gruppe wie vorstehend für $R^1$ ausgewiesen; und $R^3$, $R^4$, $R^9$, $R^{10}$, $R^{15}$ und $R^{16}$ weiterhin unabhängig ausgewählt sind aus ($C_1$-$C_{15}$-Alkoxy)carbonyl, $C_2$-$C_{16}$-Alkanoyloxy, ($C_2$-$C_{16}$-Alkenyloxy)carbonyl und $C_3$-$C_{16}$-Alkenoyloxy, wobei jeder von ihnen weiterhin substituiert sein kann mit Fluor, Aryl mit bis zu 10 Kohlenstoffatomen oder $C_1$-$C_{16}$-Alkoxy und $R^3$, $R^4$, $R^9$, $R^{10}$, $R^{15}$ und $R^{16}$ des weiteren unabhängig ausgewählt sind aus Aryloxy mit bis zu 10 Kohlenstoffatomen, Cycloalkoxy mit bis zu 8 Kohlenstoffatomen, Cycloalkyl-(mit bis zu 8 Kohlenstoffatomen)-carbonyloxy, Cycloalkoxy-(mit bis zu 8 Kohlenstoffatomen)-carbonyloxy, Aroyloxy mit bis zu 11 Kohlenstoffatomen, Oxacycloalkoxy mit bis zu 7 Kohlenstoffatomen, Oxacycloalkenyloxy mit bis zu 7 Kohlenstoffatomen, Oxacycloalkoxy-(mit bis zu 7 Kohlenstoffatomen)-carbonyloxy, Oxacycloalkyl-(mit bis zu 7 Kohlenstoffatomen)-carbonyloxy, Oxacycloalkenyloxy-(mit bis zu 7 Kohlenstoffatomen)-carbonyloxy und Aryloxy-(mit bis zu 10 Kohlenstoffatomen)-carbonyloxy, wobei jeder weiterhin substituiert sein kann mit Fluor, $C_1$-$C_6$-Alkyl oder $C_1$-$C_6$-Alkoxy, mit der Maßgabe, daß ein Substituent mit einem Sauerstoffatom oder einer Carbonylgruppe davon als Bindung an den Rest des Moleküls nicht ein Substituent an dem gleichen Kohlenstoffatom, das mit einem anderen Sauerstoffatom verbunden ist, sein darf oder 2 benachbarte Gruppen, ausgewählt aus $R^1$ bis $R^{18}$, zusammen mit den Atomen, an die sie gebunden sind, einen 5 - 8-gliedrigen Cycloalkyl-, 5 - 8-gliedrigen Oxacycloalkyl- oder Bicycloalkylring bilden können, mit der Maßgabe, daß das Ringsauerstoffatom in dem so gebildeten Oxacycloalkyl nicht an ein Kohlenstoffatom gebunden ist, das an ein zweites Sauerstoffatom einfach gebunden ist; und $R^1$-$R^{18}$ weiterhin ausgewählt sind aus oder einen Substituenten daran aufweisen, ausgewählt aus vernetzbaren Resten, mit der Maßgabe, daß sich keine Kohlenstoffatome, die benachbarte einfach gebundene Sauerstoffatome tragen, ergeben.

**3.** Vernetztes Polymer nach Anspruch 1, das bis zu 10%, vorzugsweise bis zu 5%, vernetzt ist.

**4.** Vernetztes Polymer nach Anspruch 3, das 1 - 4%, vorzugsweise 2 - 3%, vernetzt ist.

**5.** Vernetztes Polymer nach Anspruch 1, wobei der Kontraktionsberührungswinkel weniger als 50°, vorzugsweise weniger als 40°, ist.

**6.** Vernetztes Polymer nach Anspruch 5, wobei der Kontraktionsberührungswinkel weniger als 25°, vorzugsweise weniger als 15°, ist.

**7.** Vernetztes Polymer nach Anspruch 6, wobei der Kontraktionsberührungswinkel weniger als 10° ist.

**8.** Vernetztes Polymer nach Anspruch 1, wobei die Einheit der Formel I mindestens 20% halogenfrei, vorzugsweise mindestens 25% halogenfrei, ist.

**9.** Vernetztes Polymer nach Anspruch 8, wobei die Einheit der Formel I mindestens 30% halogenfrei, vorzugsweise mindestens 40% halogenfrei, ist.

**10.** Vernetztes Polymer nach Anspruch 9, wobei die Einheit der Formel I im wesentlichen halogenfrei ist.

**11.** Vernetztes Polymer nach Anspruch 1, wobei der Dk-Wert mindestens das 2,5-fache von jenem von Poly(2-hydroxyethyl)methacrylat, vorzugsweise größer als das 3-fache von jenem von Polyhydroxyethylmethacrylat, ist.

**12.** Vernetztes Polymer nach Anspruch 11, wobei der Dk-Wert größer als 40 [(cm·mm/s)(ml $O_2$/ml·mmHg)] ist.

**13.** Vernetztes Polymer nach Anspruch 1, wobei b, d und f jeweils 0 oder 1 ist.

**14.** Vernetztes Polymer nach Anspruch 13, wobei $R^1$ - $R^{18}$ unabhängig Wasserstoff, Methyl oder einen vernetzbaren Rest darstellen.

**15.** Vernetztes Polymer nach Anspruch 1, umfassend ein Polymerisationsprodukt eines Monomers der Formel V

$$L'\text{-}D\text{-}[A\text{-}L\text{-}D]_W\text{-}A\text{-}L'' \qquad (V)$$

worin A jeweils unabhängig einen zweiwertigen Rest der Formel I darstellt, mit der Maßgabe, daß nicht alle Gruppen A in einem Polymer Homopolymere von Polyethylenglycol sein können, vorzugsweise können alle Gruppen A nicht Homopolymere von Polyethylenglycol oder Polypropylenglycol sein und mit der Maßgabe, daß das endständige Sauerstoffatom in einer oder mehreren Gruppen A durch -N($R^{19}$)- ersetzt werden kann, jedes L unabhängig ausgewählt ist aus -BRB'-; w 0 - 8 ist, jedes D unabhängig Sauerstoff oder -N($R^{19}$)- darstellt; jedes $R^{19}$ unabhängig ausgewählt ist aus Wasserstoff, $C_1$-$C_4$-Alkyl und Phenyl, jedes B und B' ausgewählt ist aus

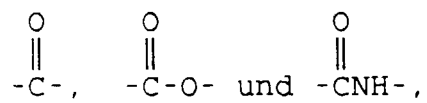

wobei die angegebene Carbonylgruppe direkt an A oder D gebunden ist;
jeder Rest R eine zweiwertige Bindungsgruppe darstellt, ausgewählt aus

a) einer zweiwertigen aliphatischen Gruppe mit bis zu 25 Kohlenstoffatomen, die unterbrochen ist durch eine unterbrechende Einheit, ausgewählt aus Oxy, Carbonyloxy, Amino, Aminocarbonyl, Oxycarbonyl, Ureido, Oxycarbonylamino und Carbonylamino;
b) einer zweiwertigen 5 - 7-gliedrigen cycloaliphatischen Gruppe und einer 5 - 7-gliedrigen cycloaliphatischen $C_5$-$C_{25}$-aliphatischen Gruppe;
c) einer zweiwertigen Arylengruppe mit 6 - 25 Kohlenstoffatomen und
d) einer zweiwertigen Aralkyl- oder Alkarylgruppe mit 7 bis 25 Kohlenstoffatomen;

wobei Gruppen b) und d) gegebenenfalls durch dieselben Gruppen wie in Gruppe a) unterbrochen sein können und wobei die Arylringe in Gruppen c) und d) weiterhin substituiert sein können mit einem oder mehreren Substituenten, ausgewählt aus Halogen, $C_1$-$C_4$-Alkyl und $C_1$-$C_{12}$-Perhalogenalkyl;

L' ausgewählt ist aus Wasserstoff, P'-B-R-B'- und P'-R-B'-, worin B, R und B' wie vorstehend definiert sind, wobei die Carbonylgruppe von B an P' gebunden ist und P' Wasserstoff, Amino, Hydroxy oder einen Rest, der eine vernetzbare Gruppe enthält, die vernetzt werden kann, wenn sie mit einem geeigneten Vernetzungsmittel coreagiert oder wenn sie mit aktinischer Strahlung bestrahlt wurde, darstellt und L" ausgewählt ist aus Wasserstoff, L"' wie nachstehend definiert, -B-R-B'-P' und -B-R-P', worin B, R, B' und P' wie vorstehend definiert sind, mit der Ausnahme, daß das Carbonyl von B' anstelle von B an P' gebunden ist und L"' eine endständige einwertige aliphatische, aromatische oder cycloaliphatische Gruppe mit bis zu 14 Kohlenstoffatomen darstellt.

**16.** Vernetztes Polymer nach Anspruch 1, wobei mindestens ein Teil des hydrophilen Modifizierungsmittels mindestens einen Teil des Vernetzungsmittels bereitstellt.

**17.** Vernetztes Polymer nach Anspruch 1, wobei das hydrophile Modifizierungsmittel an einen oder mehrere Reste $R^1$ - $R^{18}$ gebunden ist.

**18.** Vernetztes Polymer nach Anspruch 15, wobei P' eine ethylenisch ungesättigte Gruppe enthält.

**19.** Vernetztes Polymer nach Anspruch 18, wobei der Rest $R^{22}$ einen ethylenisch ungesättigten Rest enthält.

**20.** Vernetztes Polymer nach Anspruch 1, worin die hydrophile Modifizierungseinheit einen Rest eines reaktiven Monomers der Formel C darstellt, worin $R^{22}$ eine ethylenisch ungesättigte Gruppe darstellt, ausgewählt aus

ia)

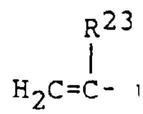

und das Ende von div, an das es gebunden ist, $-C(O)R^{24}$ darstellt, wobei die Carbonylgruppe an $R^{22}$ gebunden ist, worin $R^{23}$ Wasserstoff oder Methyl darstellt und $R^{24}$ -O- oder $-NR^{25}$ ist, wobei $R^{25}$ Wasserstoff oder Niederalkyl darstellt;
ib) $H_2C=CH$- und das Ende von div, an das es gebunden ist,

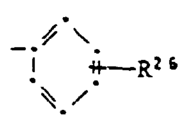

darstellt, wobei die linke Bindung an $R^{22}$ gebunden ist,
worin $R^{26}$ -O-, $-NR^{25}-$, -C(O)-,

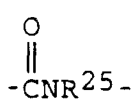

oder -C(O)O- darstellt; und
ic)

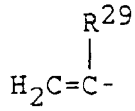

und das Ende von div, an das es gebunden ist, $-C(O)R^{28}-$ darstellt, wobei die Carbonylgruppe davon an $R^{22}$ gebunden ist, worin $R^{28}$ Niederalkylen oder $-[CH_2CH(\text{Niederalkyl})-O]_{1-5}-$ darstellt und $R^{29}$ Wasserstoff, Niederalkyl oder Cyano darstellt

und worin Hy ausgewählt ist aus

ce) Morpholino, das unsubstituiert oder mono- bis zu tetrasubstituiert ist mit Niederalkyl;

cf)

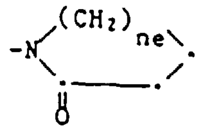

worin ne eins, zwei oder drei ist, jeder davon unsubstituiert oder mit Niederalkyl substituiert ist,

cg)

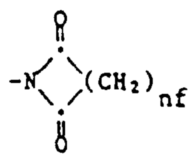

worin nf 2 oder 3 ist,

jeder davon unsubstituiert oder mit Niederalkyl substituiert ist;

ch) einer zweiwertigen Gruppe der Formel

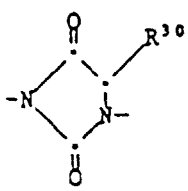 , 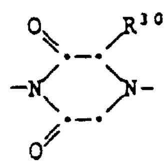 , 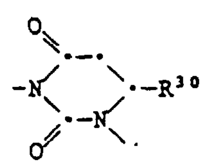

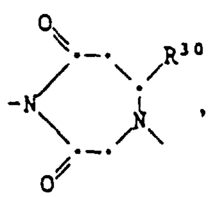 , oder 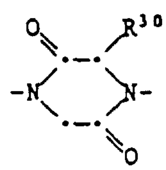

worin $R^{30}$ Wasserstoff oder Carboxy darstellt;

ci)

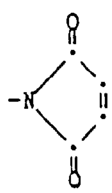

cj)

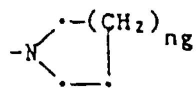

worin ng eins oder zwei ist,

wobei jeder unsubstituiert oder mit Niederalkyl substituiert ist;

ck)

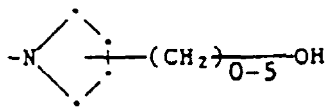

cl) einem Polyol, ausgewählt aus Polyvinylalkoholresten der Formel

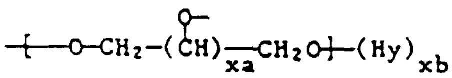

worin xa 2 - 10, vorzugsweise 3 - 4 ist und xb eine ganze Zahl von mindestens 0,5xa bis einschließlich xa + 1 ist, den cyclischen Saccharidanalogen davon, wobei die Ditetrasaccharide davon Saccharid-Saccharid-Bindungen zwischen den 1 und 4 Kohlenstoffstellungen davon aufweisen, $C(CH_2O)_4Hy_{xc}$, worin xc 0 - 3 ist und Polyhydroxy-Niederalkylenglycolresten, worin bis zu 50% der Hydroxygruppen alkoholische Wasserstoffatome fehlen.

**21.** Vernetztes Polymer nach Anspruch 20, wobei das Monomer der Formel C darstellt

aca)

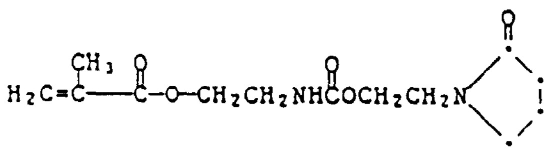

acb)

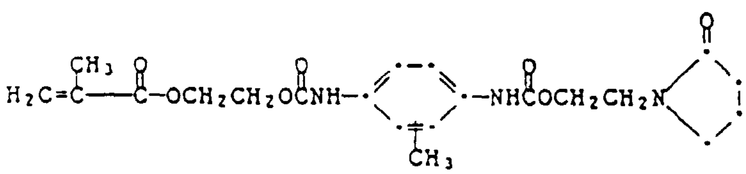

acc)

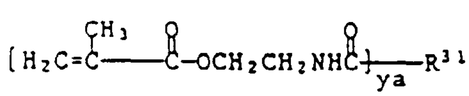

worin $R^{31}$

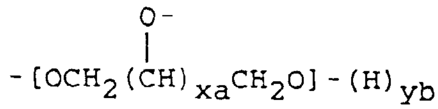

darstellt, worin xa 3 - 4 ist und yb 0 bis zu (xa + 1) ist und ya 1 bis zu (xa + 2 - yb) ist,
acd)

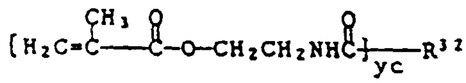

worin $R^{32}$ $C(CH_2O)_4(H)_{4-yc}$ darstellt, worin yc 1 - 4 ist;
ace) Polyvinylalkohol, wobei mindestens eins und bis zu 50% der alkoholischen Wasserstoffatome davon nicht vorliegen; oder
acf)

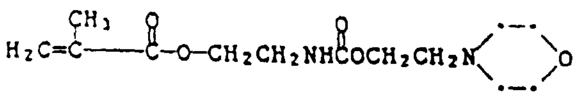 .

**22.** Vernetztes Polymer nach Anspruch 15, worin jede der Gruppen A die Formel III

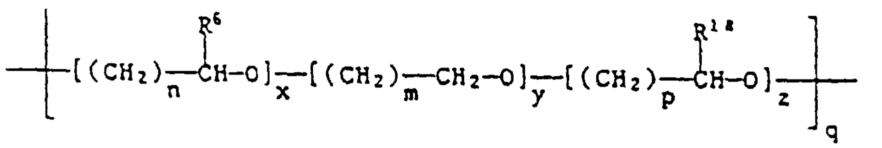 (III)

darstellt,
worin n b + 1 ist; m d + 1 ist, p f + 1 ist; n, m und p jeweils unabhängig vorzugsweise 1 - 3, bevorzugter 1 oder 2, am meisten bevorzugt 1, sind und mindestens einer der Reste $R^6$ und $R^{18}$, jedoch vorzugsweise beide, einen aliphatischen, aromatischen oder heterocyclischen Rest, vorzugsweise Alkyl mit bis zu 6 Kohlenstoffatomen, Alkyl mit bis zu 6 Kohlenstoffatomen, substituiert mit Alkoxy mit bis zu 6 Kohlenstoffatomen oder Fluor; Phenyl, das unsubstituiert oder mit Fluor, Alkoxy mit bis zu 6 Kohlenstoffatomen oder Alkyl mit bis zu 6 Kohlenstoffatomen substituiert ist; Benzyl, worin der Phenylring davon unsubstituiert oder mit Fluor, Alkoxy mit bis zu 6 Kohlenstoffatomen oder Alkyl mit bis zu 6 Kohlenstoffatomen substituiert ist; Cyclohexyl oder Oxacycloalkyl mit 4 oder 5 Ringkohlenstoffatomen darstellt.

**23.** Vernetztes Polymer nach Anspruch 15, wobei jede der Gruppen A die Formel IV

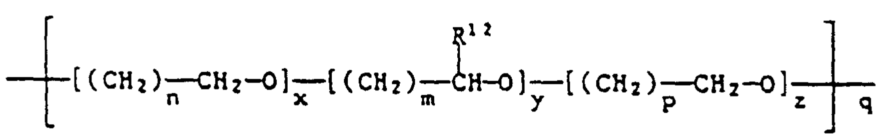 (IV)

darstellt, worin n, m, p, x, y, z und q wie in Anspruch 22 für Formel III definiert sind und $R^{12}$ vorzugsweise ausgewählt ist aus der gleichen Gruppe wie $R^6$ in Anspruch 22.

**24.** Vernetztes Polymer nach Anspruch 1, umfassend ein Polymerisationsprodukt eines Monomers der Formel VII

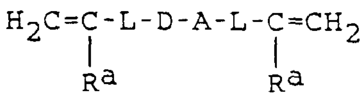

(VII)

worin $R^a$, D und A wie vorstehend definiert sind, wobei jedes $R^a$ unabhängig voneinander ist und L -B-R-B'-, -B-R- oder -R-B'- darstellt.

**25.** Vernetztes Polymer nach Anspruch 24, wobei L -BRB' darstellt, R eine zweiwertige Arylengruppe mit 6 bis 14 Kohlenstoffatomen darstellt oder eine zweiwertige $C_2$-$C_6$-Alkylenoxycarbonylamino-$C_6$-$C_{10}$-arylengruppe darstellt; D Sauerstoff darstellt und B und B' jeweils -NHCO- darstellen, worin die Stickstoffatome davon direkt an R gebunden sind.

**26.** Vernetztes Polymer nach Anspruch 24, wobei L -BR- bzw. -RB'- darstellt, R eine zweiwertige Arylengruppe mit 6 bis 14 Kohlenstoffatomen darstellt, D Sauerstoff darstellt und B und B' jeweils -NHCO- darstellen, worin die Stickstoffatome davon direkt an R gebunden sind.

**27.** Ophthalmische Vorrichtung, umfassend ein vernetztes Polymer nach Anspruch 1.

**28.** Vorrichtung nach Anspruch 27, die eine Kontaktlinse darstellt.

**Patentansprüche für folgenden Vertragsstaat : ES**

**1.** Verfahren zur Herstellung eines optisch durchsichtigen, benetzbaren, biegsamen, hydrolytisch stabilen, biologisch inerten, im wesentlichen siloxanfreien und sauerstoffdurchlässigen, vernetzten Polymers, umfassend a) Einheiten der Formel I

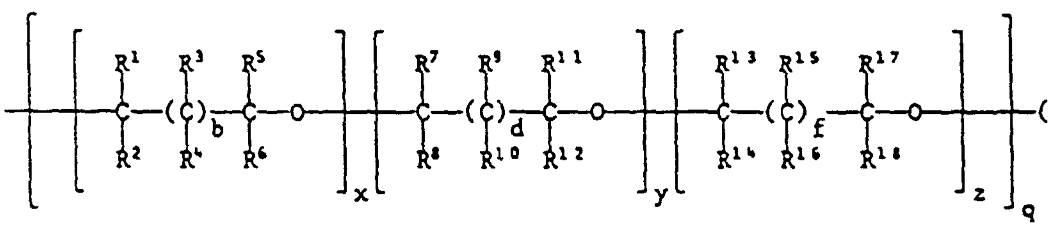

(I)

worin jeweils b, d und f unabhängig 0-4 sind; q eine Zahl von 1 bis 1000 ist; x, y und z jeweils unabhängig 0 bis zu einer Zahl, so daß (x+y+z) multipliziert mit q, 4 bis 1000 ist;

$R^1$ - $R^{18}$ jeweils ausgewählt sind aus der Gruppe, bestehend aus

(i) Wasserstoff und
(ii) einem aromatischen oder alicyclischen Rest enthaltenden Rest, wobei jeder davon nicht unterbrochen oder durch ein Heteroatom unterbrochen ist, mit der Maßgabe, daß kein Kohlenstoffatom in der Einheit geminal an Sauerstoffatome einfach gebunden ist;

oder 2 benachbarten Gruppen $R^1$ - $R^{18}$, die zusammen mit den Atomen, an die sie gebunden sind, einen 5 - 8-gliedrigen Ring bilden können;
oder $R^1$ - $R^{18}$, die zusätzlich unabhängig voneinander ausgewählt sind aus oder eine der vorstehend erwähnten Gruppen $R^1$ - $R^{18}$ einen Substituenten aufweisen, ausgewählt aus vernetzbaren Resten, mit der Maßgabe, daß keine Kohlenstoffatome, die geminal einfach gebundene Sauerstoffatome tragen, erhalten werden;
wobei das endständige Sauerstoffatom in einer Einheit der Formel I ersetzbar ist durch

$$-N(R^{19})-,$$

worin $R^{19}$ Wasserstoff, $C_1$-$C_4$-Alkyl oder Phenyl darstellt; mit der Maßgabe, daß, wenn b, d und f alle null sind,

mindestens einer der Reste $R^1$, $R^2$, $R^5$ - $R^8$, $R^{11}$ - $R^{14}$, $R^{17}$ und $R^{18}$ in mindestens einem Teil der Einheiten der Formel I nicht Wasserstoff darstellt;
und b) gegebenenfalls eine hydrophile Modifizierungseinheit in einer Menge, ausreichend, um den Wassergehalt des vernetzten Polymers oberhalb 10% zu halten;
wobei das vernetzte Polymer einen Kontraktionsberührungswinkel mit destilliertem Wasser von weniger als 60°, wenn bei 20°C gemessen wird und eine Sauerstoffpermeabilität Dk größer als das 1 - 1,5-fache des Polyhydroxyethylmethacrylats aufweist;
wobei die hydrophile Modifizierungseinheit den Rest eines reaktiven Monomers darstellt, ausgewählt aus

aa) Polyethylenglycolen der Formel

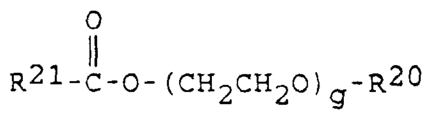

(A)

oder ab) Pyrrolidonen der Formel

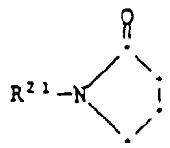

(B)

worin $R^{20}$ Wasserstoff oder $C_1$-$C_7$-Alkyl darstellt, g eine ganze Zahl von 1 - 25 ist und $R^{21}$ eine ethylenisch ungesättigte Gruppe ist;
oder ac) eine Verbindung der Formel

$$(R^{22}\text{-div})_{nz}Hy \qquad (C)$$

darstellt, worin $R^{22}$ einen polymerisierbaren oder reaktiven Rest darstellt, ausgewählt aus i) $R^{21}$, ii) Epoxygruppen, iii) Anhydriden, iv) Isocyanaten oder Isothiocyanaten, v) Aminen, vi) Säuren, vii) Estern, viii) Amiden, ix) Ethern, x) Säurehalogeniden und xi) Hydroxy;
div ausgewählt ist aus
ba) einer zweiwertigen aliphatischen Gruppe mit bis zu 25 Kohlenstoffatomen, die nicht unterbrochen, unterbrochen oder beendet ist oder unterbrochen und beendet ist mit Oxy, Carbonyloxy, Amino, Aminocarbonyl, Oxycarbonyl, Ureido, Oxycarbonylamino oder Carbonylamino;
bb) einer zweiwertigen 5 - 7-gliedrigen cycloaliphatischen und 5 - 7-gliedrigen cycloaliphatischen $C_1$-$C_{20}$-aliphatischen Gruppe, die nicht unterbrochen, unterbrochen, beendet ist oder unterbrochen und beendet ist mit einer wie vorstehend in ba) genannten Gruppen, ausgenommen, daß die Unterbrechungen nicht in den cycloaliphatischen Teilen auftreten dürfen;
bc) einer zweiwertigen Arylengruppe mit 6 - 25 Kohlenstoffatomen, die unsubstituiert oder substituiert ist mit mindestens einem Substituenten, ausgewählt aus Halogen, $C_1$-$C_4$-Alkyl und $C_1$-$C_{12}$-Perhalogenalkyl;
bd) einer zweiwertigen Aralkyl- oder Alkarylgruppe mit 7 - 25 Kohlenstoffatomen, die nicht unterbrochen oder im Alkylanteil unterbrochen oder beendet ist oder im Alkylanteil mit einer wie vorstehend in ba) genannten unterbrechenden oder beendenden Gruppe unterbrochen und beendet ist und jede der nicht unterbrochenen, unterbrochenen und beendeten Aralkyl- und Alkarylgruppen weiterhin unsubstituiert oder mit einem Substituenten, ausgewählt aus Halogen, $C_1$-$C_4$-Alkyl und $C_1$-$C_{12}$-Perhalogenalkyl substituiert ist;;
be)

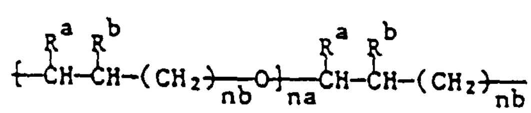

(D)

worin na eine ganze Zahl von 8-100 ist; und

bea) $R^a$ Wasserstoff darstellt, $R^b$ Methyl darstellt und nb null ist; oder

beb) $R^a$ Methyl darstellt, $R^b$ Wasserstoff darstellt und nb null ist; oder

bec) $R^a$ und $R^b$ Wasserstoff darstellen und nb eins ist;

nz eine ganze Zahl von 1 bis zur Wertigkeit von Hy ist und worin nz weniger als die Wertigkeit von Hy ist, wobei die übrigen Bindungen von Hy mit Wasserstoffatomen aufgefüllt werden;

und Hy eine hydrophile Gruppe ist, ausgewählt aus

ca) Morpholino; cyclischen Amidresten mit 5 - 7 Ringgliedern; gesättigten und ungesättigten cyclischen N,N-Diamidresten mit 5 - 6 Ringgliedern; Gruppen der Formel

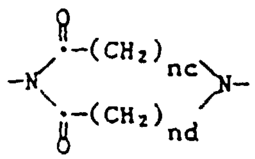

(E)

mit 6 - 7 Ringgliedern, worin nc und nd ausgewählt sind aus 0 - 2 und cyclischen Aminen mit 5 - 6 Ringgliedern;

wobei jedes unsubstituiert oder mit Hydroxy-$C_1$-$C_5$-alkyl, Carboxy oder Niederalkyl substituiert ist;

cb) Tetrahydrofurfuryl;

cc) Mono-, Di- und Polysaccharidresten, ob geradkettig oder cyclisch, deren entsprechenden Zuckeralkoholresten, Pentaerythritresten und Polyvinylalkoholresten und

cd) Polyhydroxy-$C_2$-$C_7$-alkylresten;

und wobei die reaktive Gruppe $R^{22}$ mit einer oder mehreren nichthydrophilen Modifizierungsstellen in dem Polymer coreaktiv ist, dadurch gekennzeichnet, daß das Polymer in üblicher Weise polymerisiert und vernetzt wird.

**2.** Verfahren nach Anspruch 1, wobei in der Einheit der Formel I jeder der Reste $R^1$, $R^2$, $R^5$-$R^8$, $R^{11}$-$R^{14}$, $R^{17}$ und $R^{18}$ unabhängig ausgewählt ist aus der Gruppe, bestehend aus Wasserstoff, unsubstituiertem $C_1$-$C_{16}$-Alkyl, substituiertem $C_1$-$C_{16}$-Alkyl, unsubstituiertem $C_2$-$C_{16}$-Alkenyl und substituiertem $C_2$-$C_{16}$-Alkenyl; worin die Alkyl- und Alkenylsubstituenten unabhängig ausgewählt sind aus $C_1$-$C_{16}$-Alkoxycarbonyl, $C_2$-$C_{16}$-Alkenyloxycarbonyl, Fluor, Aryl mit bis zu 10 Kohlenstoffatomen, $C_1$-$C_8$-Alkoxy, $C_2$-$C_6$-Alkanoyloxy, Aryloxy mit bis zu 10 Kohlenstoffatomen, $C_3$-$C_6$-Alkenoyloxy, Aroyloxy mit bis zu 11 Kohlenstoffatomen, $C_3$-$C_8$-Cycloalkyl, $C_3$-$C_8$-Cycloalkoxy, $C_3$-$C_8$-Cycloalkylcarbonyloxy, $C_3$-$C_8$-Cycloalkoxycarbonyl, Oxacycloalkyl mit bis zu 7 Kohlenstoffatomen, Oxacycloalkoxy mit bis zu 7 Kohlenstoffatomen, Oxacycloalkoxy-(mit bis zu 7 Kohlenstoffatomen)-carbonyl, Oxacycloalkyl-(mit bis zu 7 Kohlenstoffatomen)-carbonyloxy und Aryl (mit bis zu 10 Kohlenstoffatomen)-oxycarbonyl, wobei jeder der Alkyl- und Alkenylsubstituenten wiederum gegebenenfalls substituiert ist mit $C_1$-$C_6$-Alkyl, Fluor oder einem $C_1$-$C_6$-Alkoxy, mit der Maßgabe, daß das zuletzt genannte Alkoxy nicht an ein Kohlenstoffatom gebunden ist, das bereits mit einem weiteren Sauerstoffatom gebunden ist; $R^1$, $R^2$, $R^5$-$R^8$, $R^{11}$-$R^{14}$, $R^{17}$ und $R^{18}$ weiterhin unabhängig ausgewählt sind aus Aryl mit bis zu 10 Kohlenstoffatomen, $C_3$-$C_8$-Cycloalkyl und Oxacycloalkyl mit bis zu 7 Kohlenstoffatomen, wobei jeder unsubstituiert oder weiterhin mit einem Substituenten substituiert sein kann, ausgewählt aus der Gruppe der Substituenten für die vorstehend ausgewiesenen Alkylreste;

$R^3$, $R^4$, $R^9$, $R^{10}$, $R^{15}$ und $R^{16}$ ausgewählt sind aus der gleichen Gruppe wie vorstehend für $R^1$ ausgewiesen; und $R^3$, $R^4$, $R^9$, $R^{10}$, $R^{15}$ und $R^{16}$ weiterhin unabhängig ausgewählt sind aus ($C_1$-$C_{15}$-Alkoxy)carbonyl, $C_2$-$C_{16}$-Alkanoy1oxy, ($C_2$-$C_{16}$-Alkenyloxy)carbonyl und $C_3$-$C_{16}$-Alkenoyloxy, wobei jeder von ihnen weiterhin substituiert sein kann mit Fluor, Aryl mit bis zu 10 Kohlenstoffatomen oder $C_1$-$C_{16}$-Alkoxy und $R^3$, $R^4$, $R^9$, $R^{10}$, $R^{15}$ und $R^{16}$ des weiteren unabhängig ausgewählt sind aus Aryloxy mit bis zu 10 Kohlenstoffatomen, Cycloalkoxy mit bis zu 8 Kohlenstoffatomen, Cycloalkyl-(mit bis zu 8 Kohlenstoffatomen)-carbonyloxy, Cycloalkoxy-(mit bis zu 8 Kohlenstoffatomen)-carbonyloxy, Aroyloxy mit bis zu 11 Kohlenstoffatomen, Oxacycloalkoxy mit bis zu 7 Kohlenstoffatomen, Oxacycloalkenyloxy mit bis zu 7 Kohlenstoffatomen, Oxacycloalkoxy-(mit bis zu 7 Kohlenstoffatomen)-carbonyloxy, Oxacycloalkyl-(mit bis zu 7 Kohlenstoffatomen)-carbonyloxy, Oxacycloalkenyloxy-(mit bis zu 7 Kohlenstoffatomen)-carbonyloxy und Aryloxy-(mit bis zu 10 Kohlenstoffatomen)-carbonyloxy, wobei jeder weiterhin substituiert sein kann mit Fluor, $C_1$-$C_6$-Alkyl oder $C_1$-$C_6$-Alkoxy, mit der Maßgabe, daß ein Substituent mit einem Sauerstoffatom oder einer Carbonylgruppe davon als Bindung an den Rest des Moleküls nicht ein Substituent an dem gleichen Kohlenstoffatom, das mit einem anderen Sauerstoffatom verbunden ist, sein darf oder 2 benachbarte Gruppen, ausgewählt aus $R^1$ bis $R^{18}$, zusammen mit den Atomen, an die sie gebunden sind, einen 5 - 8-gliedrigen Cycloalkyl-, 5 - 8-gliedrigen Oxacycloalkyl- oder Bicycloalkylring bilden können, mit der Maßgabe, daß das Ringsauerstoffatom in dem so gebildeten Oxacycloalkyl nicht an ein Kohlenstoffatom gebunden ist, das an ein zweites Sauerstoffatom einfach gebunden ist; und $R^1$-$R^{18}$ weiterhin ausgewählt sind aus oder einen Substituenten daran aufweisen, ausgewählt aus vernetzbaren Resten, mit der Maßgabe, daß sich keine Kohlenstoffatome, die benachbarte einfach gebundene Sauerstoffatome tragen, ergeben.

**3.** Verfahren nach Anspruch 1, wobei das vernetzte Polymer bis zu 10%, vorzugsweise bis zu 5%, vernetzt ist.

**4.** Verfahren nach Anspruch 3, wobei das vernetzte Polymer 1 - 4%, vorzugsweise 2 - 3%, vernetzt ist.

**5.** Verfahren nach Anspruch 1, wobei der Kontraktionsberührungswinkel weniger als 50°, vorzugsweise weniger als 40°, ist.

**6.** Verfahren nach Anspruch 5, wobei der Kontraktionsberührungswinkel weniger als 25°, vorzugsweise weniger als 15°, ist.

**7.** Verfahren nach Anspruch 6, wobei der Kontraktionsberührungswinkel weniger als 10° ist.

**8.** Verfahren nach Anspruch 1, wobei die Einheit der Formel I mindestens 20% halogenfrei, vorzugsweise mindestens 25% halogenfrei, ist.

**9.** Verfahren nach Anspruch 8, wobei die Einheit der Formel I mindestens 30% halogenfrei, vorzugsweise mindestens 40% halogenfrei, ist.

**10.** Verfahren nach Anspruch 9, wobei die Einheit der Formel I im wesentlichen halogenfrei ist.

**11.** Verfahren nach Anspruch 1, wobei der Dk-Wert mindestens das 2,5-fache von jenem von Poly(2-hydroxyethyl)-methacrylat, vorzugsweise größer als das 3-fache von jenem von Polyhydroxyethylmethacrylat, ist.

**12.** Verfahren nach Anspruch 11, wobei der Dk-Wert größer als 40 [(cm·mm/s)(ml $O_2$/ml·mmHg)] ist.

**13.** Verfahren nach Anspruch 1, wobei b, d und f jeweils 0 oder 1 ist.

**14.** Verfahren nach Anspruch 13, wobei $R^1$ - $R^{18}$ unabhängig Wasserstoff, Methyl oder einen vernetzbaren Rest darstellen.

**15.** Verfahren nach Anspruch 1, umfassend die Polymerisation eines Monomers der Formel V

$$L'\text{-}D\text{-}[A\text{-}L\text{-}D]_W\text{-}A\text{-}L'' \qquad (V)$$

worin A jeweils unabhängig einen zweiwertigen Rest der Formel I darstellt, mit der Maßgabe, daß nicht alle Gruppen A in einem Polymer Homopolymere von Polyethylenglycol sein können, vorzugsweise können alle Gruppen A nicht Homopolymere von Polyethylenglycol oder Polypropylenglycol sein und mit der Maßgabe, daß das endständige Sauerstoffatom in einer oder mehreren Gruppen A durch -N($R^{19}$)- ersetzt werden kann, jedes L unabhängig ausgewählt ist aus -BRB'-; w 0 - 8 ist, jedes D unabhängig Sauerstoff oder -N($R^{19}$)- darstellt; jedes $R^{19}$ unabhängig ausgewählt ist aus Wasserstoff, $C_1$-$C_4$-Alkyl und Phenyl, jedes B und B' ausgewählt ist aus

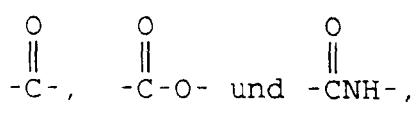

wobei die angegebene Carbonylgruppe direkt an A oder D gebunden ist;
jeder Rest R eine zweiwertige Bindungsgruppe darstellt, ausgewählt aus

a) einer zweiwertigen aliphatischen Gruppe mit bis zu 25 Kohlenstoffatomen, die unterbrochen ist durch eine unterbrechende Einheit, ausgewählt aus Oxy, Carbonyloxy, Amino, Aminocarbonyl, Oxycarbonyl, Ureido, Oxycarbonylamino und Carbonylamino;
b) einer zweiwertigen 5 - 7-gliedrigen cycloaliphatischen Gruppe und einer 5 - 7-gliedrigen cycloaliphatischen $C_5$-$C_{25}$-aliphatischen Gruppe;
c) einer zweiwertigen Arylengruppe mit 6 - 25 Kohlenstoffatomen und
d) einer zweiwertigen Aralkyl- oder Alkarylgruppe mit 7 bis 25 Kohlenstoffatomen;

wobei Gruppen b) und d) gegebenenfalls durch dieselben Gruppen wie in Gruppe a) unterbrochen sein können und wobei die Arylringe in Gruppen c) und d) weiterhin substituiert sein können mit einem oder mehreren Substituenten, ausgewählt aus Halogen, $C_1$-$C_4$-Alkyl und $C_1$-$C_{12}$-Perhalogenalkyl;

L' ausgewählt ist aus Wasserstoff, P'-B-R-B'- und P'-R-B'-, worin B, R und B' wie vorstehend definiert sind, wobei die Carbonylgruppe von B an P' gebunden ist und P' Wasserstoff, Amino, Hydroxy oder einen Rest, der eine vernetzbare Gruppe enthält, die vernetzt werden kann, wenn sie mit einem geeigneten Vernetzungsmittel coreagiert oder wenn sie mit aktinischer Strahlung bestrahlt wurde, darstellt und L" ausgewählt ist aus Wasserstoff, L"' wie nachstehend definiert, -B-R-B'-P' und -B-R-P', worin B, R, B' und P' wie vorstehend definiert sind, mit der Ausnahme, daß das Carbonyl von B' anstelle von B an P' gebunden ist und L"' eine endständige einwertige aliphatische, aromatische oder cycloaliphatische Gruppe mit bis zu 14 Kohlenstoffatomen darstellt.

**16.** Verfahren nach Anspruch 1, wobei mindestens ein Teil des hydrophilen Modifizierungsmittels mindestens einen Teil des Vernetzungsmittels bereitstellt.

**17.** Verfahren nach Anspruch 1, wobei das hydrophile Modifizierungsmittel an einen oder mehrere Reste $R^1$ - $R^{18}$ gebunden ist.

**18.** Verfahren nach Anspruch 15, wobei P' eine ethylenisch ungesättigte Gruppe enthält.

**19.** Verfahren nach Anspruch 18, wobei der Rest $R^{22}$ einen ethylenisch ungesättigten Rest enthält.

**20.** Verfahren nach Anspruch 1, worin die hydrophile Modifizierungseinheit einen Rest eines reaktiven Monomers der Formel C darstellt, worin $R^{22}$ eine ethylenisch ungesättigte Gruppe darstellt, ausgewählt aus

ia)

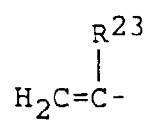

und das Ende von div, an das es gebunden ist, -C(O)$R^{24}$ darstellt, wobei die Carbonylgruppe an $R^{22}$ gebunden ist, worin $R^{23}$ Wasserstoff oder Methyl darstellt und $R^{24}$ -O- oder -$NR^{25}$ ist, wobei $R^{25}$ Wasserstoff oder Niederalkyl darstellt;
ib) $H_2C$=CH- und das Ende von div, an das es gebunden ist,

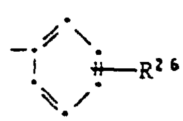

darstellt, wobei die linke Bindung an $R^{22}$ gebunden ist,
worin $R^{26}$ -O-, -$NR^{25}$-, -C(O)-,

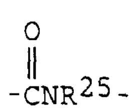

oder -C(O)O- darstellt; und

ic)

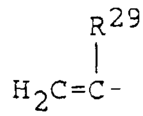

und das Ende von div, an das es gebunden ist, -C(O)$R^{28}$- darstellt, wobei die Carbonylgruppe davon an $R^{22}$ gebunden ist, worin $R^{28}$ Niederalkylen oder -[$CH_2CH$(Niederalkyl)-O]$_{1-5}$- darstellt und $R^{29}$ Wasserstoff, Niederalkyl oder Cyano darstellt

und worin Hy ausgewählt ist aus

ce) Morpholino, das unsubstituiert oder mono- bis zu tetrasubstituiert ist mit Niederalkyl;

cf)

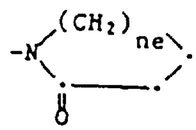

worin ne eins, zwei oder drei ist, jeder davon unsubstituiert oder mit Niederalkyl substituiert ist,

cg)

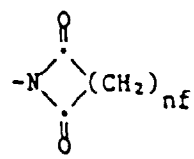

worin nf 2 oder 3 ist,

jeder davon unsubstituiert oder mit Niederalkyl substituiert ist;

ch) einer zweiwertigen Gruppe der Formel

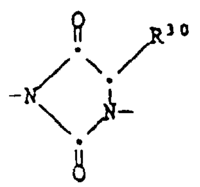 , 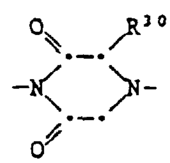 , 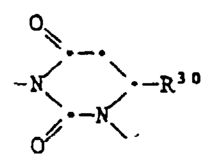

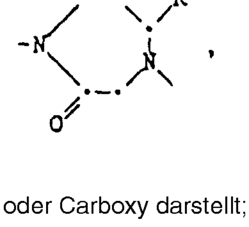 , oder 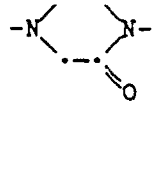

worin $R^{30}$ Wasserstoff oder Carboxy darstellt;

ci)

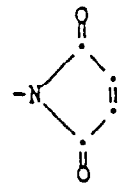

cj)

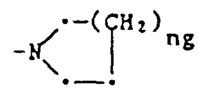

worin ng eins oder zwei ist,
wobei jeder unsubstituiert oder mit Niederalkyl substituiert ist;

ck)

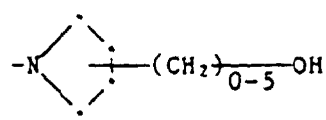

cl) einem Polyol, ausgewählt aus Polyvinylalkoholresten der Formel

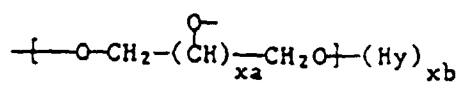

worin xa 2 - 10, vorzugsweise 3 - 4 ist und xb eine ganze Zahl von mindestens 0,5xa bis einschließlich xa + 1 ist, den cyclischen Saccharidanalogen davon, wobei die Ditetrasaccharide davon Saccharid-Saccharid-Bindungen zwischen den 1 und 4 Kohlenstoffstellungen davon aufweisen, $C(CH_2O)_4Hy_{xc}$, worin xc 0 - 3 ist und Polyhydroxy-Niederalkylenglycolresten, worin bis zu 50% der Hydroxygruppen alkoholische Wasserstoffatome fehlen.

**21.** Verfahren nach Anspruch 20, wobei das Monomer der Formel C darstellt

aca)

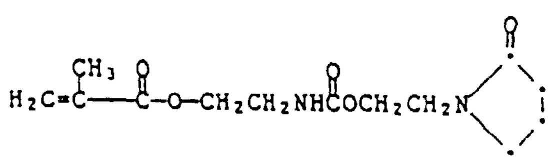

acb)

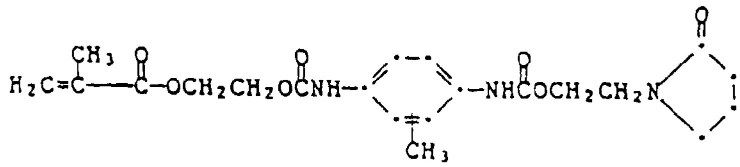

acc)

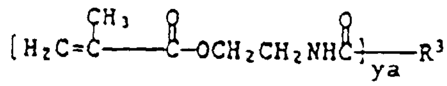

worin $R^{31}$

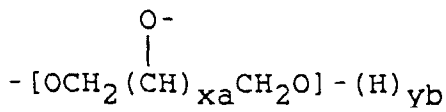

darstellt, worin xa 3 - 4 ist und yb 0 bis zu (xa + 1) ist und ya 1 bis zu (xa + 2 - yb) ist,
acd)

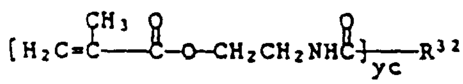

worin $R^{32}$ $C(CH_2O)_4(H)_{4-yc}$ darstellt, worin yc 1 - 4 ist;
ace) Polyvinylalkohol, wobei mindestens eins und bis zu 50% der alkoholischen Wasserstoffatome davon nicht vorliegen; oder
acf)

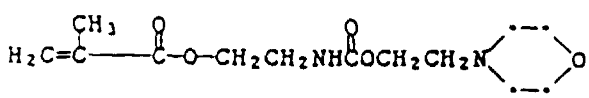 .

**22.** Verfahren nach Anspruch 15, worin jede der Gruppen A die Formel III

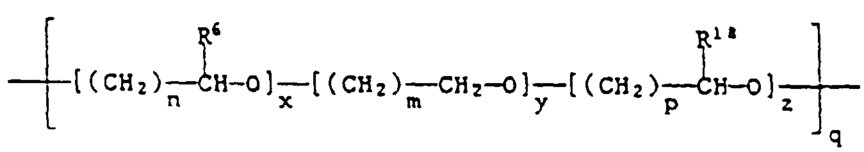 (III)

darstellt,

worin n b + 1 ist; m d + 1 ist, p f + 1 ist; n, m und p jeweils unabhängig vorzugsweise 1 - 3, bevorzugter 1 oder 2, am meisten bevorzugt 1, sind und mindestens einer der Reste $R^6$ und $R^{18}$, jedoch vorzugsweise beide, einen aliphatischen, aromatischen oder heterocyclischen Rest, vorzugsweise Alkyl mit bis zu 6 Kohlenstoffatomen, Alkyl mit bis zu Kohlenstoffatomen, substituiert mit Alkoxy mit bis zu 6 Kohlenstoffatomen oder Fluor; Phenyl, das unsubstituiert oder mit Fluor, Alkoxy mit bis zu 6 Kohlenstoffatomen oder Alkyl mit bis zu 6 Kohlenstoffatomen substituiert ist; Benzyl, worin der Phenylring davon unsubstituiert oder mit Fluor, Alkoxy mit bis zu 6 Kohlenstoffatomen oder Alkyl mit bis zu 6 Kohlenstoffatomen substituiert ist; Cyclohexyl oder Oxacycloalkyl mit 4 oder 5 Ringkohlenstoffatomen darstellt.

**23.** Verfahren nach Anspruch 15, wobei jede der Gruppen A die Formel IV

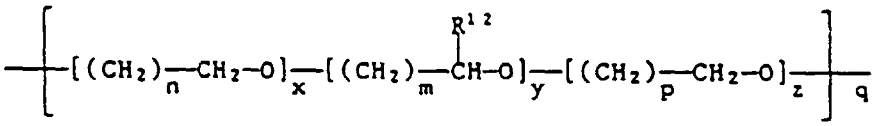

(IV)

darstellt, worin n, m, p, x, y, z und q wie in Anspruch 22 für Formel III definiert sind und $R^{12}$ vorzugsweise ausgewählt ist aus der gleichen Gruppe wie $R^6$ in Anspruch 22.

**24.** Verfahren nach Anspruch 1, umfassend die Polymerisation eines Monomers der Formel VII

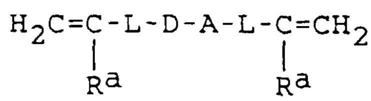

(VII)

worin $R^a$, D und A wie vorstehend definiert sind, wobei jedes $R^a$ unabhängig voneinander ist und L -B-R-B'-, -B-R- oder -R-B'- darstellt.

**25.** Verfahren nach Anspruch 24, wobei L -BRB' darstellt, R eine zweiwertige Arylengruppe mit 6 bis 14 Kohlenstoffatomen darstellt oder eine zweiwertige $C_2$-$C_6$-Alkylenoxycarbonylamino-$C_6$-$C_{10}$-arylengruppe darstellt; D Sauerstoff darstellt und B und B' jeweils -NHCO- darstellen, worin die Stickstoffatome davon direkt an R gebunden sind.

**26.** Verfahren nach Anspruch 24, wobei L -BR- bzw. -RB'- darstellt, R eine zweiwertige Arylengruppe mit 6 bis 14 Kohlenstoffatomen darstellt, D Sauerstoff darstellt und B und B' jeweils -NHCO- darstellen, worin die Stickstoffatome davon direkt an R gebunden sind.

**27.** Ophthalmische Vorrichtung, umfassend ein vernetztes Polymer nach Anspruch 1.

**28.** Vorrichtung nach Anspruch 27, die eine Kontaktlinse darstellt.

## Revendications

### Revendications pour les Etats contractants suivants : AT, BE, CH, LI, DE, FR, GB, GR, IT, LU, NL, SE

**1.** Polymère réticulé optiquement clair, humidifiable, flexible, hydrolytiquement stable, biologiquement inerte, sensiblement dépourvu de siloxane et perméable à l'oxygène comprenant a) des unités de formule I

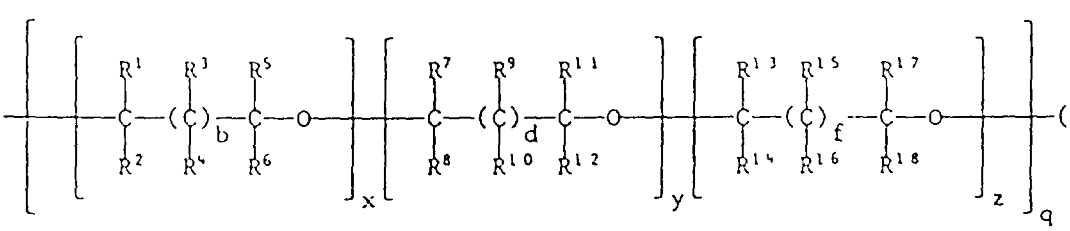

(I)

dans laquelle chacune des lettres b, d et f vaut indépendamment 0 à 4; q est un nombre compris entre 1 et 1000; chacune des lettres x, y et z représente indépendamment 0 ou un nombre tel que (x+y+z) multiplié par q vaut de 4 à 1000;

chaque radical $R^1$-$R^{18}$ est choisi dans le groupe constitué par

(i) l'hydrogène, et
(ii) un radical contenant un noyau aromatique ou alicyclique, chaque cycle étant interrompu ou non interrompu par un hétéroatome à condition qu'aucun atome de carbone dans ladite unité ne soit relié de façon géminée par une liaison simple à des atomes d'oxygène;

ou deux groupes $R^1$-$R^{18}$ adjacents quelconques, avec les atomes auxquels ils sont attachés, peuvent former un noyau à 5 à 8 chaînons;
ou bien $R^1$-$R^{18}$ sont en outre indépendamment choisis parmi, ou les groupes $R^1$-$R^{18}$ mentionnés ci-dessus ont un substituant choisi parmi des parties réticulables, à condition qu'il n'en résulte aucun atome de carbone portant des atomes d'oxygène reliés par une liaison simple de façon géminée;
l'atome d'oxygène terminal dans une unité de formule I quelconque étant remplaçable par -N($R^{19}$)-, où $R^{19}$ est un hydrogène, un alkyle en $C_1$ à $C_4$ ou un phényle; sous réserve que lorsque b, d et f valent tous 0, au moins un des radicaux $R^1$, $R^2$, $R^5$-$R^8$, $R^{11}$-$R^{14}$, $R^{17}$ et $R^{18}$ dans au moins une partie des unités de formule I est différent d'un hydrogène;
et b) facultativement une unité modificatrice hydrophile en une quantité suffisante pour maintenir la teneur en eau dudit polymère réticulé au-delà de 10%;
ledit polymère réticulé ayant un angle de contact récessif avec l'eau distillée inférieur à 600 lorsqu'on mesure à 20°C et une perméabilité à l'oxygène Dk supérieure à 1-1,5 fois celle du méthacrylate de polyhydroxyéthyle;
ladite unité modificatrice hydrophile étant le résidu d'un monomère réactif choisi parmi

aa) les polyéthylène glycols de formule

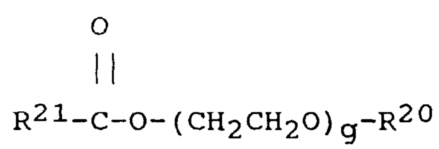

(A)

ou ab) les pyrrolidones de formule

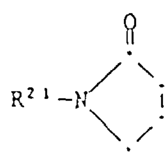

(B)

dans laquelle $R^{20}$ est un hydrogène ou un alkyle en $C_1$ à $C_7$, g est un nombre entier allant de 1 à 25, et $R^{21}$ est un groupe éthyléniquement insaturé;
ou ac) un composé de formule

$$(R^{22}\text{-div})_{nz}Hy \qquad (C)$$

dans laquelle $R^{22}$ est une partie polymérisable ou réactive choisi parmi i) $R^{21}$, ii) les groupes époxy, iii) les anhydrides, iv) les isocyanates ou les isothiocyanates, v) les amines, vi) les acides, vii) les esters, viii) les amides, ix) les éthers, x) les halogénures d'acide, et xi) hydroxy;
div est choisi parmi
ba) un groupe aliphatique bivalent ayant jusqu'à 25 atomes de carbone, qui est ininterrompu, non interrompu, interrompu ou terminé, ou interrompu et terminé par un oxy, carbonyloxy, amino, aminocarbonyle, oxycarbonyle, uréido, oxycarbonylamino ou carbonylamino;
bb) un groupe cycloaliphatique à 5 à 7 chaînons ou un groupe cycloaliphatique à 5 à 7 chaînons-aliphatique en $C_1$ à $C_{20}$ bivalent, qui est ininterrompu, interrompu, terminé ou interrompu et terminé comme

dans le groupe ba) ci-dessus sauf que lesdites interruptions ne peuvent intervenir dans lesdites parties cycloaliphatiques. bc) un groupe arylène bivalent ayant de 6 à 25 atomes de carbone qui est non substitué ou substitué par au moins un substituant choisi parmi halogène, alkyle en $C_1$ à $C_4$, perhaloalkyle en $C_1$ à $C_{12}$;

bd) un groupe aralkyle ou alkaryle bivalent ayant de 7 à 25 atomes de carbone qui est interrompu ou interrompu dans la partie alkyle, ou terminé, ou interrompu dans la partie alkyle et terminé par un groupe interrupteur ou de terminaison tel que mentionné en ba) ci-dessus, et chacun desdits groupes aralkyle et alkaryle ininterrompu, interrompus ou terminés est en outre non substitué ou substitué par un substituant choisi parmi halogène, alkyle en $C_1$ à $C_4$, perhaloalkyle en $C_1$ à $C_{12}$;

be)

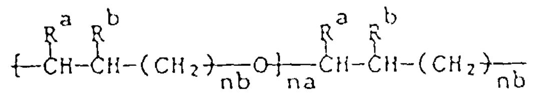

(D)

où na est un nombre entier compris entre 8 et 100; et

bea) $R^a$ est un hydrogène, $R^b$ est un méthyle et nb est zéro; ou

beb) $R^a$ est un méthyle, $R^b$ est un hydrogène, et nb vaut zéro; ou

bec) $R^a$ et $R^b$ représentent un hydrogène et nb vaut un;

nz est un nombre entier compris entre 1 et la valence d'Hy et où nz est inférieur à la valence d'Hy, les valences restantes d'Hy étant absorbées par des hydrogènes;

et Hy est un groupe hydrophile choisi parmi

ca) un morpholino; des radicaux amide cycliques à 5 à 7 chaînons ; des radicaux N,N-diamide cycliques saturés et insaturés à 5 à 6 chaînons dans le cycle; des groupes de formule

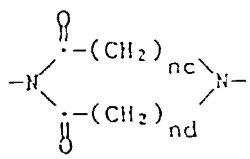

(E)

ayant de 6 à 7 chaînons dans lesquels nc et nd sont choisis entre 0 et 2; et des amines cycliques de 5 à 6 chaînons;

chacun étant non substitué ou substitué par un hydroxyalkyle en $C_1$ à $C_5$, un carboxy ou un alkyle inférieur;

cb) un tétrahydrofurfuryle;

cc) des radicaux mono-, di- et polysaccharidiques, qu'ils soient à chaîne droite ou cyclique, leurs radicaux alcools saccharidiques correspondants, les radicaux pentaérythritol et les radicaux alcool polyvinyliques;

et cd) les radicaux polyhydroxy-alkyle en $C_2$ à $C_7$; et ledit groupe réactif $R^{22}$ est coréactif avec un ou plusieurs sites modificateurs non-hydrophiles dans ledit polymère.

**2.** Polymère réticulé de la revendication 1, dans lequel chacun des radicaux $R^1$, $R^2$, $R^5$-$R^8$, $R^{11}$-$R^{14}$, $R^{17}$ et $R^{18}$ est indépendamment choisi dans le groupe constitué par un hydrogène, un alkyle en $C_1$ à $C_{16}$ non-substitué; un alkyle en $C_1$ à $C_{16}$ substitué; un alcényle en $C_2$ à $C_{16}$ non substitué; et un alcényle en $C_2$ à $C_{16}$ substitué; où les substituants alkyle et alcényle sont indépendamment choisis parmi alcoxy en $C_1$ à $C_{16}$-carbonyle, alcényloxy en $C_2$ à $C_{16}$-carbonyle, fluoro, aryle ayant jusqu'à 10 atomes de carbone, alcoxy en $C_1$ à $C_8$, alcanoyloxy en $C_2$ à $C_6$, aryloxy ayant jusqu'à 10 atomes de carbone, alcénoyloxy en $C_3$ à $C_6$, aroyloxy ayant jusqu'à 11 atomes de carbone, cycloalkyle en $C_3$ à $C_8$, cycloalcoxy en $C_3$ à $C_8$, cycloalkyle en $C_3$ à $C_8$-carbonyloxy, cycloalcoxy en $C_3$ à $C_8$-carbonyle, oxycycloalkyle ayant jusqu'à 7 atomes de carbone, oxacycloalcoxy ayant jusqu'à 7 atomes de carbone, oxacycloalcoxy (jusqu'à 7 atomes de carbone)-carbonyle, oxacycloalkyl (jusqu'à 7 atomes de carbone)-carbonyloxy et aryl (jusqu'à 10 atomes de carbone)-oxycarbonyle, chacun desdits substituants alkyle et alcényle étant, à son tour, facultativement substitué par un alkyle en $C_1$ à $C_6$, un fluoro ou un alcoxy en $C_1$ à $C_6$, à condition que ledit alcoxy mentionné en dernier ne soit pas lié à un atome de carbone déjà lié à un autre atome d'oxygène; $R^1$, $R^2$, $R^5$-$R^8$, $R^{11}$-$R^{14}$, $R^{17}$ et $R^{18}$ étant encore indépendamment choisi parmi un aryle ayant jusqu'à 10 atomes de

carbone, un cycloalkyle en $C_3$ à $C_8$, et un oxacycloalkyle ayant jusqu'à 7 atomes de carbone, dont chacun peut être non-substitué ou encore substitué par un substituant choisi dans le groupe des substituants dudit alkyle exposé ci-dessus;
$R^3$, $R^4$, $R^9$, $R^{10}$, $R^{15}$ et $R^{16}$ sont choisis dans le même groupe que celui qui est présenté ci-dessus pour $R^1$; et $R^3$, $R^4$, $R^9$, $R^{10}$, $R^{15}$ et $R^{16}$ sont indépendamment choisis parmi (alcoxy en $C_1$ à $C_{15}$)-carbonyle, alcanoyloxy en $C_2$ à $C_{16}$ (alcényloxy en $C_2$ à $C_{16}$)-carbonyle et alcénoyloxy en $C_3$ à $C_{16}$, dont chacun peut être encore substitué par un fluoro, un aryle ayant jusqu'à 10 atomes de carbone, ou un alcoxy en $C_1$ à $C_{16}$, et $R^3$, $R^4$, $R^9$, $R^{10}$, $R^{15}$ et $R^{16}$ sont encore indépendamment choisis parmi aryloxy ayant jusqu'à 10 atomes de carbone, cycloalcoxy ayant jusqu'à 8 atomes de carbone, cycloalkyl (ayant jusqu'à 8 atomes de carbone)-carbonyloxy, cycloalcoxy (ayant jusqu'à 8 atomes de carbone)-carbonyloxy, aroyloxy ayant jusqu'à 11 atomes de carbone, oxacycloalcoxy ayant jusqu'à 7 atomes de carbone, oxacycloalcényloxy ayant jusqu'à 7 atomes de carbone, oxacycloalcoxy (jusqu'à 7 atomes de carbone)-carbonyloxy, oxacycloalkyl (jusqu'à 7 atomes de carbone)-carbonyloxy, oxacycloalcényloxy (ayant jusqu'à 16 atomes de carbone)-carbonyloxy, et aryloxy (ayant jusqu'à 10 atomes de carbone)-carbonyloxy, chacun d'entre eux pouvant encore être substitué par un fluoro, un alkyle en $C_1$ à $C_6$ ou un alcoxy en $C_1$ à $C_6$, à condition que tout substituant ayant un atome d'oxygène ou un groupe carbonyle comme liaison au reste de la molécule peut ne pas être un substituant sur le même atome de carbone que celui qui est lié à un autre atome d'oxygène, ou que deux groupes adjacents choisis parmi $R^1$ à $R^{18}$, avec les atomes de carbone auxquels ils sont attachés, peuvent former un cycloalkyle à 5 à 8 chaînons, un noyau oxacycloalkyle ou bicycloalkyle à 5 à 8 chaînons à condition que le noyau oxygène dans ledit oxacycloalkyle ainsi formé ne soit pas lié à un atome de carbone qui est lié de façon simple à un second atome d'oxygène ; et que lesdits $R^1$-$R^{18}$ sont choisis parmi ou portent un substituant choisi parmi les parties réticulables, à condition qu'aucun atome de carbone portant des atomes d'oxygène liés de façon géminée par une liaison simple n'en résulte.

**3.** Polymère réticulé de la revendication 1 qui est réticulé jusqu'à 10%, de préférence jusqu'à 5%.

**4.** Polymère réticulé de la revendication 3 qui est réticulé de 1 à 4%, de préférence de 2 à 3%.

**5.** Polymère réticulé de la revendication 1, dans lequel ledit angle de contact récessif est inférieur à 50°, de préférence inférieur à 40°.

**6.** Polymère réticulé de la revendication 5, dans lequel ledit angle de contact récessif est inférieur à 25°, de préférence inférieur à 15°.

**7.** Polymère réticulé de la revendication 6, dans lequel ledit angle de contact récessif est inférieur à 10°.

**8.** Polymère réticulé de la revendication 1, dans lequel ladite unité de formule I est à au moins 20% dépourvue d'halogène, de préférence à au moins 25% dépourvue d'halogène.

**9.** Polymère réticulé de la revendication 8, dans lequel ladite unité de formule I est à au moins 30% dépourvue d'halogène, de préférence est à au moins 40% dépourvue d'halogène.

**10.** Polymère réticulé de la revendication 9, dans lequel ladite unité de formule I est sensiblement dépourvue d'halogène.

**11.** Polymère réticulé de la revendication 1, dans lequel ladite valeur de Dk est égale à au moins 2,5 fois que celle du méthacrylate de poly(2-hydroxyéthyle), de préférence supérieure à 3 fois celle du méthacrylate de polyhydroxyéthyle.

**12.** Polymère réticulé de la revendication 11, dans lequel ladite valeur de Dk est supérieure à 40 [(cm.mm/s) (ml $O_2$/ml.mmHg)].

**13.** Polymère réticulé de la revendication 1, dans lequel chacun des b, d et f vaut 0 ou 1.

**14.** Polymère réticulé de la revendication 13, dans lequel $R^1$-$R^{18}$ représente indépendamment un hydrogène, un méthyle ou une partie réticulable.

**15.** Polymère réticulé de la revendication 1 comprenant un produit de polymérisation d'un monomère de formule V

$$L'\text{-}D\text{-}[A\text{-}L\text{-}D]_W\text{-}A\text{-}L'' \qquad (V)$$

dans laquelle chaque A représente indépendamment une partie bivalente de formule I, à condition que tous les groupes A d'un polymère donné ne puissent pas être des homopolymères de polyéthylène glycol, de préférence, la totalité des groupes A ne peut représenter des homopolymères de polyéthylène glycol ou de polypropylène glycol, et à condition que l'atome d'oxygène terminal dans un quelconque ou plusieurs groupes A puisse être remplacé par

$-N(R^{19})-$, chaque L est indépendamment choisi parmi -BRB'-; w vaut de O à 8; chaque D représente indépendamment un oxygène ou $-N(R^{19})-$; chaque $R^{19}$ est indépendamment choisi parmi un hydrogène, un alkyle en $C_1$ à $C_4$ et un phényle; chaque B et B' étant choisi parmi

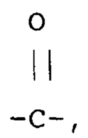 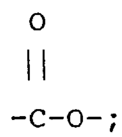 et 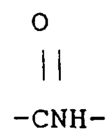

le groupe carbonyle mentionné étant lié directement à A ou D;
chaque R est un groupe de liaison bivalent de préférence choisi parmi:

a) un groupe aliphatique bivalent ayant jusqu'à 25 atomes de carbone, qui peut être interrompu par une unité d'interruption choisie parmi oxy, carbonyloxy, amino, aminocarbonyle, oxycarbonyle, uréido, oxycarbonylamino et carbonylamino;
b) un groupe cycloaliphatique à 5 à 7 chaînons bivalent et un groupe cycloaliphatique à 5 à 7 chaînons -aliphatique en $C_5$ à $C_{25}$;
c) un groupe arylène bivalent ayant de 6 à 25 atomes de carbone ; et
d) un groupe aralkyle ou alkaryle bivalent ayant de 7 à 25 atomes de carbone;

où les groupes b) et d) peuvent être facultativement interrompus par les mêmes groupes que dans le groupe a), et où les noyaux aryle dans les groupes c) et d) peuvent être en outre substitués par un ou plusieurs substituants choisis parmi halogène, alkyle en $C_1$ à $C_4$ et perhaloalkyle en $C_1$ à $C_{12}$;

L' est choisi parmi hydrogène, P'-B-R-B'- et P'-R-B'-, où B, R et B' sont tels que définis ci-dessus, le groupe carbonyle de B étant lié à P', et P' est un hydrogène, un amino, un hydroxy ou une fraction contenant un groupe réticulable qui peut être réticulée lorsqu'on le fait co-réagir avec un agent réticulant approprié ou lorsqu'on l'irradie avec un rayonnement actinique; et

L" est choisi parmi l'hydrogène, L"' tel que défini ci-dessous, représente -B-R-B'-P' et -B-R-P', où B, R, B' et P' sont tels que définis ci-dessus sauf que le groupe carbonyle de B' au lieu de B est lié à P'; et L"' est un groupe aliphatique, aromatique ou cycloaliphatique monovalent terminal ayant jusqu'à 14 atomes de carbone.

**16.** Polymère réticulé de la revendication 1, dans lequel au moins une partie du modificateur hydrophile fournit au moins une partie de ladite réticulation.

**17.** Polymère réticulé de la revendication 1, dans lequel ledit modificateur hydrophile est lié à un ou plusieurs des radicaux $R^1$-$R^{18}$.

**18.** Polymère réticulé de la revendication 15, dans lequel P' contient un groupe éthyléniquement insaturé.

**19.** Polymère réticulé de la revendication 18, dans lequel ledit $R^{22}$ est un radical éthyléniquement insaturé.

**20.** Polymère réticulé de la revendication 1, dans lequel ladite unité modificatrice hydrophile est un résidu de monomère réactif de formule C dans laquelle $R^{22}$ est un groupe éthyléniquement insaturé choisi parmi

ia)

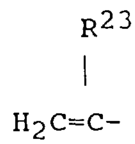

et l'extrémité de div à laquelle il est lié est $-C(O)R^{24}$, le carbonyle étant lié à $R^{22}$, où $R^{23}$ est un hydrogène ou un méthyle et $R^{24}$ représente -O-, ou $-NR^{25}$, $R^{25}$ étant un hydrogène ou un alkyle inférieur;

ib) $H_2C{=}CH-$ et l'extrémité de div à laquelle il est lié est

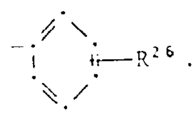

la liaison à gauche étant liée à $R^{22}$, où $R^{26}$ représente -O-, $-NR^{25}-$, -C(O)-,

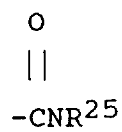 ou $-C(O)O-$;

et

ic)

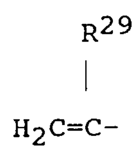

et l'extrémité de div à laquelle il est lié représente $-C(O)R^{28}-$, dont le carbonyle est lié à $R^{22}$ où $R^{28}$ est un alkylène inférieur ou un $-[CH_2CH(\text{alkyle inférieur})-O]_{1-5}-$ et $R^{29}$ est un hydrogène, un alkyle inférieur ou un cyano;

et comporte Hy choisi parmi

ce) un morpholino qui est non substitué ou de mono- à tétra-substitué par un alkyle inférieur;

cf)

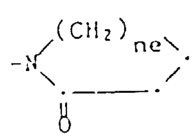

où ne vaut un, deux ou trois, chacun étant non substitué ou substitué par un alkyle inférieur;

cg)

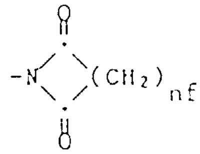

où nf vaut 2 ou 3, de préférence 2, chacun étant non substitué ou substitué par un alkyle inférieur;

ch) un groupe bivalent de formule

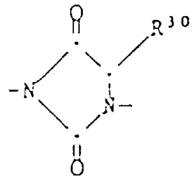
,
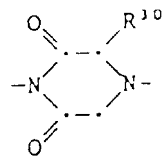
,
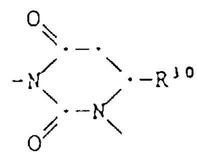

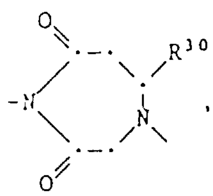
,
ou
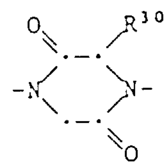

où $R^{30}$ est un hydrogène ou un carboxy;

ci)

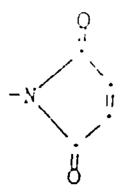

cj)

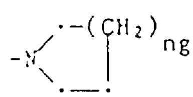

où ng vaut un ou deux, chacun étant non substitué ou substitué par un alkyle inférieur;

ck)

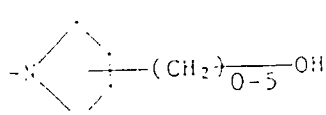
;

cl) un polyol choisi parmi les radicaux alcool polyvinyliques de la formule

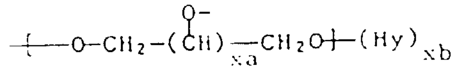

dans laquelle xa vaut 2 à 20, de préférence 3 à 4, et xb est un nombre entier compris entre au moins 0,5xa et xa + 1 compris, leurs analogues saccharides et cycliques, leurs di-tétrasaccharides, ayant des liaisons saccharide-saccharide entre leurs positions de carbone 1 et 4, $C(CH_2O)_4Hy_{xc}$ où xc vaut 0-3, et les radicaux polyhydroxy-alkylène glycol inférieur dans lesquels jusqu'à 50% des groupes hydroxy sont dépourvus de leurs hydrogènes alcooliques.

**21.** Polymère réticulé de la revendication 20, dans lequel le monomère de formule C est

aca)

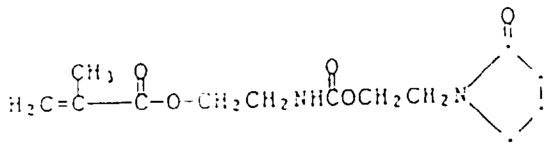

,

acb)

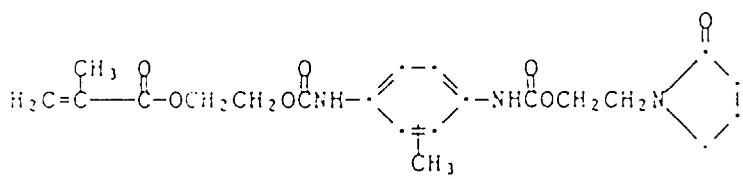

,

acc)

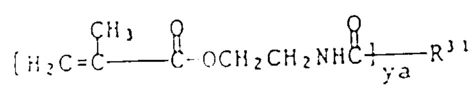

dans laquelle $R^{31}$ représente

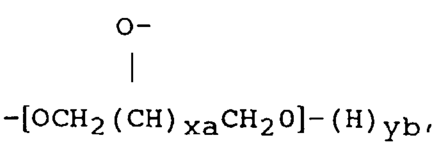

dans laquelle xa vaut 3-4 et yb vaut de 0 à (xa+1), et ya vaut de 1 à (xa+2-yb),
acd)

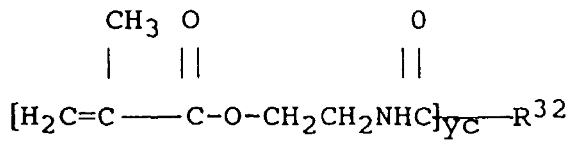

dans laquelle $R^{32}$ représente $C(CH_2O)_4(H)_{4\text{-}yc}$ dans laquelle yc vaut de 1 à 4;
ace) un alcool polyvinylique ayant au moins un et jusqu'à 50% de ses hydrogènes alcooliques absents; ou
acf)

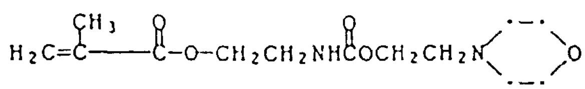 .

**22.** Polymère réticulé de la revendication 15, dans lequel chacun des groupes A est de formule III

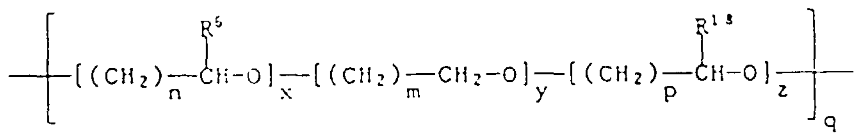 (III)

dans laquelle n vaut b+1; m vaut d+1, p vaut f+1; n, m et p valant chacun indépendamment de préférence de 1 à 3, de préférence 1 ou 2, ou mieux encore 1; et au moins un des radicaux $R^6$ et $R^{18}$, mais de préférence les deux, est un radical aliphatique, aromatique, ou hétérocyclique, de préférence un alkyle ayant jusqu'à 6 atomes de carbone, un alkyle ayant jusqu'à 6 atomes de carbone substitué par un alcoxy ayant jusqu'à 6 atomes de carbone ou un fluoro; un phényle qui est non substitué ou substitué par un fluoro, un alcoxy ayant jusqu'à 6 atomes de carbone ou un alkyle ayant jusqu'à 6 atomes de carbone; un benzyle dont le noyau phényle est non substitué ou substitué par un fluoro, un alcoxy ayant jusqu'à 6 atomes de carbone, un alkyle ayant jusqu'à 6 atomes de carbone, un cyclohexyle ou un oxacycloalkyle de 4 ou 5 atomes de carbone dans le cycle.

**23.** Polymère réticulé de la revendication 15, dans lequel chacun des groupes A est de formule IV

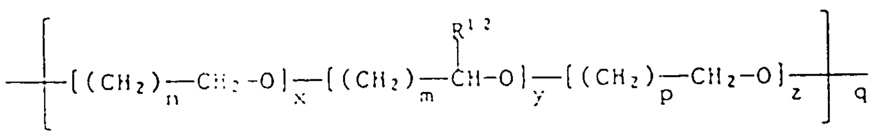 (IV)

dans laquelle n, m, p, x, y, z et q sont tels que définis dans la revendication 22 pour la formule III et $R^{12}$ est de préférence choisi dans le même groupe que $R^6$ dans la revendication 22.

**24.** Polymère réticulé de la revendication 1 comprenant un produit de polymérisation d'un monomère de formule VII

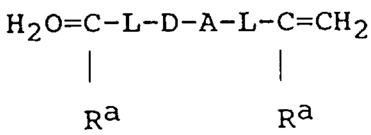

(VII)

dans laquelle $R^a$, D et A sont tels que définis ci-dessus, chaque $R^a$ étant indépendant l'un de l'autre; et L représente -B-R-B'-, -B-R- ou -R-B'-.

**25.** Polymère réticulé de la revendication 24, dans lequel L vaut -BRB', R est un groupe arylène bivalent de 6 à 14 atomes de carbone, ou est un groupe alkylène en $C_2$ à $C_6$-oxycarbonylamino-arylène en $C_6$ à $C_{10}$ bivalent; D est un oxygène, et B et B' représentent chacun -NHCO- dont les atomes d'azote sont directement liés à R.

**26.** Polymère réticulé de la revendication 24 dans lequel L rerpésente -BR- ou -RB'-, respectivement, R est un arylène bivalent de 6 à 14 atomes de carbone, D est un oxygène et B et B' représentent chacun -NHCO-, dont les atomes d'azote sont directement liés à R.

**27.** Dispositif ophtalmique comprenant un polymère réticulé de la revendication 1.

**28.** Dispositif de la revendication 27 qui est une lentille de contact.

**Revendications pour l'Etat contractant suivant : ES**

**1.** Procédé de préparation d'un polymère réticulé optiquement clair, humidifiable, flexible, hydrolytiquement stable, biologiquement inerte, sensiblement dépourvu de siloxane et perméable à l'oxygène comprenant a) des unités de formule I

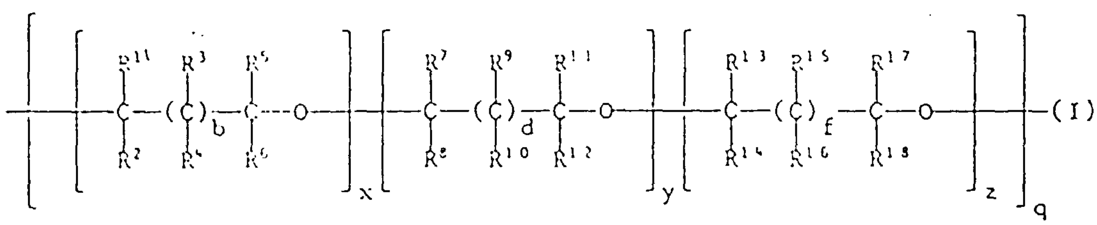

dans laquelle chacune des lettres b, d et f vaut indépendamment 0 à 4; q est un nombre compris entre 1 et 1000; chacune des lettres x, y et z représente indépendamment 0 ou un nombre tel que (x+y+z) multiplié par q vaut de 4 à 1000;

chaque radical $R^1$-$R^{18}$ est choisi dans le groupe constitué par

(i) l'hydrogène, et
(ii) un radical contenant un noyau aromatique ou alicyclique, chaque cycle étant interrompu ou non interrompu par un hétéroatome à condition qu'aucun atome de carbone dans ladite unité ne soit relié de façon géminée par une liaison simple à des atomes d'oxygène;

ou deux groupes $R^1$-$R^{18}$ adjacents quelconques, avec les atomes auxquels ils sont attachés, peuvent former un noyau à 5 à 8 chaînons;
ou bien $R^1$-$R^{18}$ sont en outre indépendamment choisis parmi, ou les groupes $R^1$-$R^{18}$ mentionnés ci-dessus ont un substituant choisi parmi, des parties réticulables, à condition qu'il n'en résulte aucun atome de carbone portant des atomes d'oxygène reliés par une liaison simple de façon géminée;
l'atome d'oxygène terminal dans une unité de formule I quelconque étant remplaçable par -N($R^{19}$)-, où $R^{19}$ est un hydrogène, un alkyle en $C_1$ à $C_4$ ou un phényle; sous réserve que lorsque b, d et f valent tous 0, au moins un des radicaux $R^1$, $R^2$, $R^5$-$R^8$, $R^{11}$-$R^{14}$, $R^{17}$ et $R^{18}$ dans au moins une partie des unités de formule I

est différent d'un hydrogène;
et b) facultativement une unité modificatrice hydrophile en une quantité suffisante pour maintenir la teneur en eau dudit polymère réticulé au-delà de 10%;
ledit polymère réticulé ayant un angle de contact récessif avec l'eau distillée inférieur à 60° lorsqu'on mesure à 20°C et une perméabilité à l'oxygène Dk supérieure à 1-1,5 fois celle du méthacrylate de polyhydroxyéthyle;
ladite unité modificatrice hydrophile étant le résidu d'un monomère réactif choisi parmi

aa) les polyéthylène glycols de formule

$$R^{21}-\overset{\overset{O}{||}}{C}-O-(CH_2CH_2O)_g-R^{20} \qquad (A)$$

ou ab) les pyrrolidones de formule

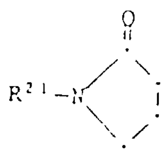

(B)

dans laquelle $R^{20}$ est un hydrogène ou un alkyle en $C_1$ à $C_7$, g est un nombre entier allant de 1 à 25, et $R^{21}$ est un groupe éthyléniquement insaturé;
ou ac) un composé de formule

$$(R^{22}\text{-div})_{nz}Hy \qquad (C)$$

dans laquelle $R^{22}$ est une partie polymérisable ou réactive choisi parmi i) $R^{21}$, ii) les groupes époxy, iii) les anhydrides, iv) les isocyanates ou les isothiocyanates, v) les amines, vi) les acides, vii) les esters, viii) les amides, ix) les éthers, x) les halogénures d'acide, et xi) hydroxy;
div est choisi parmi
ba) un groupe aliphatique bivalent ayant jusqu'à 25 atomes de carbone, qui est ininterrompu, non interrompu, interrompu ou terminé, ou interrompu et terminé par un oxy, carbonyloxy, amino, aminocarbonyle, oxycarbonyle, uréido, oxycarbonylamino ou carbonylamino;
bb) un groupe cycloaliphatique à 5 à 7 chaînons ou un groupe cycloaliphatique à 5 à 7 chaînons-aliphatique en $C_1$ à $C_{20}$ bivalent, qui est ininterrompu, interrompu, terminé ou interrompu et terminé comme dans le groupe ba) ci-dessus sauf que lesdites interruptions ne peuvent intervenir dans lesdites parties cycloaliphatiques. bc) un groupe arylène bivalent ayant de 6 à 25 atomes de carbone qui est non substitué ou substitué par au moins un substituant choisi parmi halogène, alkyle en $C_1$ à $C_4$, perhaloalkyle en $C_1$ à $C_{12}$;
bd) un groupe aralkyle ou alkaryle bivalent ayant de 7 à 25 atomes de carbone qui est interrompu ou interrompu dans la partie alkyle, ou terminé, ou interrompu dans la partie alkyle et terminé par un groupe interrupteur ou de terminaison tel que mentionné en ba) ci-dessus, et chacun desdits groupes aralkyle et alkaryle ininterrompus, interrompus ou terminés est en outre non substitué ou substitué par un substituant choisi parmi halogène, alkyle en $C_1$ à $C_4$, perhaloalkyle en $C_1$ à $C_{12}$;
be)

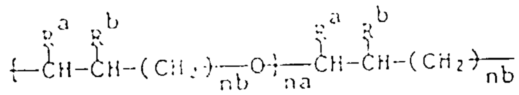

(D)

où na est un nombre entier compris entre 8 et 100; et

bea) $R^a$ est un hydrogène, $R^b$ est un méthyle et nb est zéro; ou

beb) $R^a$ est un méthyle, $R^b$ est un hydrogène, et nb vaut zéro; ou

bec) $R^a$ et $R^b$ représentent un hydrogène et nb vaut un; nz est un nombre entier compris entre 1 et la valence d'Hy et où nz est inférieur à la valence d'Hy, les valences restantes d'Hy étant absorbées par des hydrogènes;

et Hy est un groupe hydrophile choisi parmi

ca) un morpholino; des radicaux amide cycliques à 5 à 7 chaînons ; des radicaux N,N-diamide cycliques saturés et insaturés à 5 à 6 chaînons dans le cycle; des groupes de formule

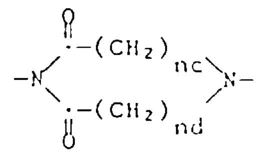

(E)

ayant de 6 à 7 chaînons dans lesquels nc et nd sont choisis entre 0 et 2; et des amines cycliques de 5 à 6 chaînons;

chacun étant non substitué ou substitué par un hydroxyalkyle en $C_1$ à $C_5$, un carboxy ou un alkyle inférieur;

cb) un tétrahydrofurfuryle;

cc) des radicaux mono-, di- et polysaccharidiques, qu'ils soient à chaîne droite ou cyclique, leurs radicaux alcools saccharidiques correspondants, les radicaux pentaérythritol et les radicaux alcool polyvinyliques; et

cd) les radicaux polyhydroxy-alkyle en $C_2$ à $C_7$;

et ledit groupe réactif $R^{22}$ est coréactif avec un ou plusieurs sites modificateurs non-hydrophiles dans ledit polymère, caractérisé en ce qu'on polymérise et en ce qu'on réticule ledit polymère de façon classique.

2. Procédé de la revendication 1, dans lequel chacun des radicaux $R^1$, $R^2$, $R^5$-$R^8$, $R^{11}$-$R^{14}$, $R^{17}$ et $R^{18}$ dans l'unité de formule I est choisi indépendamment dans le groupe constitué par un hydrogène, un alkyle en $C_1$ à $C_{16}$ non-substitué; un alkyle en $C_1$ à $C_{16}$ substitué; un alcényle en $C_2$ à $C_{16}$ non substitué; et un alcényle en $C_2$ à $C_{16}$ substitué; où les substituants alkyle et alcényle sont indépendamment choisis parmi alcoxy en $C_1$ à $C_{16}$-carbonyle, alcényloxy en $C_2$ à $C_{16}$-carbonyle, fluoro, aryle ayant jusqu'à 10 atomes de carbone, alcoxy en $C_1$ à $C_8$, alcanoyloxy en $C_2$ à $C_6$, aryloxy ayant jusqu'à 10 atomes de carbone, alcénoyloxy en $C_3$ à $C_6$, aroyloxy ayant jusqu'à 11 atomes de carbone, cycloalkyle en $C_3$ à $C_8$, cycloalcoxy en $C_3$ à $C_8$, cycloalkyle en $C_3$ à $C_8$-carbonyloxy, cycloalcoxy en $C_3$ à $C_8$-carbonyle, oxycycloalkyle ayant jusqu'à 7 atomes de carbone, oxacycloalcoxy ayant jusqu'à 7 atomes de carbone, oxacycloalcoxy (jusqu'à 7 atomes de carbone)-carbonyle, oxacycloalkyl (jusqu'à 7 atomes de carbone)-carbonyloxy et aryl (jusqu'à 10 atomes de carbone)-oxycarbonyle, chacun desdits substituants alkyle et alcényle étant, à son tour, facultativement substitué par un alkyle en $C_1$ à $C_6$, un fluoro ou un alcoxy en $C_1$ à $C_6$, à condition que ledit alcoxy mentionné en dernier ne soit pas lié à un atome de carbone déjà lié à un autre atome d'oxygène; $R^1$, $R^2$, $R^5$-$R^8$, $R^{11}$-$R^{14}$, $R^{17}$ et $R^{18}$ étant encore indépendamment choisi parmi un aryle ayant jusqu'à 10 atomes de carbone, un cycloalkyle en $C_3$ à $C_8$, et un oxacycloalkyle ayant jusqu'à 7 atomes de carbone, dont chacun peut être non-substitué ou encore substitué par un substituant choisi dans le groupe des substituants dudit alkyle exposé ci-dessus;

$R^3$, $R^4$, $R^9$, $R^{10}$, $R^{15}$ et $R^{16}$ sont choisis dans le même groupe que celui qui est présenté ci-dessus pour $R^1$; et $R^3$, $R^4$, $R^9$, $R^{10}$, $R^{15}$ et $R^{16}$ sont indépendamment choisis parmi (alcoxy en $C_1$ à $C_{15}$)-carbonyle, alcanoyloxy en $C_2$ à $C_{16}$ (alcényloxy en $C_2$ à $C_{16}$)-carbonyle et alcénoyloxy en $C_3$ à $C_{16}$, dont chacun peut être encore substitué par un fluoro, un aryle ayant jusqu'à 10 atomes de carbone, ou un alcoxy en $C_1$ à $C_{16}$, et $R^3$, $R^4$, $R^9$, $R^{10}$, $R^{15}$ et $R^{16}$ sont encore indépendamment choisis parmi aryloxy ayant jusqu'à 10 atomes de carbone, cycloalcoxy ayant jusqu'à

8 atomes de carbone, cycloalkyl (ayant jusqu'à 8 atomes de carbone)-carbonyloxy, cycloalcoxy (ayant jusqu'à 8 atomes de carbone)-carbonyloxy, aroyloxy ayant jusqu'à 11 atomes de carbone, oxacycloalcoxy ayant jusqu'à 7 atomes de carbone, oxacycloalcényloxy ayant jusqu'à 7 atomes de carbone, oxacycloalcoxy (jusqu'à 7 atomes de carbone)-carbonyloxy, oxacycloalkyl (jusqu'à 7 atomes de carbone)-carbonyloxy, oxacycloalcényloxy (ayant jusqu'à 16 atomes de carbone)-carbonyloxy, et aryloxy (ayant jusqu'à 10 atomes de carbone)-carbonyloxy, chacun d'entre eux pouvant encore être substitué par un fluoro, un alkyle en $C_1$ à $C_6$ ou un alcoxy en $C_1$ à $C_6$, à condition que tout substituant ayant un atome d'oxygène ou un groupe carbonyle comme liaison au reste de la molécule peut ne pas être un substituant sur le même atome de carbone que celui qui est lié à un autre atome d'oxygène, ou que deux groupes adjacents choisis parmi $R^1$ à $R^{18}$, avec les atomes de carbone auxquels ils sont attachés, peuvent former un cycloalkyle à 5 à 8 chaînons, un noyau oxacycloalkyle ou bicycloalkyle à 5 à 8 chaînons à condition que le noyau oxygène dans ledit oxacycloalkyle ainsi formé ne soit pas lié à un atome de carbone qui est lié de façon simple à un second atome d'oxygène ; et que lesdits $R^1$-$R^{18}$ sont choisis parmi ou portent un substituant choisi parmi les parties réticulables, à condition qu'aucun atome de carbone portant des atomes d'oxygène liés de façon géminée par une liaison simple n'en résulte.

**3.** Procédé de la revendication 1, dans lequel le polymère réticulé est réticulé jusqu'à 10%, de préférence jusqu'à 5%.

**4.** Procédé de la revendication 3, dans lequel le polymère réticulé est réticulé de 1 à 4%, de préférence de 2 à 3%.

**5.** Procédé de la revendication 1, dans lequel ledit angle de contact récessif est inférieur à 50°, de préférence inférieur à 40°.

**6.** Procédé de la revendication 5, dans lequel ledit angle de contact récessif est inférieur à 25°, de préférence inférieur à 15°.

**7.** Procédé de la revendication 6, dans lequel ledit angle de contact récessif est inférieur à 10°.

**8.** Procédé de la revendication 1, dans lequel ladite unité de formule I est à au moins 20% dépourvue d'halogène, de préférence à au moins 25% dépourvue d'halogène.

**9.** Procédé de la revendication 8, dans lequel ladite unité de formule I est à au moins 30% dépourvue d'halogène, de préférence à au moins 40% dépourvue d'halogène.

**10.** Procédé de la revendication 9, dans lequel ladite unité de formule I est sensiblement dépourvue d'halogène.

**11.** Procédé de la revendication 1, dans lequel ladite valeur de Dk est égale à au moins 2,5 fois que celle du méthacrylate de poly(2-hydroxyéthyle), de préférence supérieure à 3 fois celle du méthacrylate de polyhydroxyéthyle.

**12.** Procédé de la revendication 11, dans lequel ladite valeur de Dk est supérieure à 40 [(cm.mm/s) (ml $O_2$/ml.mmHg)].

**13.** Procédé de la revendication 1, dans lequel chacun des b, d et f vaut 0 ou 1.

**14.** Procédé de la revendication 13, dans lequel $R^1$-$R^{18}$ représente indépendamment un hydrogène, un méthyle ou une partie réticulable.

**15.** Procédé de la revendication 1 comprenant la polymérisation d'un monomère de formule V

$$L'\text{-}D\text{-}[A\text{-}L\text{-}D]_W\text{-}A\text{-}L'' \quad (V)$$

dans laquelle chaque A représente indépendamment une partie bivalente de formule I, à condition que tous les groupes A d'un polymère donné ne puissent pas être des homopolymères de polyéthylène glycol, de préférence, la totalité des groupes A ne peut représenter des homopolymères de polyéthylène glycol ou de polypropylène glycol, et à condition que l'atome d'oxygène terminal dans un quelconque ou plusieurs groupes A puisse être remplacé par
-N($R^{19}$)-, chaque L est indépendamment choisi parmi -BRB'-; w vaut de O à 8; chaque D représente indépendamment un oxygène ou -N($R^{19}$)-; chaque $R^{19}$ est indépendamment choisi parmi un hydrogène, un alkyle en $C_1$ à $C_4$

et un phényle; chaque B et B' étant choisi parmi

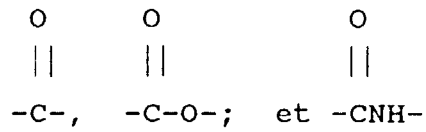

le groupe carbonyle mentionné étant lié directement à A ou D;
chaque R est un groupe de liaison bivalent de préférence choisi parmi:

a) un groupe aliphatique bivalent ayant jusqu'à 25 atomes de carbone, qui peut être interrompu par une unité d'interruption choisie parmi oxy, carbonyloxy, amino, aminocarbonyle, oxycarbonyle, uréido, oxycarbonylamino et carbonylamino;
b) un groupe cycloaliphatique à 5 à 7 chaînons bivalent et un groupe cycloaliphatique à 5 à 7 chaînons -aliphatique en $C_5$ à $C_{25}$;
c) un groupe arylène bivalent ayant de 6 à 25 atomes de carbone ; et
d) un groupe aralkyle ou alkaryle bivalent ayant de 7 à 25 atomes de carbone;

où les groupes b) et d) peuvent être facultativement interrompus par les mêmes groupes que dans le groupe a), et où les noyaux aryle dans les groupes c) et d) peuvent être en outre substitués par un ou plusieurs substituants choisis parmi halogène, alkyle en $C_1$ à $C_4$ et perhaloalkyle en $C_1$ à $C_{12}$;
L' est choisi parmi hydrogène, P'-B-R-B'- et P'-R-B'-, où B, R et B' sont tels que définis ci-dessus, le groupe carbonyle de B étant lié à P', et P' est un hydrogène, un amino, un hydroxy ou une fraction contenant un groupe réticulable qui peut être réticulée lorsqu'on le fait co-réagir avec un agent réticulant approprié ou lorsqu'on l'irradie avec un rayonnement actinique; et
L" est choisi parmi l'hydrogène, L"' tel que défini ci-dessous, représente -B-R-B'-P' et -B-R-P', où B, R, B' et P' sont tels que définis ci-dessus sauf que le groupe carbonyle de B' au lieu de B est lié à P'; et L"' est un groupe aliphatique, aromatique ou cycloaliphatique monovalent terminal ayant jusqu'à 14 atomes de carbone.

**16.** Procédé de la revendication 1, dans lequel au moins une partie du modificateur hydrophile fournit au moins une partie de ladite réticulation.

**17.** Procédé de la revendication 1, dans lequel ledit modificateur hydrophile est lié à un ou plusieurs des radicaux $R^1$-$R^{18}$.

**18.** Procédé de la revendication 15, dans lequel P' contient un groupe éthyléniquement insaturé.

**19.** Procédé de la revendication 18, dans lequel ledit $R^{22}$ est un radical éthyléniquement insaturé.

**20.** Procédé de la revendication 1, dans lequel ladite unité modificatrice hydrophile est un résidu de monomère réactif de formule C dans laquelle $R^{22}$ est un groupe éthyléniquement insaturé choisi parmi

ia)

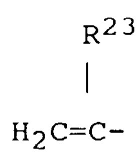

et l'extrémité de div à laquelle il est lié est $-C(O)R^{24}$, le carbonyle étant lié à $R^{22}$, où $R^{23}$ est un hydrogène ou un méthyle et $R^{24}$ représente -O-, ou $-NR^{25}$, $R^{25}$ étant un hydrogène ou un alkyle inférieur;
ib) $H_2C=CH$- et l'extrémité de div à laquelle il est lié est

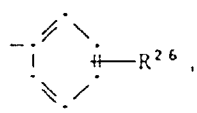

la liaison à gauche étant liée à $R^{22}$, où $R^{26}$ représente -O-, -$NR^{25}$-, -C(O)-,

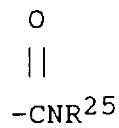

ou -C(O)O-; et
ic)

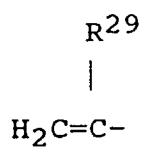

et l'extrémité de div à laquelle il est lié représente -C(O)$R^{28}$-, dont le carbonyle est lié à $R^{22}$ où $R^{28}$ est un alkylène inférieur ou un -[$CH_2$CH(alkyle inférieur)-O]$_{1-5}$- et $R^{29}$ est un hydrogène, un alkyle inférieur ou un cyano;
et comporte Hy choisi parmi
ce) un morpholino qui est non substitué ou de mono- à tétra-substitué par un alkyle inférieur;
cf)

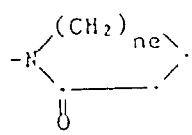

où ne vaut un, deux ou trois, chacun étant non substitué ou substitué par un alkyle inférieur;
cg)

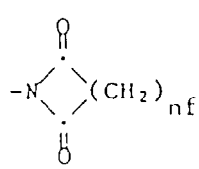

où nf vaut 2 ou 3, de préférence 2, chacun étant non substitué ou substitué par un alkyle inférieur;
ch) un groupe bivalent de formule

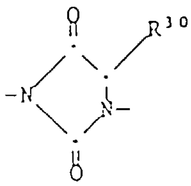 , 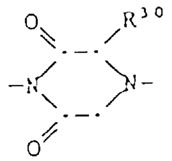 , 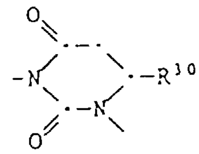

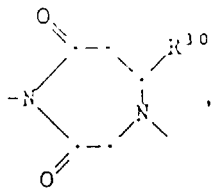 , ou 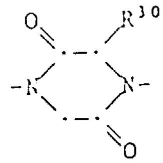

où $R^{30}$ est un hydrogène ou un carboxy;

ci)

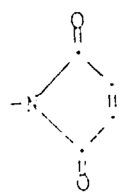

cj)

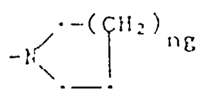

où ng vaut un ou deux, chacun étant non substitué ou substitué par un alkyle inférieur;

ck)

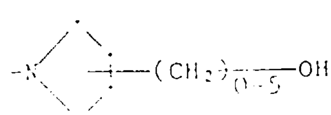 ;

cl) un polyol choisi parmi les radicaux alcool polyvinyliques de la formule

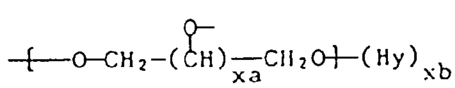

dans laquelle xa vaut 2 à 20, de préférence 3 à 4, et xb est un nombre entier compris entre au moins 0,5xa et xa + 1 compris, leurs analogues saccharides et cycliques, leurs di-tétrasaccharides, ayant des liaisons

saccharide-saccharide entre leurs positions de carbone 1 et 4, $C(CH_2O)_4Hy_{xc}$ où xc vaut 0-3, et les radicaux polyhydroxy-alkylène glycol inférieur dans lesquels jusqu'à 50% des groupes hydroxy sont dépourvus de leurs hydrogènes alcooliques.

**21.** Procédé de la revendication 20, dans lequel le monomère de formule C est

aca)

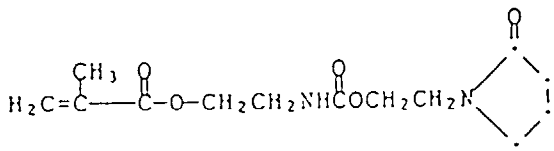

acb)

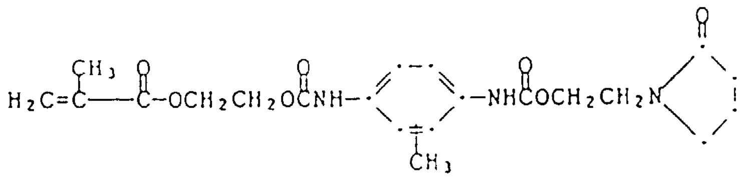

acc)

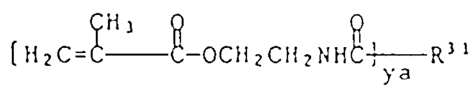

dans laquelle $R^{31}$ représente

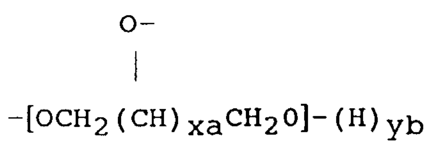

dans laquelle xa vaut 3-4 et yb vaut de O à (xa+1), et ya vaut de 1 à (xa+2-yb),
acd)

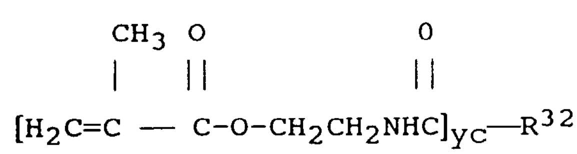

dans laquelle $R^{32}$ représente $C(CH_2O)_4(H)_{4-yc}$ dans laquelle yc vaut de 1 à 4;
ace) un alcool polyvinylique ayant au moins un et jusqu'à 50% de ses hydrogènes alcooliques absents; ou
acf)

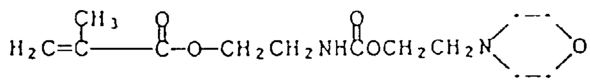

**22.** Procédé de la revendication 15, dans lequel chacun des groupes A est de formule III

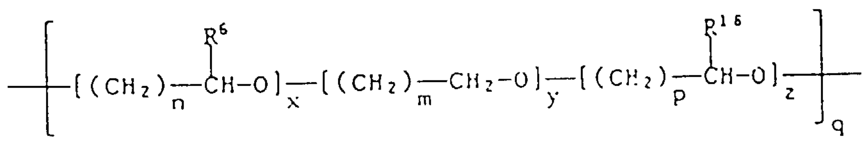

(III)

dans laquelle n vaut b+1; m vaut d+1, p vaut f+1; n, m et p valant chacun indépendamment de préférence de 1 à 3, de préférence 1 ou 2, ou mieux encore 1; et au moins un des radicaux $R^6$ et $R^{18}$, mais de préférence les deux, est un radical aliphatique, aromatique, ou hétérocyclique, de préférence un alkyle ayant jusqu'à 6 atomes de carbone, un alkyle ayant jusqu'à 6 atomes de carbone substitué par un alcoxy ayant jusqu'à 6 atomes de carbone ou un fluoro; un phényle qui est non substitué ou substitué par un fluoro, un alcoxy ayant jusqu'à 6 atomes de carbone ou un alkyle ayant jusqu'à 6 atomes de carbone; un benzyle dont le noyau phényle est non substitué ou substitué par un fluoro, un alcoxy ayant jusqu'à 6 atomes de carbone, un alkyle ayant jusqu'à 6 atomes de carbone, un cyclohexyle ou un oxacycloalkyle de 4 ou 5 atomes de carbone dans le cycle.

**23.** Procédé de la revendication 15, dans lequel chacun des groupes A est de formule IV

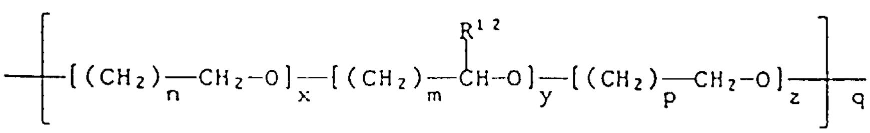

(IV)

dans laquelle n, m, p, x, y, z et q sont tels que définis dans la revendication 22 pour la formule III et $R^{12}$ est de préférence choisi dans le même groupe que $R^6$ dans la revendication 22.

**24.** Procédé de la revendication 1 comprenant la polymérisation d'un monomère de formule VII

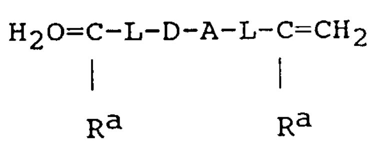

(VII)

dans laquelle $R^a$, D et A sont tels que définis ci-dessus, chaque $R^a$ étant indépendant l'un de l'autre; et L représente -B-R-B'-, -B-R- ou -R-B'-.

**25.** Procédé de la revendication 24, dans lequel L vaut - BRB', R est un groupe arylène bivalent de 6 à 14 atomes de carbone, ou est un groupe alkylène en $C_2$ à $C_6$-oxycarbonylamino-arylène en $C_6$ à $C_{10}$ bivalent; D est un oxygène, et B et B' représentent chacun -NHCO- dont les atomes d'azote sont directement liés à R.

**26.** Procédé de la revendication 24 dans lequel L représente -BR- ou -RB'-, respectivement, R est un arylène bivalent de 6 à 14 atomes de carbone, D est un oxygène et B et B' représentent chacun -NHCO-, dont les atomes d'azote sont directement liés à R.

**27.** Dispositif ophtalmique comprenant un polymère réticulé de la revendication 1.

**28.** Dispositif de la revendication 27 qui est une lentille de contact.